(19) Europäisches Patentamt
European Patent Office
Office européen des brevets

(11) **EP 4 746 552 A1**

(12) **EUROPEAN PATENT APPLICATION**
published in accordance with Art. 153(4) EPC

(43) Date of publication:
**20.05.2026 Bulletin 2026/21**

(21) Application number: **24850850.9**

(22) Date of filing: **29.07.2024**

(51) International Patent Classification (IPC):
**H04W 72/0446** (2023.01)

(52) Cooperative Patent Classification (CPC):
**H04B 1/713; H04L 5/00; H04W 72/0446;**
**H04W 72/0453; H04W 72/0457; H04W 72/30**

(86) International application number:
**PCT/CN2024/108299**

(87) International publication number:
**WO 2025/031202 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.08.2023 CN 202310984678**

(71) Applicant: **Huawei Technologies Co., Ltd.
Shenzhen, Guangdong 518129 (CN)**

(72) Inventors:
• **LIU, Mengting
Shenzhen, Guangdong 518129 (CN)**
• **HUANG, Su
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **RESOURCE DETERMINATION METHOD AND COMMUNICATION APPARATUS**

(57) Embodiments of this application provide a resource determining method and a communication apparatus. The method includes: determining a first frequency and/or a second frequency; and determining a correspondence between M frequency domain resources for frequency hopping and N time units based on the first frequency and/or the second frequency. The N time units are for sending or receiving reference signals, the first frequency is a lowest frequency domain position of frequency domain resources occupied for sending or receiving the reference signals, and the second frequency is a highest frequency domain position of the frequency domain resources occupied for sending or receiving the reference signals, where M is an integer greater than 1, and N is an integer greater than 1. In this way, the correspondence between the M frequency domain resources for frequency hopping and the N time units can be determined by using the first frequency and/or the second frequency, to uniquely determine frequency hopping resources for sending or receiving the reference signals, and therefore avoid interference.

S1301: A first apparatus determines a first frequency and/or a second frequency

S1302: The first apparatus determines a correspondence between M frequency domain resources for frequency hopping and N time units based on the first frequency and/or the second frequency, where the N time units are for sending or receiving reference signals, the first frequency is a lowest frequency domain position of frequency domain resources occupied by the first apparatus to send or receive the reference signals, and the second frequency is a highest frequency domain position of the frequency domain resources occupied by the first apparatus to send or receive the reference signals

FIG. 13

EP 4 746 552 A1

**Description**

This application claims priority to Chinese Patent Application No. 202310984678.7, filed with the China National Intellectual Property Administration on August 4, 2023 and entitled "RESOURCE DETERMINING METHOD AND COMMUNICATION APPARATUS", which is incorporated herein by reference in its entirety.

**TECHNICAL FIELD**

This application relates to the communication field, and in particular, to a resource determining method and a communication apparatus.

**BACKGROUND**

To improve positioning accuracy in a bandwidth-limited positioning scenario, reference signals (reference signals, RSs) may be communicated in a frequency hopping (frequency hopping) manner. The reference signals are sent at a plurality of frequency hopping moments to increase an equivalent bandwidth of a reference signal, to improve channel estimation accuracy. For example, a terminal device may send narrow-bandwidth reference signals to a network device at a plurality of moments, so that the network device can receive the plurality of narrow-bandwidth reference signals. The network device processes (for example, jointly processes) the plurality of narrow-bandwidth reference signals, to obtain a reference signal with an equivalent wide-bandwidth, and therefore improve the channel estimation accuracy.

Currently, frequency hopping configuration information for a sounding reference signal (sounding reference signal, SRS) is defined in the technical specification (technical specification, TS) 38.211 of the 3rd generation partnership project (3rd generation partnership project, 3GPP). A terminal device may send SRSs based on the frequency hopping configuration information, and the network device may perform channel estimation based on the SRSs, where an obtained channel estimation result may be used for communication or positioning. However, in some positioning scenarios, the frequency hopping configuration information cannot meet a requirement for high-accuracy positioning.

**SUMMARY**

Embodiments of this application provide a resource determining method and a communication apparatus, to avoid interference and meet a requirement for high-accuracy positioning in a positioning scenario.

To achieve the foregoing objectives, the following technical solutions are used in embodiments of this application.

According to a first aspect, a resource determining method is provided. The method may be performed by a first apparatus, may be performed by a component of the first apparatus, for example, a processor, a chip, or a chip system of the first apparatus, or may be implemented by a logical module or software that can implement all or a part of functions of the first apparatus. An example in which the method is performed by the first apparatus is used below for description. The method includes: determining a first frequency and/or a second frequency; and determining a correspondence between M frequency domain resources for frequency hopping and N time units based on the first frequency and/or the second frequency. The N time units are for sending or receiving reference signals, the first frequency is a lowest frequency domain position of frequency domain resources occupied for sending or receiving the reference signals, and the second frequency is a highest frequency domain position of the frequency domain resources occupied for sending or receiving the reference signals, where M is an integer greater than 1, and N is an integer greater than 1.

In this embodiment of this application, the first apparatus may determine the first frequency and/or the second frequency, and determine the correspondence between the M frequency domain resources for frequency hopping and the N time units. In this way, frequency hopping resources for sending or receiving the reference signals can be uniquely determined, to avoid sending or receiving a reference signal on a same frequency hopping resource as another apparatus, and therefore avoid interference. This helps improve positioning accuracy.

In a possible implementation, the first apparatus may be a terminal device, or may be a module or unit of the terminal device. For example, the first apparatus may be a chip, a chip system, a chip circuit, or a circuit of the terminal device. The terminal device may be a reduced capability terminal device, for example, a reduced capability (reduced capability, REDCAP) terminal device, or a common terminal device. In other words, that the first apparatus sends the reference signals is applicable to an uplink frequency hopping-based positioning scenario. To be specific, the first apparatus may determine the correspondence between the M frequency domain resources and the N time units that are for sending the reference signals, and determine, based on the correspondence, a frequency hopping pattern for sending the reference signals to a network device. In this way, the frequency hopping resources for sending the reference signals can be uniquely determined, to avoid sending a reference signal to the network device on a same frequency hopping resource as another apparatus, and therefore avoid the interference. It may be understood that, that the first apparatus receives the reference signals is applicable to a scenario in which the network device sends narrowband reference signals (for example, positioning reference signals PRSs with bandwidths of 20 MHz) to the terminal device in a plurality of time units, and the first apparatus receives the narrowband reference signals from the network device in the plurality of time units. To be specific, the first apparatus may determine the correspondence between the M frequency domain resources and the N time units that are for sending the reference signals, and determine, based on the correspondence, a frequency hopping pattern for receiving the reference signals from the network device. In this way, the frequency hopping resources for receiving the reference signals from the network device can be uniquely determined, to avoid receiving a reference signal from the network device on an incorrect frequency hopping resource.

In a possible implementation, the first apparatus may be a network device, or may be a module or unit of the network device. For example, the first apparatus may be a chip, a chip system, a chip circuit, or a circuit of the network device. In other words, the first apparatus may determine the correspondence between the M frequency domain resources and the N time units that are for sending the reference signals, and determine, based on the correspondence, a frequency hopping pattern for sending the reference signals. In this way, the frequency hopping resources for sending the reference signals by the first apparatus to a terminal device can be uniquely determined, so that the terminal device can receive the reference signals. Further, sending the reference signals by the first apparatus in a frequency hopping manner can reduce power consumption, to meet an energy saving requirement of the first apparatus. Therefore, in this embodiment of this application, positioning accuracy can be further improved when the energy saving requirement of the network device is met. Certainly, a common terminal device may alternatively periodically send wide-bandwidth reference signals, and the network device may receive reference signals in an overlapped frequency hopping or non-overlapped frequency hopping manner, to reduce power consumption and receiving complexity of the network device.

In a possible implementation, M may be equal to N. To be specific, the first apparatus may send one reference signal in one time unit. Frequency domain resources corresponding to different time units are different, or the time units are in one-to-one correspondence with the frequency domain resources.

In a possible implementation, M may be greater than N. To be specific, the first apparatus may send a plurality of reference signals in one time unit by using a plurality of different frequency domain resources. Time units corresponding to different frequency domain resources may be the same, or a plurality of frequency domain resources may correspond to a same time unit.

In a possible implementation, M may be less than N. To be specific, the first apparatus may send, in a plurality of time units, reference signals that occupy a same frequency domain resource. Frequency domain resources corresponding to different time units may be the same, or a plurality of time units may correspond to a same frequency domain resource.

In a possible implementation, the N time units may be time units for sending N reference signals in one reference signal frequency hopping pattern periodicity. N in the N time units may be a quantity of frequency hopping times or a quantity of frequency hops in one frequency hopping pattern. That the N time units are the time units for sending the N reference signals includes: Each time unit in the N time units is for sending one reference signal. In other words, in one frequency hopping pattern periodicity, one reference signal may be sent at each frequency hopping moment.

It may be understood that the reference signals sent or received in the N time units are for a same device or apparatus.

In a possible implementation, the determining the correspondence between the M frequency domain resources for frequency hopping and the N time units based on the first frequency and/or the second frequency includes: determining N frequency domain resources or N frequency domain resource sets for frequency hopping that correspond to the N time units, where the N time units are for sending or receiving the reference signals, the first frequency is the lowest frequency domain position of the frequency domain resources occupied by the first apparatus to send or receive the reference signals, and the second frequency is the highest frequency domain position of the frequency domain resources occupied by the first apparatus to send or receive the reference signals, where N is an integer greater than 1. It may be understood that the N frequency domain resource sets may include a plurality of frequency domain resources, and a quantity of the plurality of frequency domain resources may be equal to a quantity of reference signals simultaneously sent or received by the first apparatus in a same time unit. In other words, the first apparatus may determine the first frequency and/or the second frequency based on the frequency domain resources occupied by the first apparatus to send or receive the reference signals, and determine that the frequency hopping resources may be the N time units and the N frequency domain resources that are in one-to-one correspondence, that is, one time unit may be for sending or receiving one reference signal. Alternatively, the first apparatus determines that the frequency hopping resources may be the N time units and the N frequency domain resource sets that are in one-to-one correspondence. In this way, one time unit may correspond to a plurality of different frequency domain resources, and the first apparatus may simultaneously send or receive a plurality of different reference signals.

In another possible implementation, the determining the correspondence between the M frequency domain resources for frequency hopping and the N time units based on the first frequency and/or the second frequency includes: determining, based on the first frequency and/or the second frequency, N frequency domain resources or N frequency domain resource sets that correspond to the N time units, where the N time units are for sending or receiving the reference signals, the first frequency is lower than a lowest frequency of the N frequency domain resources, and the second frequency is higher than a highest frequency of the N frequency domain resources, where N is an integer greater than 1. In other words, the first apparatus may determine, based on the first frequency and/or the second frequency, the N frequency domain resources in a frequency range corresponding to the first frequency and/or the second frequency, and determine a correspondence between the N time units and the N frequency domain resources or the N frequency domain resource sets.

In a possible implementation, the reference signal is for positioning. For example, the reference signal may include one or more of the following: an uplink reference signal (uplink reference signal, UL-RS), a downlink reference signal (downlink reference signal, DL-RS), and a sidelink reference signal (sidelink reference signal, SL-RS). The uplink reference signal may specifically include one or more of the following: a sounding reference signal (sounding reference signal, SRS) used in Release 15 (release 15, R15) and an earlier release, a positioning-specific positioning sounding reference signal (positioning SRS, pos-SRS) proposed in R16, or another uplink reference signal for positioning in the future. This is not specifically limited. The downlink reference signal may specifically include a positioning-specific positioning reference signal (positioning reference signal, PRS) proposed in R16, another downlink reference signal for positioning in the future, or the like. This is not specifically limited. The sidelink reference signal may be a reference signal communicated between two terminal devices through a sidelink (sidelink, SL), and the sidelink reference signal may include a sidelink positioning reference signal (SL-positioning reference signal, SL-PRS).

In a possible implementation, the first frequency is a sum of a reference frequency and a first frequency domain offset. The reference frequency is one of the following: a start frequency of a BWP, a highest frequency of the BWP, a center frequency of the BWP, or a reference frequency corresponding to the BWP.

In another possible implementation, the second frequency is a sum of a reference frequency and a second frequency domain offset. The reference frequency is one of the following: a start frequency of a BWP, a highest frequency of the BWP, a center frequency of the BWP, or a reference frequency corresponding to the BWP.

In still another possible implementation, the first frequency is a sum of a reference frequency and a first frequency domain offset, and the second frequency is a sum of a reference frequency and a second frequency domain offset. The reference frequency corresponding to the first frequency may be different from or the same as the reference frequency corresponding to the second frequency. It may be understood that the BWP may be an initial BWP, an active BWP, or a BWP other than the active BWP in a plurality of BWPs configured by a network. Alternatively, the BWP may be a virtual BWP. The virtual BWP may have a same SCS as an active BWP, but has a wider bandwidth. The bandwidth (or a frequency range) of the virtual BWP may not be the active BWP configured by a network. The virtual BWP may have an extended virtual boundary for frequency hopping. For example, an available bandwidth of the virtual BWP may be greater than a bandwidth of the active BWP for the first apparatus. In other words, if the first frequency and/or the second frequency are/is a start frequency, a highest frequency, a reference frequency, or the like of the virtual BWP, the M frequency domain resources may be within the virtual BWP. In this way, the REDCAP terminal device may also use a frequency domain resource that is aligned with a BWP for the common terminal device. For example, for a BWP configured by the network, the first frequency or the second frequency may be in an inactive BWP other than the active BWP. In this way, resources in BWPs for the REDCAP terminal device and the common terminal device can be better matched (for example, RBs are aligned). In other words, the first frequency and/or the second frequency may be determined by using the related reference frequency of the BWP, so that the M frequency domain resources determined by using the first frequency and/or the second frequency can be flexibly designed. For example, the M frequency domain resources may be within the active BWP, or may cross different BWPs.

In a possible implementation, the first frequency domain offset may be 0. In other words, the first frequency may be the start frequency of the BWP, the first frequency may be the center frequency of the BWP, or the first frequency may be the reference frequency corresponding to the BWP. Certainly, the first frequency domain offset may be greater than 0. In this way, the first frequency may be greater than the start frequency of the BWP. Alternatively, the first frequency domain offset may be less than 0. In this way, the first frequency may be less than the start frequency of the BWP. The first frequency domain offset may be represented by a quantity of RBs, a quantity of REs, a quantity of subcarriers, a bandwidth, or the like.

In a possible implementation, the second frequency domain offset may be 0. In other words, the second frequency may be the highest frequency of the BWP, or the second frequency may be the center frequency of the BWP. Certainly, the second frequency domain offset may be greater than 0, that is, the second frequency may be greater than the highest frequency of the BWP. Alternatively, the second frequency domain offset may be less than 0, that is, the second frequency may be less than the highest frequency of the BWP. The second frequency domain offset may be represented by a quantity of RBs, a quantity of REs, a quantity of subcarriers, a bandwidth, or the like.

In a possible implementation, a frequency domain resource corresponding to a $K^{th}$ time unit in the N time units is determined based on the first frequency, and the frequency domain resource corresponding to the $K^{th}$ time unit is a frequency domain resource whose frequency domain position is the lowest or highest in the M frequency domain resources. In other words, the frequency domain resource corresponding to the $K^{th}$ time unit, namely, the frequency domain resource whose frequency domain position is the highest or the frequency domain resource whose frequency domain position is the lowest in the M frequency domain resources, may be determined by using the first frequency. In this way, the frequency hopping resources for sending or receiving the reference signals can be uniquely determined, to avoid the interference. This helps improve the positioning accuracy.

In a possible implementation, that the frequency domain resource corresponding to the $K^{th}$ time unit is determined based on the first frequency includes: The frequency domain resource corresponding to the $K^{th}$ time unit is determined based on a third frequency, and a frequency domain resource corresponding to the third frequency is the frequency domain resource whose frequency domain position is the highest in the M frequency domain resources. The third frequency is determined based on the first frequency and a total bandwidth occupied by the M frequency domain resources. The third frequency may be a highest frequency domain position relative to the first frequency. For example, the third frequency $F_{c-h} = F_l + B$, $F_l$ is the first frequency, and B is the total bandwidth occupied by the M frequency domain resources, namely, a combined bandwidth. For another example, the third frequency

$$F_{c-h} = F_l + \sum_{i=1}^{n}\left(b_i + f_{i,i-1}\right)$$ . $b_i$ is a bandwidth of a frequency domain resource corresponding to an $i^{th}$ time unit in $n$ time units, $n$ is a quantity of frequency hopping times or a quantity of frequency hops, and $f_{i,i-1}$ indicates a corresponding frequency domain offset between the $i^{th}$ time unit and an $(i-1)^{th}$ time unit in the N time units, namely, a corresponding frequency domain offset between two adjacent time units in the N time units. $f_{1,0}=0$, $1 \leq n \leq N$, and $n$ is an integer. To be specific, when the third frequency is determined, as frequency domain positions of the frequency domain resources increase or decrease sequentially with the time units on the whole, the frequency domain resource corresponding to the $K^{th}$ time unit may be determined based on a frequency domain resource (for example, one or more of a frequency domain start position, a center frequency, or a highest frequency domain position) corresponding to any time unit in the n time units in one frequency hopping pattern periodicity.

In a possible implementation, that the frequency domain resource corresponding to the $K^{th}$ time unit is determined based on the third frequency includes: The $K^{th}$ time unit is determined based on the third frequency and a frequency domain resource corresponding to a $t^{th}$ time unit in the N time units, where $1 \leq t \leq N$. In other words, the first apparatus may determine a value of K in the $K^{th}$ time unit based on a ranking that is of any time unit in the N time units and that is in the n time units and a frequency domain resource corresponding to the time unit, that is, determine a ranking that is of a time unit corresponding to the frequency domain resource whose frequency domain position is the highest in the M frequency domain resources and that is in the n time units and/or a ranking that is of a time unit corresponding to the frequency domain resource whose frequency domain position is the lowest in the M frequency domain resources and that is in the n time units. In this way, frequency hopping resource information, for example, frequency domain resource information and time domain resource information, for sending or receiving the reference signals can be uniquely determined.

In a possible implementation, that the $K^{th}$ time unit is determined based on the third frequency and the frequency domain resource corresponding to the $t^{th}$ time unit in the N time units includes: The $K^{th}$ time unit is determined based on a frequency domain position relationship between the frequency domain resource corresponding to the $t^{th}$ time unit and the third frequency. The frequency domain position relationship is a first frequency domain position relationship or a second frequency domain position relationship. The first frequency domain position relationship is: A frequency domain position corresponding to a sum of a frequency domain start position of the frequency domain resource corresponding to the $t^{th}$ time unit and $b_t$ is greater than the third frequency. The second frequency domain position relationship is: A frequency domain position corresponding to a sum of a frequency domain start position of the frequency domain resource corresponding to the $t^{th}$ time unit and $b_t$ is equal to the third frequency; or the frequency domain position is less than the third frequency, where a difference between the frequency domain position and the third frequency is less than $b_{t+1}$ or b. $b_t$ is a bandwidth of the frequency domain resource corresponding to the $t^{th}$ time unit, $b_{t+1}$ is a bandwidth of a frequency domain resource corresponding to a $(t+1)^{th}$ time unit, and b is a bandwidth occupied by each time of frequency hopping. It should be understood that the frequency domain start position of the frequency domain resource corresponding to the $t^{th}$ time unit may be indicated by the network, or may be determined based on another time unit. In other words, the first apparatus may alternatively determine the $K^{th}$ time unit based on the frequency domain position relationship between the frequency domain resource corresponding to the $t^{th}$ time unit and the third frequency, so that different position relationships may correspond to different $K^{th}$ time units and different frequency domain resources corresponding to the $K^{th}$ time units. In this way, resource utilization or resource scheduling flexibility can be improved. It may be understood that, for the second frequency domain position relationship, a highest frequency domain position of the frequency domain resource whose frequency domain position is the highest in the M frequency domain resources is less than or equal to the third frequency. In other words, when the first apparatus performs frequency hopping to a position near the third frequency, a next hop starts from a lowest frequency (namely, the first frequency).

In a possible implementation, the first frequency domain position relationship may include a position relationship 1a or a position relationship 1b. In the position relationship 1a, an actual (actual) bandwidth of the frequency domain resource corresponding to the $t^{th}$ time unit is the same as $b_t$. In the position relationship 1b, an actual bandwidth of the frequency domain resource corresponding to the $t^{th}$ time unit is less than $b_t$, and an actual highest frequency domain position of the frequency domain resource corresponding to the $t^{th}$ time unit may be equal to the third frequency. In other words, for the position relationship 1a, a highest frequency domain position of the frequency domain resource whose frequency domain position is the highest in the M frequency domain resources may be greater than the third frequency. To be specific, when the first apparatus performs frequency hopping to a position near a highest frequency (namely, the third frequency), the first apparatus may continue to perform frequency hopping in a third frequency direction (namely, a frequency increasing direction), so that a frequency domain start position of a frequency domain resource corresponding to a next hop (namely, a next time unit) may be greater than the first frequency. For the position relationship 1b, an actual highest frequency domain position of the frequency domain resource whose frequency domain position is the highest in the M frequency domain resources is equal to the third frequency. To be specific, when the first apparatus performs frequency hopping to a position near a highest frequency, the first apparatus may continue to perform frequency hopping in a third frequency direction. However, an actual frequency hopping bandwidth is less than a configured bandwidth, where the configured bandwidth may be, for example, $b_t$ or the bandwidth $b$ occupied by each time of frequency hopping. Therefore, a frequency domain start position of a frequency domain resource corresponding to a next hop may be equal to the first frequency.

In a possible implementation, a frequency domain resource corresponding to a $K^{th}$ time unit in the N time units is determined based on the second frequency, and the frequency domain resource corresponding to the $K^{th}$ time unit is a frequency domain resource whose frequency domain position is the lowest or highest in the M frequency domain resources. In other words, the frequency domain resource corresponding to the $K^{th}$ time unit, namely, the frequency domain resource whose frequency domain position is the highest or the frequency domain resource whose frequency domain position is the lowest in the M frequency domain resources, may be determined by using the first frequency. In this way, the frequency hopping resources for sending or receiving the reference signals can be uniquely determined, to avoid the interference.

In a possible implementation, that the frequency domain resource corresponding to the $K^{th}$ time unit is determined based on the second frequency includes: The frequency domain resource corresponding to the $K^{th}$ time unit is determined based on a fourth frequency, and a frequency domain resource corresponding to the fourth frequency is the frequency domain resource whose frequency domain position is the lowest in the M frequency domain resources. The fourth frequency is determined based on the second frequency and a total bandwidth occupied by the M frequency domain resources. The fourth frequency may be a lowest frequency domain position relative to the second frequency. For example, the fourth frequency $F_{c-l} = F_h - B$, $F_{c-l}$ is the fourth frequency, $F_h$ is the second frequency, and $B$ is the total bandwidth occupied by the M frequency domain resources, namely, a combined bandwidth. For another example, the fourth frequency $F_{c-l} = F_h - \sum_{i=1}^{n}\left(b_i + f_{i,i-1}\right)$. $b_i$ is a bandwidth of a frequency domain resource corresponding to an $i^{th}$ time unit in $n$ time units, $n$ is a quantity of frequency hopping times or a quantity of frequency hops, and $f_{i,i-1}$ indicates a corresponding frequency domain offset between the $i^{th}$ time unit and an $(i-1)^{th}$ time unit in the N time units, namely, a corresponding frequency domain offset between two adjacent time units in the N time units. $f_{1,0}=0$, $1 \leq n \leq N$, and $n$ is an integer. To be specific, when the fourth frequency is determined, as frequency domain positions of the frequency domain resources increase or decrease sequentially with the time units on the whole, the frequency domain resource corresponding to the $K^{th}$ time unit may be determined based on a frequency domain resource (for example, one or more of a frequency domain start position, a center frequency, or a highest frequency domain position) corresponding to any time unit in the n time units in one frequency hopping pattern periodicity.

In a possible implementation, that the frequency domain resource corresponding to the $K^{th}$ time unit is determined based on the fourth frequency includes: The $K^{th}$ time unit is determined based on the fourth frequency and a frequency domain resource corresponding to a $t^{th}$ time unit in the N time units, where $1 \leq t \leq N$. It may be understood that the $t^{th}$ time unit may be any time unit in the N time units. When N is greater than n and t is greater than $n$, a ranking of the $t^{th}$ time unit in the n time units in one frequency hopping pattern periodicity may be determined through t modulo $n$ (for example, $t \bmod n$). In other words, the first apparatus may determine a value of K in the $K^{th}$ time unit based on a ranking that is of any time unit in the N time units and that is in the n time units and a frequency domain resource corresponding to the time unit, that is, determine a ranking that is of a time unit corresponding to the frequency domain resource whose frequency domain position is the highest in the M frequency domain resources and that is in the n time units and/or a ranking that is of a time unit corresponding to the frequency domain resource whose frequency domain position is the lowest in the M frequency domain resources and that is in the $n$ time units. In this way, frequency hopping resource information for sending or receiving the reference signals can be uniquely determined.

In a possible implementation, that the $K^{th}$ time unit is determined based on the fourth frequency and the frequency domain resource corresponding to the $t^{th}$ time unit in the N time units includes: The $K^{th}$ time unit is determined based on a frequency domain position relationship between the frequency domain resource corresponding to the $t^{th}$ time unit and the second frequency. The frequency domain position relationship is a fifth frequency domain position relationship or a sixth frequency domain position relationship. The fifth frequency domain position relationship is: A frequency domain position corresponding to a sum of a frequency domain start position of the frequency domain resource corresponding to the $t^{th}$ time unit and $b_t$ is equal to the second frequency; or the frequency domain position is less than the second frequency, where a difference between the frequency domain position and the second frequency is less than $b_{t+1}$ or $b$. The sixth frequency domain position relationship is: A frequency domain position corresponding to a sum of a frequency domain start position of the frequency domain resource corresponding to the $t^{th}$ time unit and $b_t$ is greater than the second frequency. $b_t$ is a bandwidth of the frequency domain resource corresponding to the $t^{th}$ time unit, $b_{t+1}$ is a bandwidth of a frequency domain resource corresponding to a $(t+1)^{th}$ time unit, and $b$ is a bandwidth occupied by each time of frequency hopping. It may be understood that, when the bandwidth occupied by each time of frequency hopping is the same, $b_t$ may be equal to $b$. In other words, the first apparatus may alternatively determine the $K^{th}$ time unit based on the frequency domain position relationship between the frequency domain resource corresponding to the $t^{th}$ time unit and the second frequency, so that different position relationships may correspond to different $K^{th}$ time units and different frequency domain resources corresponding to the $K^{th}$ time units. In this way, resource utilization or resource scheduling flexibility can be improved. It should be understood that, for the sixth frequency domain position relationship, an actual bandwidth of the frequency domain resource corresponding to the $t^{th}$ time unit is less than $b_t$, to be specific, the frequency domain resource corresponding to the $t^{th}$ time unit is the frequency domain resource whose frequency domain position is the highest in the M frequency domain resources, that is, a frequency domain start position of the frequency domain resource corresponding to the $(t+1)^{th}$ time unit may be less than the fourth frequency.

In a possible implementation, the fifth frequency domain position relationship may include a position relationship 5a or a position relationship 5b. In the position relationship 5a, the frequency domain resource corresponding to the $t^{th}$ time unit is the frequency domain resource whose frequency domain position is the highest in the M frequency domain resources, and a frequency domain end position (namely, a highest frequency domain position) of the frequency domain resource is less than or equal to the second frequency. A frequency domain resource corresponding to a $(t+1)^{th}$ time unit is the frequency domain resource whose frequency domain position is the lowest in the M frequency domain resources, and a frequency domain start position of the frequency domain resource is determined based on the frequency domain start position of the frequency domain resource corresponding to the $t^{th}$ time unit and the combined bandwidth B. In this way, a frequency domain end position of the frequency domain resource corresponding to the $(t+1)^{th}$ time unit may be less than the fourth frequency. A difference of the position relationship 5b from the position relationship 5a lies in: The frequency domain resource corresponding to the $t^{th}$ time unit may not be the frequency domain resource whose frequency domain position is the highest in the M frequency domain resources. The frequency domain end position of the frequency domain resource corresponding to the $(t+1)^{th}$ time unit may be equal to the fourth frequency. In other words, for the position relationship 5a, the frequency domain end position (namely, the highest frequency domain position) of the frequency domain resource whose frequency domain position is the highest in the M frequency domain resources may be less than the second frequency. To be specific, when the first apparatus performs frequency hopping to a position near a lowest frequency (namely, the second frequency), a frequency domain start position of a next hop is less than the fourth frequency. For the position relationship 5b, when the first apparatus performs frequency hopping to a position near the second frequency, a next hop starts from the fourth frequency.

In a possible implementation, the method according to the first aspect further includes: receiving frequency hopping configuration information, where the frequency hopping configuration information indicates at least one of the following: the first frequency, the second frequency, or a combined bandwidth. The combined bandwidth may be for determining the quantity of frequency hopping times or the quantity of frequency hops in one reference signal frequency hopping pattern periodicity. In other words, the network indicates the first frequency and/or the second frequency, so that the correspondence between the M frequency domain resources and the N time units can be aligned between the first apparatus and a receive end, to avoid sending or receiving a reference signal on an incorrect frequency hopping resource.

In a possible implementation, the frequency hopping configuration information further indicates at least one of the following: position information of a frequency domain resource corresponding to a $1^{st}$ time unit in the N time units, time domain position information corresponding to the $1^{st}$ time unit in the N time units, a bandwidth of a frequency domain resource corresponding to an $i^{th}$ time unit, an overlapped size between the frequency domain resource corresponding to the $i^{th}$ time unit and a frequency domain resource corresponding to a $j^{th}$ time unit, a quantity of frequency hopping times, a corresponding frequency domain offset between two adjacent time units in the N time units, or a time interval between the $i^{th}$ time unit and the $j^{th}$ time unit, where the $i^{th}$ time unit and the $j^{th}$ time unit are time units in the N time units, and $1 \leq i \neq j \leq N$. It should be understood that the time domain position information may be at least one of the following: a time domain start position, a time domain end position, or an $x^{th}$ sub-time unit in a time unit. The sub-time unit may be a time domain resource or a unit of time at a granularity less than that of the time unit. For example, the time unit is a radio frame, and the sub-time unit may be an $x^{th}$ subframe in the radio frame, where $1 \leq x \leq y$, $y$ may be equal to 1, 2, 4, 8, 16, or the like, and $y$ indicates that the time unit includes $y$ sub-time units. Certainly, $x$ may alternatively be an intermediate value of $y$ or a value near the intermediate value. Alternatively, the sub-time unit may be a unit of time at a smaller granularity, for example, a slot, an OFDM symbol, or a unit of time at another granularity. The $i^{th}$ time unit may be adjacent to the $j^{th}$ time unit. For example, $j=i+1$, or $j=i-1$ ($i$ is greater than 1). Certainly, the $i^{th}$ time unit may not be adjacent to the $j^{th}$ time unit. For example, $i=1$, and $j$ is equal to 2, 3, 4, 5, or the like. This is not specifically limited in embodiments of this application. It may be understood that the time interval between the $i^{th}$ time unit and the $j^{th}$ time unit may be a time interval between a time domain start position of the $i^{th}$ time unit and a time domain start position of the $j^{th}$ time unit, a time interval between a time domain end position of the $i^{th}$ time unit and the time domain start position of the $j^{th}$ time unit, or a time interval between the time domain start position of the $i^{th}$ time unit and a time domain end position of the $j^{th}$ time unit.

In a possible implementation, there are a plurality of time intervals between the $i^{th}$ time unit and the $j^{th}$ time unit. Any two of the plurality of time intervals may be equal or not equal. For example, in a time division duplex (time division duplex, TDD) system, because uplink time domain resources (for example, slots) are limited, the time interval may be greater than or equal to one TDD periodicity. The TDD periodicity may be, for example, five slots, 10 slots, or more slots. In this way, impact on communication performance can be reduced.

In a possible implementation, the method according to the first aspect further includes: sending expected configuration information, where the expected configuration information indicates at least one of the following: the lowest frequency domain position of the frequency domain resources occupied for sending or receiving the reference signals, the highest frequency domain position of the frequency domain resources occupied for sending or receiving the reference signals, the combined bandwidth, or a frequency domain position relationship between a reference frequency domain position and the frequency domain resource whose frequency domain position is the lowest or the frequency domain resource whose frequency domain position is the highest in the M frequency domain resources. The reference frequency domain position includes at least one of the following: the first frequency, the third frequency, the second frequency, or the fourth frequency, where the frequency domain resource corresponding to the third frequency is the frequency domain resource whose frequency domain position is the highest in the M frequency domain resources, and the frequency domain resource corresponding to the fourth frequency is the frequency domain resource whose frequency domain position is the lowest in the M frequency domain resources. It may be understood that the frequency domain resource whose frequency domain position is the lowest or the frequency domain resource whose frequency domain position is the highest in the M frequency domain resources may be a frequency domain position, for example, a frequency domain start position, a center frequency, or a highest frequency domain position, of the frequency domain resource. The relationship between the reference frequency domain position and the frequency domain resource whose frequency domain position is the lowest or the frequency domain resource whose frequency domain position is the highest in the M frequency domain resources may indicate a frequency hopping pattern that is expected by the first apparatus and that corresponds to the frequency domain position relationship. For example, the reference position is the third frequency, and a frequency domain position relationship between the third frequency and the frequency domain resource whose frequency domain position is the highest in the M frequency domain resources may be the position relationship 1a in the first frequency domain position relationship, to be specific, the highest frequency domain position of the frequency domain resource whose frequency domain position is the highest in the M frequency domain resources is greater than the third frequency. In other words, the frequency domain position relationship may indicate: When the frequency hopping is performed to the position near the highest frequency (namely, the third frequency), the frequency hopping may continue to be performed in the third frequency direction (namely, the frequency increasing direction), so that the frequency domain start position of the frequency domain resource corresponding to the next hop (namely, the next time unit) may be greater than the first frequency. In other words, the first apparatus may send the expected configuration information to a second apparatus, so that the second apparatus can determine, based on the expected configuration information, the frequency hopping pattern for sending or receiving the reference signals by the first apparatus.

In a possible implementation, the method according to the first aspect further includes: receiving first request information, where the first request information is for requesting the expected configuration information, and the expected configuration information indicates the at least one of the following: the lowest frequency domain position of the frequency domain resources occupied for sending or receiving the reference signals, the highest frequency domain position of the frequency domain resources occupied for sending or receiving the reference signals, the combined bandwidth, or the frequency domain position relationship between the reference frequency domain position and the frequency domain resource whose frequency domain position is the lowest or the frequency domain resource whose frequency domain position is the highest in the M frequency domain resources. The reference frequency domain position includes the at least one of the following: the first frequency, the third frequency, the second frequency, or the fourth frequency. In other words, the second apparatus may send the first request information to the first apparatus, to request the expected configuration information of the first apparatus, so that the second apparatus can determine, based on the expected configuration information, the frequency hopping pattern for sending or receiving the reference signals by the first apparatus.

In a possible implementation, the method according to the first aspect further includes: sending second request information, where the second request information is for requesting configuration information, and the configuration information indicates at least one of the following: the lowest frequency domain position of the frequency domain resources occupied for sending or receiving the reference signals, the highest frequency domain position of the frequency domain resources occupied for sending or receiving the reference signals, the combined bandwidth, or the frequency domain position relationship between the reference frequency domain position and the frequency domain resource whose frequency domain position is the lowest or the frequency domain resource whose frequency domain position is the highest in the M frequency domain resources. The reference frequency domain position includes the at least one of the following: the first frequency, the third frequency, the second frequency, or the fourth frequency, where the frequency domain resource corresponding to the third frequency is the frequency domain resource whose frequency domain position is the highest in the M frequency domain resources, and the frequency domain resource corresponding to the fourth frequency is the frequency domain resource whose frequency domain position is the lowest in the M frequency domain resources. In other words, the first apparatus may send the second request information to the second apparatus, to request the configuration information that can be for uniquely determining the frequency hopping pattern, and further to avoid the interference.

In a possible implementation, the second request information includes the expected configuration information. In other words, the first apparatus may indicate the expected configuration information of the first apparatus to the second apparatus by using the second request information, so that the second apparatus can determine, based on the expected configuration information, the frequency hopping pattern for sending or receiving the reference signals by the first apparatus.

According to a second aspect, a resource determining method is provided. The method may be performed by a second apparatus, may be performed by a component of the second apparatus, for example, a processor, a chip, or a chip system of the second apparatus, or may be implemented by a logical module or software that can implement all or a part of functions of the second apparatus. An example in which the method is performed by the second apparatus is used below for description. The method includes: generating frequency hopping configuration information, and sending the frequency hopping configuration information. The frequency hopping configuration information is for determining an association relationship between a plurality of frequency domain resources and a plurality of time domain resources, the plurality of frequency domain resources are for frequency hopping, and the plurality of time domain resources are for sending or receiving reference signals. The frequency hopping configuration information includes information indicating at least one of the following: a first frequency, a second frequency, or a combined bandwidth, where the first frequency is a lowest frequency domain position of frequency domain resources occupied for sending or receiving the reference signals, the second frequency is a highest frequency domain position of the frequency domain resources occupied for sending or receiving the reference signals, and the combined bandwidth is a total bandwidth occupied by the plurality of frequency domain resources.

In this embodiment of this application, the second apparatus may send the frequency hopping configuration information to a first apparatus, so that the first apparatus can determine the first frequency and/or the second frequency. In this way, the first apparatus can determine the correspondence between the plurality of frequency domain resources for frequency hopping and the plurality of time units, to avoid sending or receiving a reference signal on a same frequency hopping resource as another apparatus, and therefore avoid interference. This helps improve positioning accuracy.

In a possible implementation, the second apparatus may be a network device, or may be a module or unit, for example, a chip, a chip system, a chip circuit, or a circuit, of the network device. The first apparatus may be a terminal device, or may be a module or unit, for example, a chip, a chip system, a chip circuit, or a circuit, of the terminal device. For example, the second apparatus may be an access network device or a chip of the access network device, and the first apparatus may be the terminal device or the chip of the terminal device. For another example, the second apparatus may be a location management function (for example, an LMF), and the first apparatus may be the terminal device or the chip of the terminal device. In other words, the second apparatus may send the frequency hopping configuration information to the first apparatus via an access network device.

In a possible implementation, the second apparatus may be a location management function, and the first apparatus may be an access network device or a chip of the access network device. The first apparatus may send or receive the reference signals based on the frequency hopping configuration information.

In a possible implementation, the first frequency is a sum of a reference frequency and a first frequency domain offset. The reference frequency is at least one of the following: a start frequency of a BWP, a highest frequency of the BWP, or a reference frequency corresponding to the BWP.

In a possible implementation, the second frequency is a sum of a reference frequency and a second frequency domain offset. The reference frequency is at least one of the following: a start frequency of a BWP, a highest frequency of the BWP, or a reference frequency corresponding to the BWP.

In a possible implementation, the reference signal is for positioning. For example, the reference signal may include one or more of the following: an uplink reference signal, a downlink reference signal, and a sidelink reference signal.

In a possible implementation, the plurality of time domain resources include N time units, and the frequency hopping configuration information further indicates at least one of the following: position information of a frequency domain resource corresponding to a 1st time unit in the N time units, time domain position information corresponding to the 1st time unit in the N time units, a bandwidth of a frequency domain resource corresponding to an $i^{th}$ time unit, an overlapped size between the frequency domain resource corresponding to the $i^{th}$ time unit and a frequency domain resource corresponding to a $j^{th}$ time unit, a quantity of frequency hopping times, a corresponding frequency domain offset between two adjacent time units in the N time units, or a time interval between the $i^{th}$ time unit and the $j^{th}$ time unit, where the $i^{th}$ time unit and the $j^{th}$ time unit are time units in the N time units, and $1 \leq i \neq j \leq N$.

In a possible implementation, the method according to the second aspect further includes: receiving expected configuration information, where the expected configuration information indicates at least one of the following: the lowest frequency domain position of the frequency domain resources occupied for sending or receiving the reference signals, the highest frequency domain position of the frequency domain resources occupied for sending or receiving the reference signals, the combined bandwidth, or a frequency domain position relationship between a reference frequency domain position and a frequency domain resource whose frequency domain position is the lowest or highest in the plurality of frequency domain resources. The reference frequency domain position includes at least one of the following: the first frequency, a third frequency, the second frequency, or a fourth frequency.

In a possible implementation, the method according to the second aspect further includes: sending first request information, where the first request information is for requesting the expected configuration information, and the expected configuration information indicates the at least one of the following: the lowest frequency domain position of the frequency domain resources occupied for sending or receiving the reference signals, the highest frequency domain position of the frequency domain resources occupied for sending or receiving the reference signals, the combined bandwidth, or the frequency domain position relationship between the reference frequency domain position and the frequency domain resource whose frequency domain position is the lowest or the frequency domain resource whose frequency domain position is the highest in the plurality of frequency domain resources. The reference frequency domain position includes the at least one of the following: the first frequency, the third frequency, the second frequency, or the fourth frequency.

In a possible implementation, the method according to the second aspect further includes: receiving second request information, where the second request information is for requesting configuration information, and the configuration information indicates at least one of the following: the lowest frequency domain position of the frequency domain resources occupied for sending or receiving the reference signals, the highest frequency domain position of the frequency domain resources occupied for sending or receiving the reference signals, the combined bandwidth, or the frequency domain position relationship between the reference frequency domain position and the frequency domain resource whose frequency domain position is the lowest or the frequency domain resource whose frequency domain position is the highest in the plurality of frequency domain resources. The reference frequency domain position includes the at least one of the following: the first frequency, the third frequency, the second frequency, or the fourth frequency, where a frequency domain resource corresponding to the third frequency is the frequency domain resource whose frequency domain position is the highest in the plurality of frequency domain resources, and a frequency domain resource corresponding to the fourth frequency is the frequency domain resource whose frequency domain position is the lowest in the plurality of frequency domain resources.

In a possible implementation, the second request information includes the expected configuration information.

For technical effects of any implementation of the second aspect, refer to the first aspect. Details are not described herein again.

According to a third aspect, a resource determining method is provided. The method may be performed by a first apparatus, may be performed by a component of the first apparatus, for example, a processor, a chip, or a chip system of the first apparatus, or may be implemented by a logical module or software that can implement all or a part of functions of the first apparatus. An example in which the method is performed by the first apparatus is used below for description. The method includes: receiving frequency hopping configuration information, and determining a correspondence between N time units and M frequency domain resources based on the frequency hopping configuration information. The frequency hopping configuration information indicates that an $i^{th}$ time unit in the N time units is associated with a $j^{th}$ frequency domain resource in the M frequency domain resources, the M frequency domain resources are for frequency hopping, and the N time units are for sending or receiving reference signals, where M is an integer greater than 1, N is an integer greater than 1, $1 \leq i \leq N$, and $1 \leq j \leq M$.

In this embodiment of this application, the first apparatus may determine a correspondence between each time unit in the N time units and each frequency domain resource in the M frequency domain resources based on the frequency hopping configuration information. In this way, frequency hopping resources for sending or receiving the reference signals can be uniquely determined, to avoid sending or receiving a reference signal on a same frequency hopping resource as another apparatus, and therefore avoid interference. This helps improve positioning accuracy.

According to a fourth aspect, a resource determining method is provided. The method may be performed by a second apparatus, may be performed by a part of the second apparatus, for example, a processor, a chip, or a chip system of the second apparatus, or may be implemented by a logical module or software that can implement all or a part of functions of the second apparatus. An example in which the method is performed by the first apparatus is used below for description. The method includes: generating frequency hopping configuration information, and sending the frequency hopping configuration information. The frequency hopping configuration information indicates that an $i^{th}$ time unit in N time units is associated with a $j^{th}$ frequency domain resource in M frequency domain resources, the M frequency domain resources are for frequency hopping, and the N time units are for sending or receiving reference signals, where M is an integer greater than 1, N is an integer greater than 1, $1 \leq i \leq N$, and $1 \leq j \leq M$.

For technical effects of the fourth aspect, refer to the third aspect. Details are not described herein again.

With reference to the third aspect or the fourth aspect, in a possible implementation, the frequency hopping configuration information includes time domain sequence information, and the time domain sequence information indicates that the $i^{th}$ time unit is associated with the $j^{th}$ frequency domain resource. In other words, a first apparatus may determine a frequency hopping ranking of a reference signal, namely, a specific frequency domain resource that is in the M frequency domain resources and on which the reference signal is to be first sent or received, by using the time sequence information in the frequency hopping configuration information. In this way, the frequency hopping resources for sending or receiving the reference signals can be uniquely determined, to avoid sending or receiving a reference signal on a same frequency hopping resource as another apparatus, and therefore avoid the interference.

With reference to the third aspect or the fourth aspect, in a possible implementation, the frequency hopping configuration information further includes frequency domain index information, and the frequency domain index information includes index information of the $j^{th}$ frequency domain resource. The frequency domain index information may include index information of a part of the M frequency domain resources, or the frequency domain index information may include index information of all of the M frequency domain resources. To be specific, the frequency domain index information in the frequency hopping configuration information may assist the first apparatus in determining a frequency domain position relationship between the M frequency domain resources, to uniquely determine a frequency hopping pattern with reference to the time domain sequence information.

With reference to the third aspect or the fourth aspect, in a possible implementation, the M frequency domain resources are determined based on a first frequency hopping parameter set. The first frequency hopping parameter set includes at least one of the following: position information of a frequency domain resource corresponding to a $1^{st}$ time unit in the N time units, time domain position information corresponding to the $1^{st}$ time unit in the N time units, a bandwidth of a frequency domain resource corresponding to the $i^{th}$ time unit, an overlapped size between the frequency domain resource corresponding to the $i^{th}$ time unit and a frequency domain resource corresponding to an $L^{th}$ time unit in the N time units, a quantity of frequency hopping times, a corresponding frequency domain offset between two adjacent time units in the N time units, or a time interval between the $i^{th}$ time unit and the $L^{th}$ time unit, where $1 \leq i \neq L \leq N$.

With reference to the third aspect or the fourth aspect, in a possible implementation, the frequency hopping configuration information may be included in system information. For example, the frequency hopping configuration information may be included in a posSIB. In other words, the frequency hopping configuration information is broadcast by using the system information, so that signaling overheads can be reduced. It may be understood that the second apparatus may alternatively send the frequency hopping configuration information by using a unicast message. For example, the frequency hopping configuration information may be included in an RRC message, an LPP message, or an NRPPA message.

With reference to the third aspect or the fourth aspect, in a possible implementation, the frequency hopping configuration information further indicates the first frequency hopping parameter set. To be specific, the first apparatus may determine the frequency domain position sequence relationship between the M frequency domain resources based on the frequency hopping configuration information, to uniquely determine the frequency hopping pattern based on the time domain sequence information.

According to a fifth aspect, a communication apparatus is provided, to implement the foregoing methods. The communication apparatus may be the first apparatus in any one of the first aspect or the implementations of the first aspect, an apparatus including the first apparatus, or an apparatus, for example, a chip, included in the first apparatus; the communication apparatus may be the first apparatus in any one of the third aspect or the implementations of the third aspect, an apparatus including the first apparatus, or an apparatus, for example, a chip, included in the first apparatus; the communication apparatus may be the second apparatus in any one of the second aspect or the implementations of the second aspect, an apparatus including the second apparatus, or an apparatus, for example, a chip, included in the second apparatus; or the communication apparatus may be the second apparatus in any one of the fourth aspect or the implementations of the fourth aspect, an apparatus including the second apparatus, or an apparatus, for example, a chip, included in the second apparatus. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In some possible designs, the communication apparatus may include a processing module and a transceiver module. The transceiver module may also be referred to as a transceiver unit, and is configured to implement a sending function and/or a receiving function in any one of the foregoing aspects and the possible implementations of the foregoing aspects. The transceiver module may include a transceiver circuit, a transceiver machine, a transceiver, or a communication interface. The processing module may be configured to implement a processing function in any one of the foregoing aspects and the possible implementations of the foregoing aspects.

In some possible designs, the transceiver module includes a sending module and a receiving module, respectively configured to implement the sending function and the receiving function in any one of the foregoing aspects and the possible implementations of the foregoing aspects.

According to a sixth aspect, a communication apparatus is provided, including at least one processor. The processor is configured to execute a computer program or instructions, to cause the communication apparatus to perform the method in any one of the foregoing aspects.

In a possible implementation, the communication apparatus further includes a memory. Optionally, the memory is coupled to the processor; and the memory may be integrated with the processor, or the memory may be independent of the processor. Optionally, the processor is configured to execute the computer program or the instructions stored in the memory.

In a possible implementation, the memory is independent of the communication apparatus.

In a possible implementation, the communication apparatus further includes a communication interface, and the communication interface is configured to communicate with a module outside the communication apparatus.

The communication apparatus may be the first apparatus in any one of the foregoing aspects or the implementations of the foregoing aspects, an apparatus including the first apparatus, or an apparatus, for example, a chip, included in the first apparatus; or the communication apparatus may be the second apparatus in any one of the foregoing aspects or the implementations of the foregoing aspects, an apparatus including the second apparatus, or an apparatus, for example, a chip, included in the second apparatus.

According to a seventh aspect, a computer-readable storage medium is provided. The computer-readable storage medium stores a computer program or instructions. When the computer program or the instructions are run on a communication apparatus, the communication apparatus is caused to perform the method according to any one of the foregoing aspects or the implementations of the foregoing aspects.

According to an eighth aspect, a computer program product including instructions is provided. When the computer program product runs on a communication apparatus, the communication apparatus is caused to perform the method according to any one of the foregoing aspects or the implementations of the foregoing aspects.

According to a ninth aspect, a communication apparatus is provided (for example, the communication apparatus may be a chip or a chip system). The communication apparatus includes a processor, configured to implement the functions in any one of the foregoing aspects or the implementations of the foregoing aspects.

In some possible designs, the communication apparatus includes a memory, and the memory is configured to store necessary program instructions and data.

In some possible designs, when the apparatus is the chip system, the apparatus may include a chip, or may include a chip and another discrete component.

It may be understood that when the communication apparatus provided in any one of the fifth aspect to the ninth aspect is a chip, the foregoing sending action/function may be understood as output, and the foregoing receiving action/function may be understood as input.

For technical effects brought by any design scheme in the fifth aspect to the ninth aspect, refer to the technical effects brought by different design schemes in the first aspect to the fourth aspect. Details are not described herein again.

According to a tenth aspect, a communication system is provided. The communication system includes the first apparatus in any one of the foregoing aspects or the implementations of the foregoing aspects and the second apparatus in any one of the foregoing aspects or the implementations of the foregoing aspects.

## BRIEF DESCRIPTION OF DRAWINGS

FIG. 1 is a diagram of resources in overlapped frequency hopping according to an embodiment of this application;
FIG. 2 is a diagram of resources in non-overlapped frequency hopping according to an embodiment of this application;
FIG. 3 is a diagram of downlink frequency hopping transmission according to an embodiment of this application;
FIG. 4 is a diagram of a frequency hopping pattern 1 according to an embodiment of this application;
FIG. 5 is a diagram of a frequency hopping pattern 2 according to an embodiment of this application;
FIG. 6 is another diagram of a frequency hopping pattern 2 according to an embodiment of this application;
FIG. 7 is still another diagram of a frequency hopping pattern 2 according to an embodiment of this application;
FIG. 8 is a diagram of a frequency hopping pattern 3 according to an embodiment of this application;
FIG. 9 is a diagram of determining frequency hopping resources in a frequency hopping pattern 2 according to an embodiment of this application;
FIG. 10 is a diagram of an architecture of a communication system according to an embodiment of this application;
FIG. 11 is a diagram of an application scenario according to an embodiment of this application;
FIG. 12 is a diagram of a structure of a communication apparatus according to an embodiment of this application;

FIG. 13 is a first schematic flowchart of a resource determining method according to an embodiment of this application;

FIG. 14 is a diagram of a first frequency domain position relationship and a second frequency domain position relationship according to an embodiment of this application;

FIG. 15 is a diagram of a third frequency domain position relationship and a fourth frequency domain position relationship according to an embodiment of this application;

FIG. 16 is a diagram of a fifth frequency domain position relationship and a sixth frequency domain position relationship according to an embodiment of this application;

FIG. 17 is a diagram of a seventh frequency domain position relationship and an eighth frequency domain position relationship according to an embodiment of this application;

FIG. 18 is a second schematic flowchart of a resource determining method according to an embodiment of this application;

FIG. 19 is a third schematic flowchart of a resource determining method according to an embodiment of this application;

FIG. 20 is a diagram of determining a frequency hopping pattern based on time domain sequence information according to an embodiment of this application; and

FIG. 21 is a diagram of a structure of a first apparatus according to an embodiment of this application.

## DESCRIPTION OF EMBODIMENTS

For ease of understanding of embodiments of this application, the following descriptions are first provided before embodiments of this application are described.

1. In embodiments of this application, for ease of description, when numbering or indexing is involved, consecutive numbering may be performed starting from 1, 0, or any parameter.

2. "Predefinition", "definition in advance", "pre-configuration (or referred to as configuration in advance)", and "agreement in a protocol" may be interchangeably used, and the predefinition may be implemented by pre-storing corresponding code or a corresponding table in an apparatus (for example, a terminal device or a network device), or implemented in another manner of indicating related information. A specific implementation thereof is not limited in embodiments of this application. "Storage" may mean storage in one or more memories.

3. A "protocol" in embodiments of this application may be a standard protocol in the communication field, and for example, may include a long term evolution (long term evolution, LTE) protocol, a new radio (new radio, NR) protocol, and a related protocol used in a future communication system. This is not limited in embodiments of this application.

4. In embodiments of this application, descriptions such as "when...", "in a case of...", and "if" all mean that a device (for example, a terminal device or a network device) performs corresponding processing in an objective case, are not intended to limit time, do not require the device to perform a determining action during implementation, and do not mean that there is another limitation.

5. In embodiments of this application, "sending information to ... (a first apparatus)" may be understood as that a destination end of the information is the first apparatus, and may include directly or indirectly sending the information to the first apparatus; and "receiving information from ... (a second apparatus)" or "receiving information that is from ... (a second apparatus)" may be understood as that a source end of the information is the second apparatus, and may include directly or indirectly receiving the information from the second apparatus. Necessary processing, for example, a format change, may be performed on information between a source end that sends the information and a destination end, but the destination end can understand valid information from the source end. A similar expression in this application may be understood similarly. Details are not described herein.

6. In descriptions of embodiments of this application, unless otherwise specified, "and/or" in embodiments of this application may indicate that three relationships exist. For example, A and/or B may indicate the following three cases: Only A exists, both A and B exist, and only B exists, where A and B each may be singular or plural. In addition, "at least one of the following items (pieces)" or a similar expression thereof indicates any combination of these items, including a single item (piece) or any combination of a plurality of items (pieces). In addition, to facilitate clear description of technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and do not indicate a definite difference either. In addition, in embodiments of this application, terms such as "example" or "for example" represent giving an example, an illustration, or a description.

The following briefly describes a communication system to which this application is applicable and a related technology.

1. Communication system:

Embodiments of this application may be applied to an LTE system or an NR system (which may also be referred to as a 5th generation (5th generation, 5G) system), a vehicle-to-everything (vehicle-to-everything, V2X) system, a device-to-device (device-to-device, D2D) system, a machine-to-machine (machine-to-machine, M2M) communication system, an internet of things (internet of things, IoT) system (for example, a narrowband internet of things (narrowband internet of things, NB-IoT) system), a 6G communication system, other next-generation communication systems, and the like. Alternatively, the communication system may be an open radio access network (open radio access network, O-RAN or ORAN) or a cloud radio access network (cloud RAN, CRAN). This is not limited.

2. Time-frequency resource in an NR system:

The time-frequency resource may include a time domain resource and a frequency domain resource. To meet a communication traffic requirement, the NR system may support a larger frequency range (frequency range, FR) and a wider system bandwidth in frequency domain. For example, for a low frequency band below 6 GHz, for example, FR1 (410 MHz to 7125 MHz), a maximum system bandwidth supported by the NR system is 100 MHz. For another example, for a high frequency band above 6 GHz and up to a millimeter wave band, for example, FR2 (24250 MHz to 52600 MHz) and FR2-2 (52600 MHz to 71000 MHz), a maximum system bandwidth supported by the NR system is 400 MHz. It may be understood that the FR may alternatively be another frequency range supported in a future next-generation communication system (for example, a 6th generation (6th generation, 6G) communication system) other than FR1, FR2, and FR2-2. This is not specifically limited in embodiments of this application.

It should be understood that the time domain resource and the frequency domain resource are related to a transmission scheme in the NR system. An orthogonal frequency division multiplexing (orthogonal frequency division multiplexing, OFDM) technology may be used in an uplink (uplink, UL) transmission scheme and a downlink (downlink, DL) transmission scheme in the NR system. A principle of the OFDM is: A plurality of subchannels are obtained through division in frequency domain; serial-to-parallel conversion is performed on to-be-transmitted data to obtain a plurality of groups of data to be transmitted in parallel; and then each group of data is modulated to a subcarrier (subcarrier) corresponding to each subchannel, to perform transmission. To be specific, the to-be-transmitted data may be transmitted through an OFDM waveform formed by a plurality of subcarriers that are superimposed in space. In other words, in the NR system, a minimum frequency domain resource may be one subcarrier, and a minimum time domain resource may be one OFDM symbol.

It may be understood that any two subcarriers in an OFDM symbol are orthogonal. Therefore, duration of the OFDM symbol (namely, a time length of the OFDM symbol) is inversely proportional to a subcarrier spacing (subcarrier spacing, SCS). The subcarrier is in a carrier on which the NR system operates, and a quantity of subcarriers is determined based on the subcarrier spacing (subcarrier spacing, SCS) and a system bandwidth corresponding to the carrier.

It should be understood that different SCSs may be configured in the NR system to adapt to the foregoing different FRs. For example, for FR1 as the low frequency band, a small SCS is used, to avoid excessively high time domain overheads occupied by a CP. For another example, for FR2 and FR2-2 as high frequency bands, a large SCS is used, to avoid severe inter-subcarrier interference caused by a Doppler shift in the high frequency bands.

For example, a transmission numerology supported by the NR system is enumerated in Table 1. In Table 1, a 1st column is a specific value of an SCS configuration $\mu$, and a 2nd column is a specific value of the SCS.

Table 1

| $\mu$ | $\Delta f = 2^{\mu} \cdot 15$ [kHz] |
|---|---|
| 0 | 15 |
| 1 | 30 |
| 2 | 60 |
| 3 | 120 |
| 4 | 240 |

When the SCS is 15 kHz, the time length of the OFDM symbol may be approximately 66.67 $\mu s$. When the SCS is 30 kHz, the time length of the OFDM symbol may be approximately 33.33 $\mu s$. When the SCS is 60 kHz, the time length of the OFDM symbol may be approximately 16.67 $\mu s$. When the SCS is 120 kHz, the time length of the OFDM symbol may be approximately 8.88 $\mu s$. When the SCS is 240 kHz, the time length of the OFDM symbol may be approximately 4.17 $\mu s$.

2.1. Time domain resource:

It should be understood that, in time domain, transmission may be performed in the NR system in a unit of a radio frame (frame). The radio frame may include a plurality of subframes (subframes), and each subframe may include a plurality of slots (slots). In other words, the NR system may include time domain resources at different granularities, such as the radio frame, the subframe, the slot, and an OFDM symbol.

Duration of each radio frame is 10 ms. Each radio frame may include 10 subframes whose duration is 1 ms. 10 subframes in a radio frame may be sorted in sequence. For example, 10 subframes in a radio frame may be sorted in ascending order of time as: a subframe #0 to a subframe #9. For another example, 10 subframes may be sorted in descending order of time as: a subframe #9 to a subframe #0. A subframe sorting manner is not specifically limited in embodiments of this application.

It should be understood that the foregoing subframe numbers are merely an example. For example, a start number may alternatively be #1. For example, 10 subframes in a radio frame may be represented as the subframe #1 to a subframe #10.

For the SCS configuration $\mu$, slots may be sorted in ascending order of numbers $n_s^\mu \in \left\{ 0, \dots, N_{slot}^{subframe,\mu} - 1 \right\}$ in a subframe, and may be sorted in ascending order of numbers $n_{s,f}^\mu \in \left\{ 0, \dots, N_{slot}^{frame,\mu} - 1 \right\}$ in a radio frame. There are $N_{symb}^{slot}$ consecutive OFDM symbols in one slot, where $N_{symb}^{slot}$ is related to a CP type used by the OFDM symbol. For $N_{symb}^{slot}$ corresponding to a normal CP, refer to Table 2. To be specific, one slot includes 14 OFDM symbols regardless of a value of the SCS.

It should be understood that a time domain start position of a slot $n_s^\mu$ in a subframe is aligned with a time domain start position of an OFDM symbol $n_s^\mu N_{symb}^{slot}$ in the same subframe. For example, when one slot includes 14 OFDM symbols, the OFDM symbols may be sorted in ascending order of time as an OFDM symbol #0 to an OFDM symbol #13. A time domain start position of the OFDM symbol #0 is the same as a time domain start position of the slot.

Table 2

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

2.2. Frequency domain resource:

According to the foregoing related descriptions of the OFDM, a minimum granularity of the frequency domain resource is a subcarrier. Therefore, a quantity of subcarriers may be for measuring a size of the frequency domain resource. In the NR system, frequency domain resources may be classified into a resource element (resource element, RE), a resource block (resource block, RB), and a bandwidth part (bandwidth part, BWP).

RE: One subcarrier in frequency domain and one OFDM symbol in time domain may be defined as the RE. The RE is a resource at a minimum granularity at a physical layer.

RB: In frequency domain, 12 consecutive subcarriers may be defined as one RB regardless of a value of a subcarrier spacing. A larger SCS indicates a wider actual bandwidth corresponding to an RB. It should be understood that at the physical layer, the RB may be referred to as a physical resource block (physical resource block, PRB).

BWP: Considering a capability limitation of a terminal device and an energy saving requirement, the NR system allows the terminal device to operate in a part of a system bandwidth, namely, the BWP. Alternatively, the BWP may be a part of a bandwidth corresponding to a carrier supported by a cell. For example, a cell covered by a network device (for example, a next-generation radio access network (next-generation radio access network, NG-RAN) device in the NR system) supports two carriers (a carrier #1 and a carrier #2). In the cell, a bandwidth of 40 MHz is allocated to the carrier #1, and a bandwidth of 60 MHz is allocated to the carrier #2. The BWP may be a bandwidth of 20 MHz in the bandwidth of 40 MHz corresponding to the carrier #1. The terminal device may operate only in the BWP. It may be understood that one BWP may include a plurality of RBs. In other words, a size of the BWP may be measured by using a quantity of RBs. It may be further understood that the size of the frequency domain resource may alternatively be represented by a bandwidth. For example, when the SCS is 15 kHz, a bandwidth of the RB is $12 \times 15$ kHz=180 kHz.

It should be understood that in the NR system, after the terminal device accesses a network through an initial access process, the network may configure an operating BWP for the terminal device by using higher layer signaling (signaling). One to four BWPs may be configured for each terminal device, but only one BWP is active at any moment. In addition to performing radio resource management (radio resource management, RRM) measurement, the terminal device only receives and sends data in the active BWP. A configuration of the BWP may include a frequency domain position, a bandwidth, an SCS, and the like of the BWP.

It should be further understood that before the terminal device sets up a radio resource control (radio resource control, RRC) connection, that is, during initial search and initial access, the network may configure an initial BWP by using system information (system information, SI), for example, remaining minimum system information (remaining minimum system information, RMSI). If the RMSI does not include configuration information for the initial BWP, it is agreed on in a protocol that a control resource set (control resource set, CORESET) 0 may be used as the initial BWP.

It may be understood that in embodiments of this application, "carrier", "carrier frequency", and "frequency" may be interchangeably used. A unified description is provided herein, and details are not described below again. In addition, in embodiments of this application, meanings of "number" and "index" are the same. In other words, "number" and "index" may be interchangeably used. A unified description is provided herein, and details are not described below again.

It may be further understood that, in embodiments of this application, the index may correspond to an identity (identity, ID). For example, an index of a slot may correspond to an identity of a time domain resource, an index of an RB may correspond to an identity of a frequency domain resource, an index of a cell (cell) may correspond to an identity of the cell, an index of a carrier may correspond to an identity of the carrier, and an index of an active BWP may correspond to an identity of the active BWP. A unified description is provided herein, and details are not described below again.

3. Reference signal:

In embodiments of this application, the reference signal may include one or more of the following: an uplink reference signal (uplink reference signal, UL-RS), a downlink reference signal (downlink reference signal, DL-RS), and a sidelink reference signal (sidelink reference signal, SL-RS).

The uplink reference signal may be a reference signal sent by a terminal device to a network device. The uplink reference signal may include one or more of the following: a sounding reference signal (sounding reference signal, SRS) used in Release 15 (release 15, R15) and an earlier release, a positioning-specific positioning sounding reference signal (positioning SRS, pos-SRS) proposed in R16, or another uplink reference signal for positioning in the future (for example, in a 6th generation (6th generation, 6G) communication system). This is not specifically limited.

The downlink reference signal may be a reference signal sent by the network device to the terminal device. The downlink reference signal may include a positioning-specific positioning reference signal (positioning reference signal, PRS) proposed in R16, another downlink reference signal for positioning in the future, or the like. This is not specifically limited in embodiments of this application.

It should be understood that, in an NR system, because the terminal device is connected to the network device through a Uu interface, the uplink reference signal and the downlink reference signal are communicated through the Uu interface.

The sidelink reference signal may be a reference signal communicated between two terminal devices through a sidelink (sidelink, SL). The SL may also be referred to as a sidelink, a sidelink, a sidelink, or the like. The SL is a link introduced to support direct communication between devices. The SL may be applied to D2D, and may be further applied to V2X. The sidelink reference signal may include a sidelink positioning reference signal (SL-positioning reference signal, SL-PRS).

The following describes configuration information for the reference signal.

In the NR system, the configuration information for the reference signal is for communicating the reference signal. For example, the configuration information for the reference signal may be used by the terminal device to receive or send the reference signal. For another example, the configuration information for the reference signal may alternatively be used by the network device to send or receive the reference signal. The configuration information for the reference signal may be configured by a network, and then may be configured for the terminal device by using radio resource control (radio resource control, RRC) signaling. The configuration information for the reference signal may include a transmission mode (for example, periodic transmission or aperiodic transmission) of the reference signal, a time domain resource for the reference signal, a frequency domain resource for the reference signal, and the like.

For example, configuration information for the SRS is used as an example to describe content included in the configuration information for the SRS. An SRS resource set (resource set) and an SRS resource (resource) are introduced in the NR system. The configuration information for the SRS may include one or more SRS resource sets or one or more SRS resources. One SRS resource set may include one or more SRS resources. One SRS resource may include one or more of the following:

(1) Quantity of antenna ports: In the NR system, one, two, or four antenna ports may be configured for one SRS resource.

(2) Time domain resource: In the NR system, the time domain resource includes an index, a start position, or the like of an occupied OFDM symbol. The index of the OFDM symbol may indicate a quantity of OFDM symbols occupied by the SRS resource. One, two, four, eight, or 12 OFDM symbols may be configured for one SRS resource. The start position may be provided by a startPosition field.

(3) Resource type: In the NR system, SRS resources may be classified into several types: a periodic (periodic) SRS resource, a semi-persistent (semi-persistent) SRS resource, or an aperiodic (aperiodic) SRS resource. For the semi-persistent or periodic SRS resource, one SRS resource may include a periodicity and a slot offset index (a slot offset) that are specified for the terminal device.

(4) Frequency domain resource: The frequency domain resource includes an index of an RB occupied for transmission of the SRS. In the NR system, one SRS resource may occupy four to 272 RBs.

It should be noted that one SRS resource may further include a repetition factor (which may be indicated by, for example, a repetitionFactor field) for the transmission of the SRS, a frequency domain offset of the SRS resource, a frequency hopping configuration for the SRS resource, and the like. For specific descriptions, refer to 3GPP TS 38.211. Details are not described herein.

4. Positioning:

In an NR system, positioning methods include time difference of arrival (time difference of arrival, TDOA)-based positioning, angle-based positioning, or the like. Procedures for the positioning methods may include: measuring a received reference signal, obtaining measurement result information for the reference signal, and performing location estimation based on the measurement result information and assistance data. In terms of uplink and downlink directions of reference signals, the positioning may include uplink positioning and downlink positioning. Descriptions are separately provided below.

For the uplink positioning, a terminal device sends an uplink reference signal (for example, an SRS) to a network device. Correspondingly, the network device receives the uplink reference signal from the terminal device, to obtain measurement result information for the uplink reference signal. The measurement result information is for location estimation.

For the downlink positioning, the network device sends a downlink reference signal to the terminal device. Correspondingly, the terminal device receives the downlink reference signal from the network device, to obtain measurement result information for the downlink reference signal. The measurement result information is for location estimation.

It may be understood that the positioning may further include uplink and downlink joint positioning, that is, performing location estimation based on measurement result information for an uplink reference signal and measurement result information for a downlink reference signal. Details are not described.

It should be understood that, a principle of the TDOA-based positioning may be: obtaining time differences of arrival of reference signals from a transmit end to different receive ends, where a distance difference corresponding to each time difference may form one hyperbola with two receive ends as foci; and estimating a location of the transmit end by using foci of two of hyperbolas and locations of a plurality of receive ends. In embodiments of this application, the TDOA-based positioning may include uplink time difference of arrival (uplink time difference of arrival, UL-TDOA)-based positioning, downlink time difference of arrival (downlink time difference of arrival, DL-TDOA)-based positioning, sidelink time difference of arrival (sidelink time difference of arrival, SL-TDOA)-based positioning, or the like.

It may be understood that a principle of the angle-based positioning may be: determining angle values (for example, angles of arrival (angles of arrival, AOAs) or angles of departure (angles of departure, AODs)) of a transmit end relative to a plurality of receive ends by using reference signals, and estimating a location of the transmit end based on geometric relationships between the transmit end and the plurality of receive ends, the plurality of angle values, and location information of the receive ends. In embodiments of this application, the angle-based positioning includes uplink angle of arrival (uplink angle of arrival, UL-AOA)-based positioning, downlink angle of departure (downlink angle of departure, DL-AOD)-based positioning, and sidelink angle-based positioning.

5. Bandwidth-limited positioning scenario:

During actual application, for example, in internet of things services (such as wearables, industrial sensors, and video surveillance), requirements for high-accuracy positioning are imposed, and communication requirements are low. Specifically, in an asset tracking scenario, high positioning accuracy (30 centimeters (cm) to 1 meter (m)) is required, but a requirement for a communication capability is low (for example, a communication rate may be less than or equal to 1 Mbps). In other words, the communication capability only needs to meet a request and a response of a control service. In addition, in future internet of things services such as a smart logistics scenario, a higher requirement is imposed on positioning accuracy (for example, the positioning accuracy is less than 30 cm).

In 3GPP, a terminal device in the foregoing scenarios may reduce a communication capability, and therefore the terminal device may be referred to as a reduced capability (reduced capability, REDCAP) terminal device. For example, a capability of the REDCAP terminal device may mean that a system bandwidth supported by the terminal device is reduced from 100 MHz to 20 MHz, that is, a bandwidth of a reference signal sent or received by the terminal device is 20 MHz. However, the positioning accuracy is in a direct proportion relationship with the bandwidth of the reference signal, in other words, a wider bandwidth indicates higher positioning accuracy. It is obvious that the bandwidth of the 20 MHz reference signal cannot reach submeter-level positioning accuracy.

It may be understood that bandwidth limiting may be further specific to a non-REDCAP terminal device (or referred to as a common terminal device) in addition to the foregoing REDCAP terminal device. For example, a capability of the common terminal device supports a system bandwidth of 100 MHz. However, in consideration of an energy saving requirement, the common terminal device may alternatively send a reference signal by using a narrow bandwidth (for example, 20 MHz), to reduce power consumption.

To improve positioning accuracy of a terminal device with a limited bandwidth capability (for example, the foregoing REDCAP terminal device or the common terminal device having the energy saving requirement) to meet a further requirement for the positioning accuracy in the positioning scenario, a frequency hopping (frequency hopping)-based positioning method may be used. The frequency hopping may mean sending or receiving reference signals in different frequency ranges in a plurality of time units. Positioning performance can be improved by using the frequency hopping-based positioning method. For example, a transmit end sends narrowband reference signals in a plurality of time units in a frequency hopping manner, so that a receive end may jointly process the reference signals sent or received in the plurality of time units. In this way, a reference signal with a virtual wide-bandwidth (or referred to as an equivalent bandwidth, an effective bandwidth, or a combined bandwidth) can be obtained, to improve the positioning accuracy.

It should be understood that, in terms of uplink and downlink positioning, the frequency hopping-based positioning method may include a scenario 1 and a scenario 2. Descriptions are separately provided below.

Scenario 1: Uplink frequency hopping-based positioning

A terminal device sends narrowband reference signals (for example, SRSs with bandwidths of 20 MHz) to a network device in a plurality of time units. Correspondingly, the network device receives the narrowband reference signals from the terminal device in the plurality of time units, that is, the network device may receive a plurality of narrowband reference signals. At least two reference signals in the plurality of narrowband reference signals occupy frequency domain resources in different frequency ranges. For example, using an example in which the terminal device operates in FR1, and the terminal device sends 20 MHz reference signals in a first time unit and a second time unit as an example, a center frequency of a frequency domain resource corresponding to the first time unit is 500 MHz, and therefore a frequency range is 490 MHz to 510 MHz; and a center frequency of a frequency domain resource corresponding to the second time unit is 520 MHz, and therefore a frequency range is 510 MHz to 530 MHz.

In a possible implementation, the network device may jointly process the plurality of narrowband reference signals. For example, the network device may combine the plurality of narrowband reference signals in frequency domain to obtain a reference signal with an equivalent wide-bandwidth, and perform positioning based on the reference signal with the equivalent wide-bandwidth. In this way, positioning accuracy can be improved. For example, in the foregoing example, after the reference signal received in the first time unit and the reference signal received in the second time unit are combined, a reference signal with an equivalent bandwidth close to 40 MHz may be obtained, to improve the positioning accuracy. For another example, the network device may separately process the plurality of narrowband reference signals, for example, may obtain a single positioning measurement result based on a single narrowband reference signal, and then obtain a final positioning result (for example, by using a data processing algorithm) based on a plurality of single positioning measurement results, to improve the positioning accuracy.

It should be understood that, that the terminal device sends the reference signals to the network device may mean: The terminal device sends the reference signals in a broadcast manner or a unicast manner. This is not specifically limited in embodiments of this application.

Scenario 2: Downlink frequency hopping-based positioning

A network device may separately send wide-bandwidth reference signals (for example, PRSs of 100 MHz) in a plurality of time units. Correspondingly, the terminal device receives reference signals from the network device in the plurality of time units in a frequency hopping manner. That the terminal device receives the reference signals from the network device in the plurality of time units in the frequency hopping manner may mean: The terminal device receives a single narrowband reference signal in a single time unit, where the single narrowband reference signal may be a part of the wide-bandwidth reference signal sent by the network device. There are at least two reference signals that are in the plurality of narrowband reference signals received in the plurality of time units and that correspond to different frequency ranges. For example, using an example in which the terminal device operates in FR1, and the terminal device receives narrowband reference signals with bandwidths of 20 MHz in a first time unit and a second time unit as an example, a receive frequency range corresponding to the first time unit is 490 MHz to 510 MHz, and a narrowband reference signal with the bandwidth of 20 MHz is received; and a receive frequency range corresponding to the second time unit is 510 MHz to 530 MHz, and another narrowband reference signal with the bandwidth of 20 MHz is received. In other words, the terminal device may receive the reference signals from the network device in the frequency hopping manner, to obtain the plurality of narrowband reference signals.

In a possible implementation, the terminal device may jointly process the plurality of narrowband reference signals, to obtain a reference signal with an equivalent wide-bandwidth, and therefore improve positioning accuracy.

In another possible implementation, the terminal device separately processes the plurality of narrowband reference signals, for example, obtains a single positioning result based on a single narrowband reference signal, and then obtains a final positioning result (for example, by using a data processing algorithm) based on a plurality of single positioning results, to improve positioning accuracy.

It may be understood that the time units in the scenario 1 and the scenario 2 may be radio frames, subframes, slots, OFDM symbols, or the like in the "time domain resource" above. This is not specifically limited in embodiments of this application.

It should be understood that the terminal device needs to perform switching (also referred to as frequency switching/radio frequency switching) when receiving reference signals or data in a frequency hopping manner. The switching needs specific duration, and the duration is referred to as "switching time". For example, after receiving a reference signal in a $p^{th}$ time unit, the terminal device may switch a first frequency to a second frequency, and receive a reference signal or data at the second frequency in a $(p+1)^{th}$ time unit, where p is a positive integer. For another example, after receiving data in a $p^{th}$ time unit, the terminal device may switch a first frequency to a second frequency, and receive a reference signal or data at the second frequency in a $(p+1)^{th}$ time unit.

The switching time of the terminal device is related to a capability of the terminal device, an SCS of a signal, or the like. For example, when a REDCAP terminal device operates in FR1, switching time may be 70 microseconds ($\mu s$), 140 $\mu s$, or 210 $\mu s$; and when the REDCAP terminal device operates in FR2, the switching time may be 35 $\mu s$, 70 $\mu s$, or 140 $\mu s$. Therefore, the switching duration of the terminal device may be one symbol, two symbols, three symbols, four symbols, six symbols, eight symbols, 12 symbols, or even 16 symbols. FR1 includes FRs supported by an LTE system and an NR system. Compared with FR1, FR2 includes high frequencies, and may be considered as an FR supported by the NR system.

In other words, there may be a time interval between two adjacent time units in the foregoing plurality of time units. The time interval may be represented by at least one of the radio frame, the subframe, the slot, or the OFDM symbol in the "time domain resource" above in addition to 35 $\mu s$, 70 $\mu s$, 140 $\mu s$, or the symbols above. This is not specifically limited in embodiments of this application. In addition, any two adjacent time units in the plurality of time units may have a same time interval. Such a configuration is simple, and signaling overheads and terminal complexity can be effectively reduced. For another example, any two adjacent time units in the plurality of time units may have a different time interval. Such a configuration is flexible, and impact on communication can be reduced.

It may be understood that the center frequency and a center frequency may be interchangeably used. This is uniformly described herein, and details are not described below again.

It should be understood that the terminal device may adjust (or switch) a center frequency, so that frequency ranges of frequency domain resources occupied for sending or receiving reference signals in different time units are different, and therefore a receive end can obtain an equivalent reference signal with a wider bandwidth through combination.

However, due to a non-ideal factor (for example, a frequency offset of a radio frequency component or an engineering parameter error) in hardware, adjusting the center frequency may cause a random phase, and consequently a random phase error is generated. To be specific, in two frequency domain resources adjacent in frequency domain, a phase difference exists between a waveform corresponding to a frequency domain resource with a lower center frequency and a waveform corresponding to a frequency domain resource with a higher center frequency. Due to the random phase error, when reference signals on a plurality of different frequency domain resources corresponding to the foregoing plurality of time units are jointly processed, a waveform in frequency domain is discontinuous in terms of phases. This affects a channel estimation or measurement result, that is, may cause poor positioning accuracy.

For the foregoing problem, two solutions may be provided depending on whether there is an overlapped part between the plurality of frequency domain resources corresponding to the plurality of time units. Descriptions are separately provided below.

Solution 1: Overlapped frequency hopping

The overlapped frequency hopping may mean that frequency domain resources corresponding to at least two time units in the plurality of time units are partially overlapped. Therefore, during processing, the receive end may estimate the foregoing random phase error based on corresponding reference signals on the partially overlapped frequency domain resources. After compensation, a waveform that is approximately continuous in terms of phases may be obtained, to obtain a high-accuracy positioning result.

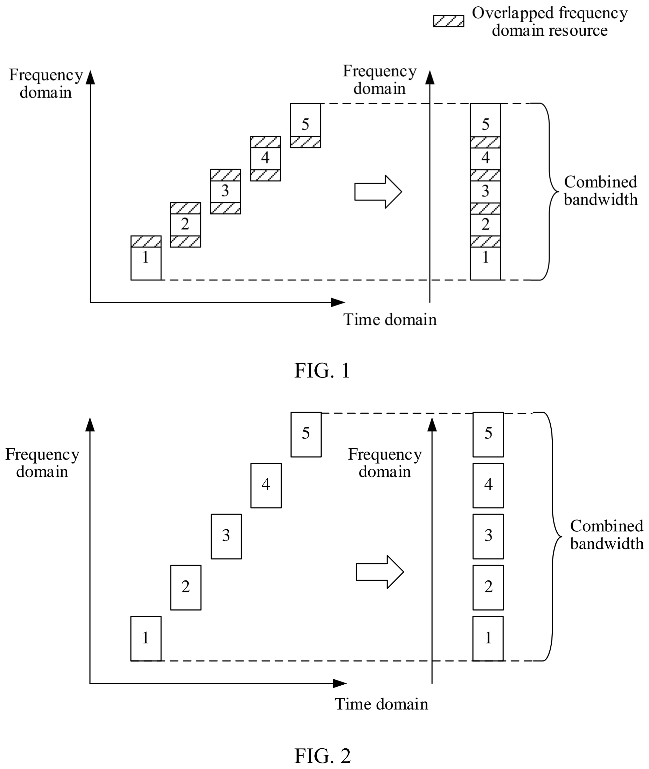

For example, FIG. 1 is a diagram of resources in the overlapped frequency hopping according to an embodiment of this application. As shown in FIG. 1, frequency hopping resources for reference signals include a frequency domain resource #1 to a frequency domain resource #5 corresponding to five time units. A center frequency of the frequency domain resource #1 to a center frequency of the frequency domain resource #5 sequentially increase (or referred to as being in ascending order in frequency domain or in ascending order of frequencies), and the frequency domain resource #1 to the frequency domain resource #5 are sequentially sent, to be specific, an $i^{th}$ time unit corresponds to an $i^{th}$ frequency domain resource, where $1 \leq i \leq 5$. For example, a frequency domain resource corresponding to a $1^{st}$ time unit is the frequency domain resource #1, and a frequency domain resource corresponding to a $2^{nd}$ time unit is the frequency domain resource #2. Similarly, a frequency domain resource corresponding to a $5^{th}$ time unit is the frequency domain resource #5. For example, frequency domain resources corresponding to two adjacent time units are partially overlapped, and graphs filled with patterns in FIG. 1 are overlapped frequency domain resources. It may be understood that in the solution 1, because the plurality of frequency domain resources corresponding to the plurality of time units are partially overlapped, a combined bandwidth obtained through combination is less than a sum of bandwidths of the plurality of frequency domain resources corresponding to the plurality of time units.

It should be understood that the $1^{st}$ time unit is before the $2^{nd}$ time unit, and the $2^{nd}$ time unit is before a $3^{rd}$ time unit. Similarly, an $n^{th}$ (n may be an integer greater than 3) time unit is before an $(n+1)^{th}$ time unit. This is uniformly described herein, and details are not described below again.

Solution 2: Non-overlapped frequency hopping

A difference of the non-overlapped frequency hopping from the overlapped frequency hopping in the solution 1 lies in: For one frequency hopping pattern periodicity, frequency domain resources corresponding to any two time units in the plurality of time units are not partially overlapped in frequency domain, and the receive end may estimate the foregoing random phase error according to an optimization algorithm (for example, extrapolation (extrapolation)), to obtain a high-accuracy positioning result.

It should be understood that, for the solution 2, in two frequency domain resources adjacent in frequency domain, there is a difference between a highest frequency of a frequency domain resource with a lower center frequency and a lowest frequency of a frequency domain resource with a higher center frequency. The difference may be less than or equal to a threshold, and the threshold may be 0.5 MHz, 1 MHz, 1.5 MHz, or the like. For example, a highest frequency of a frequency domain resource #1 in FIG. 2 is less than a lowest frequency of a frequency domain resource #2, and a frequency domain spacing between the highest frequency and the lowest frequency may be 0.5 MHz, 1 MHz, 1.5 MHz, or the like. It may be understood that the threshold may be determined according to an optimization algorithm used in a specific implementation. This is not specifically limited in embodiments of this application. It should be understood that a combined bandwidth in this example may be greater than a sum of bandwidths of the plurality of frequency domain resources corresponding to the plurality of time units. This helps improve the positioning accuracy.

For example, FIG. 2 is a diagram of resources in the non-overlapped frequency hopping according to an embodiment of this application. A difference of FIG. 2 from FIG. 1 lies in: Any two frequency domain resources in the frequency domain resource #1 to a frequency domain resource #5 are not partially overlapped. For example, the frequency domain resource #1 to the frequency domain resource #5 are non-consecutive in frequency domain. To be specific, in two frequency domain resources adjacent in frequency domain, there is a spacing between a highest frequency of a frequency domain resource with a lower center frequency and a lowest frequency of a frequency domain resource with a higher center frequency. In this way, the combined bandwidth obtained through combination may be greater than the sum of the bandwidths of the plurality of frequency domain resources corresponding to the plurality of time units.

It may be understood that FIG. 2 is merely an example, and the frequency domain resource #1 to the frequency domain resource #5 may alternatively be consecutive. For example, in FIG. 2, the frequency domain resource #1 to the frequency domain resource #5 are consecutive in frequency domain. To be specific, in two frequency domain resources adjacent in frequency domain, a highest frequency of a frequency domain resource with a lower center frequency is the same as a lowest frequency of a frequency domain resource with a higher center frequency.

Further, the foregoing solution 1 and solution 2 are applicable to the foregoing scenario 1 and scenario 2.

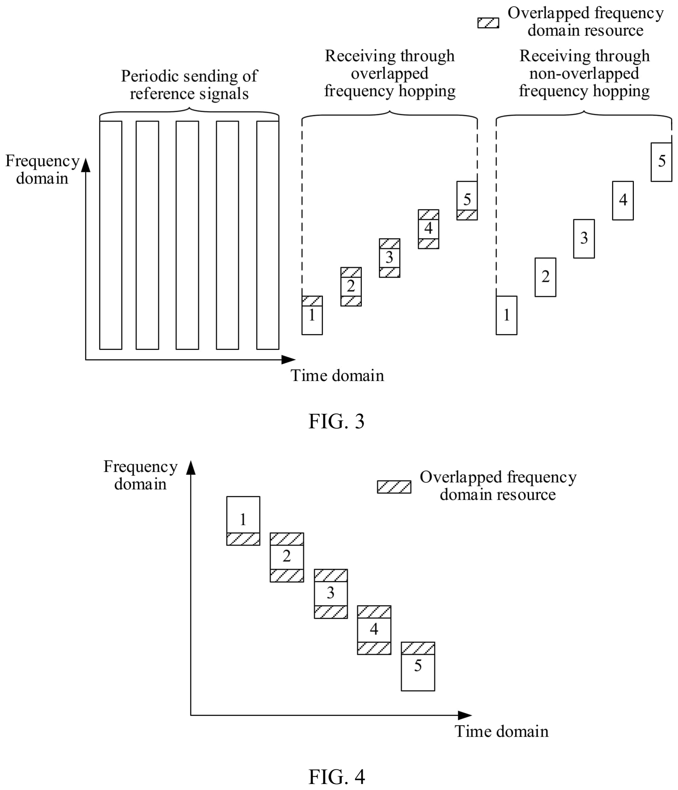

It may be understood that, reference signals may alternatively be transmitted in a manner shown in FIG. 3 other than sending a narrowband reference signal in each time unit in the frequency hopping manner (as shown in FIG. 1 and FIG. 2). As shown in FIG. 3, a transmit end (for example, a network device or a terminal device) may alternatively periodically send wide-bandwidth reference signals, and a receive end may receive reference signals through overlapped frequency hopping or non-overlapped frequency hopping, to reduce power consumption and complexity of the receive end.

It should be understood that the resources (or referred to as frequency hopping patterns (frequency hopping patterns)) in the frequency hopping shown in FIG. 1 and FIG. 2 are merely examples, and another frequency hopping pattern may alternatively be used. Details are described below.

6. Frequency hopping pattern:

To accurately estimate a random phase error, a receive end expects that two frequency domain resources adjacent in frequency domain in the frequency hopping pattern are also adjacent in time domain, to be specific, a frequency domain resource corresponding to a $1^{st}$ time unit and a frequency domain resource corresponding to a $2^{nd}$ time unit are adjacent in frequency domain. To ensure that two frequency domain resources adjacent in frequency domain are also adjacent in time domain, frequency domain positions of frequency domain resources in the frequency hopping pattern increase or decrease sequentially with time units, and are consecutive in frequency domain or are partially overlapped. For example, in FIG. 1, a frequency domain position of the frequency domain resource #1 corresponding to the $1^{st}$ time unit to a frequency domain position of the frequency domain resource #5 corresponding to the $5^{th}$ time unit increase sequentially.

It may be understood that, based on relationships between a plurality of frequency domain resources for frequency hopping in frequency hopping patterns, the frequency hopping patterns in embodiments of this application may be classified into a frequency hopping pattern 1, a frequency hopping pattern 2, and a frequency hopping pattern 3. For the frequency hopping pattern 1 and the frequency hopping pattern 2, two frequency domain resources adjacent in frequency domain are also adjacent in time domain. For the frequency hopping pattern 3, there are two frequency domain resources adjacent in frequency domain but not adjacent in time domain.

The following separately describes the frequency hopping pattern 1 to the frequency hopping pattern 3.

6.1. Frequency hopping pattern 1:

The frequency hopping pattern 1 may be referred to as a staircase pattern (staircase pattern) or a non-wrapped staircase pattern (non-wrapped staircase pattern). In the frequency hopping pattern 1, frequency domain positions of a plurality of frequency domain resources for frequency hopping increase or decrease sequentially with time units. In other words, a frequency hopping manner may be frequency hopping in a frequency increasing direction or frequency hopping in a frequency decreasing direction. In the frequency hopping pattern 1, a frequency domain resource corresponding to a $1^{st}$ time unit is a frequency domain resource whose frequency domain position is the lowest or highest in the plurality of frequency domain resources for frequency hopping.

For example, FIG. 1 shows a frequency hopping pattern in which the frequency domain positions of the plurality of frequency domain resources increase sequentially with the time units, and the frequency domain resource #1 corresponding to the $1^{st}$ time unit is a frequency domain resource whose frequency domain position is the lowest in the plurality of frequency domain resources. It may be understood that a frequency hopping pattern in which the plurality of frequency domain resources decrease sequentially with the time units, for example, a frequency hopping pattern shown in FIG. 4, is opposite to that in FIG. 1. In FIG. 4, a frequency domain position of a frequency domain resource #1 corresponding to a $1^{st}$ time unit to a frequency domain position of a frequency domain resource #5 corresponding to a $5^{th}$ time unit decrease sequentially, and the frequency domain position of the frequency domain resource #1 is a frequency domain resource whose frequency domain position is the highest in the plurality of frequency domain resources.

It may be understood that the frequency domain position of the frequency domain resource may be a center frequency of the frequency domain resource, a lowest frequency domain position of the frequency domain resource, a highest frequency domain position of the frequency domain resource, a frequency domain position of a specific sub-unit in frequency domain (for example, an RB or a subcarrier) in the frequency domain resource, or another parameter, for example, an RB index or a subcarrier index, representing (or indicating or reflecting) the frequency domain position of the frequency domain resource. This is not specifically limited in embodiments of this application. The frequency domain resource may include a plurality of RBs, a plurality of REs, or a plurality of subcarriers. A unit of the frequency domain resource may be an RB, an RE, Hz, kHz, MHz, or the like. Details are not described in this application.

For the frequency hopping in the frequency increasing direction:
A frequency domain start position of a frequency domain resource may be a lowest frequency domain position of the frequency domain resource, for example, a lower bound (or referred to as a lower-bound frequency), a lower limit (or referred to as a lower-limit frequency), or a lowest frequency of a frequency range of the frequency domain resource. For example, the frequency domain start position of the frequency domain resource may be a start RB corresponding to the frequency domain resource, a start RE corresponding to the frequency domain resource, or a start subcarrier corresponding to the frequency domain resource.

A frequency domain end position of a frequency domain resource may be a highest frequency domain position of the frequency domain resource, for example, an upper bound (or referred to as an upper-bound frequency), an upper limit (or referred to as an upper-limit frequency), or a highest frequency of a frequency range of the frequency domain resource. For example, the frequency domain end position of the frequency domain resource may be an end RB corresponding to the frequency domain resource, an end RE corresponding to the frequency domain resource, or an end subcarrier corresponding to the frequency domain resource. It may be understood that, for the frequency hopping in the frequency domain increasing direction, the frequency domain end position of the frequency domain resource may also be referred to as a termination position, an endpoint position, or the like of the frequency domain resource. This is not specifically limited.

For the frequency hopping in the frequency decreasing direction:
A frequency domain start position of a frequency domain resource may be a highest frequency domain position of the frequency domain resource, for example, an upper bound (or referred to as an upper-bound frequency), an upper limit (or referred to as an upper-limit frequency), or a highest frequency of a frequency range of the frequency domain resource. For example, the frequency domain start position of the frequency domain resource may be a start RB, an end RE, or an end subcarrier corresponding to the frequency domain resource. This is not limited.

A frequency domain end position of a frequency domain resource may be a lowest frequency domain position of the frequency domain resource, for example, a lower bound (or referred to as a lower-bound frequency), a lower limit (or referred to as a lower-limit frequency), or a lowest frequency of a frequency range of the frequency domain resource. For example, the frequency domain end position of the frequency domain resource may be an end RB, an end RE, or an end subcarrier corresponding to the frequency domain resource. This is not limited.

It should be understood that the frequency domain position of the frequency domain resource is uniformly described herein, and details are not described below again.

6.2. Frequency hopping pattern 2:

The frequency hopping pattern 2 may also be referred to as a wrapped staircase pattern (wrapped staircase pattern). A main difference of the frequency hopping pattern 2 from the frequency hopping pattern 1 lies in: A frequency domain resource corresponding to a $1^{st}$ time unit is not a frequency domain resource whose frequency domain position is the lowest or highest in a plurality of frequency domain resources (for frequency hopping). It may be understood that, in the frequency hopping pattern 2, there may be two cases in terms of frequency hopping directions. The following uses a case 1 and a case 2 to further describe the frequency hopping pattern 2.

Case 1:

In the case 1, frequency domain positions of the plurality of frequency domain resources increase sequentially with time units on the whole, that is, frequency hopping is performed in a frequency increasing direction. It should be understood that the frequency hopping pattern 2 may include M (for example, M is an integer greater than or equal to 2) frequency domain resources, and the M frequency domain resources correspond to M time units. That is, this is specific to a frequency hopping pattern 2 in one periodicity. The following provides descriptions by using a case 1a and a case 1b based on that a frequency domain resource corresponding to a $K^{th}$ time unit is a frequency domain resource whose frequency domain position is the highest or a frequency domain resource whose frequency domain resource position is the lowest in the M frequency domain resources.

Case 1a:

The frequency domain resource corresponding to the $K^{th}$ time unit is the frequency domain resource whose frequency domain position is the highest in the M frequency domain resources. The sequential increase with the time units on the whole may mean: Frequency domain positions of frequency domain resources corresponding to the $1^{st}$ time unit to the $K^{th}$ time unit increase sequentially, and frequency domain positions of frequency domain resources corresponding to a $(K+1)^{th}$ time unit to an $M^{th}$ time unit increase sequentially. The frequency domain resource corresponding to the $(K+1)^{th}$ time unit is the frequency domain resource whose frequency domain position is the lowest in the M frequency domain resources.

In other words, in the case 1, after frequency hopping is performed to the frequency domain resource whose frequency domain position is the highest in the M frequency domain resources, frequency hopping continues from a frequency domain resource corresponding to a next time unit, which is the frequency domain resource whose frequency domain position is the lowest in the M frequency domain resources.

It may be understood that, in the case 1a, the foregoing frequency hopping from the frequency domain resource whose frequency domain position is the highest to the frequency domain resource whose frequency domain position is the lowest may be referred to as wrapping (wrap). For example, a $k^{th}$ time unit may be referred to as a time unit that is before the wrapping, where k is a positive integer less than or equal to K; and the $(K+1)^{th}$ time unit may be referred to as a wrapping time unit. The following uses this example for description.

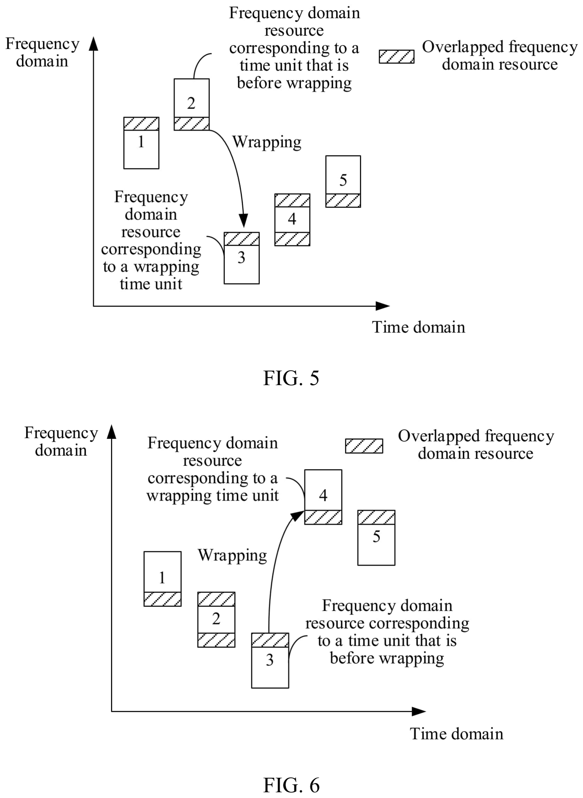

For example, FIG. 5 is a diagram of the frequency hopping pattern 2 according to an embodiment of this application. As shown in FIG. 5, the frequency hopping pattern 2 includes five frequency domain resources and five time units, and an $i^{th}$ time unit corresponds to an $i^{th}$ frequency domain resource, where $1 \leq i \leq 5$. A frequency domain resource #1 is not a frequency domain resource whose frequency domain position is the lowest in the five frequency domain resources, frequency domain positions of frequency domain resources corresponding to a $1^{st}$ time unit and a $2^{nd}$ time unit increase sequentially, frequency domain positions of frequency domain resources corresponding to a $3^{rd}$ time unit to a $5^{th}$ time unit increase sequentially, the frequency domain resource #2 corresponding to the $2^{nd}$ time unit is a frequency domain resource whose frequency domain position is the highest, and the frequency domain resource #3 corresponding to the $3^{rd}$ time unit is the frequency domain resource whose frequency domain position is the lowest. In other words, wrapping starts from the $2^{nd}$ time unit, that is, the $1^{st}$ time unit and the $2^{nd}$ time unit are time units that are before the wrapping, and the $3^{rd}$ time unit is a wrapping time unit.

Case 1b:

The frequency domain resource corresponding to the $K^{th}$ time unit is the frequency domain resource whose frequency domain position is the lowest in the M frequency domain resources. The sequential increase with the time units on the whole may mean: Frequency domain positions of frequency domain resources corresponding to the $1^{st}$ time unit to a $(K-1)^{th}$ time unit increase sequentially, and frequency domain positions of frequency domain resources corresponding to the $K^{th}$ time unit to an $M^{th}$ time unit increase sequentially. The frequency domain resource corresponding to the $(K-1)^{th}$ time unit is the frequency domain resource whose frequency domain position is the highest in the M frequency domain resources.

In other words, in the case 1b, wrapping starts from the $(K-1)^{th}$ time unit. To be specific, a $k^{th}$ time unit is a time unit that is before the wrapping, where k is a positive integer less than K; and the $K^{th}$ time unit is a wrapping time unit.

Case 2:

In the case 2, frequency domain positions of the plurality of frequency domain resources decrease sequentially with time units on the whole, that is, frequency hopping is performed in a frequency decreasing direction.

It should be understood that, this case is the same as the foregoing case 1, and descriptions are provided by using a case 2a and a case 2b based on that a frequency domain resource corresponding to a $K^{th}$ time unit is a frequency domain resource whose frequency domain position is the highest or a frequency domain resource whose frequency domain position is the lowest in M frequency domain resources.

Case 2a:

The frequency domain resource corresponding to the $K^{th}$ time unit is the frequency domain resource whose frequency domain position is the highest in the M frequency domain resources. The sequential decrease with the time units on the whole may mean: Frequency domain positions of frequency domain resources corresponding to the $1^{st}$ time unit to a $(K-1)^{th}$ time unit decrease sequentially, and frequency domain positions of frequency domain resources corresponding to the $K^{th}$ time unit to an $M^{th}$ time unit decrease sequentially. The frequency domain resource corresponding to the $(K-1)^{th}$ time unit is the frequency domain resource whose frequency domain position is the lowest in the M frequency domain resources.

In other words, in the case 2, after frequency hopping is performed to the frequency domain resource whose frequency domain position is the lowest in the M frequency domain resources, frequency hopping continues from a frequency domain resource corresponding to a next time unit, which is the frequency domain resource whose frequency domain position is the highest in the M frequency domain resources.

It may be understood that, in the case 2, the foregoing frequency hopping from the frequency domain resource whose frequency domain position is the lowest to the frequency domain resource whose frequency domain position is the highest may be referred to as wrapping (wrap). A $k^{th}$ time unit is a time unit that is before the wrapping, where k is a positive integer less than K; and the $K^{th}$ time unit is a wrapping time unit.

For example, FIG. 6 is another diagram of the frequency hopping pattern 2 according to an embodiment of this application. As shown in FIG. 6, the frequency hopping pattern 2 includes five frequency domain resources and five time units, and an $i^{th}$ time unit corresponds to an $i^{th}$ frequency domain resource, where $1 \le i \le 5$. A frequency domain resource #1 is not a frequency domain resource whose frequency domain position is the highest in the five frequency domain resources, frequency domain positions of frequency domain resources corresponding to a $1^{st}$ time unit to a $3^{rd}$ time unit decrease sequentially, frequency domain positions of frequency domain resources corresponding to a $4^{th}$ time unit and a $5^{th}$ time unit decrease sequentially, the frequency domain resource #3 corresponding to the $3^{rd}$ time unit is a frequency domain resource whose frequency domain position is the lowest, and the frequency domain resource #4 corresponding to the $4^{th}$ time unit is the frequency domain resource whose frequency domain position is the highest. In other words, wrapping starts from the $3^{rd}$ time unit, that is, the $3^{rd}$ time unit is a time unit that is before the wrapping, and the $4^{th}$ time unit is a wrapping time unit.

Case 2b:

The frequency domain resource corresponding to the $K^{th}$ time unit is the frequency domain resource whose frequency domain position is the lowest in the M frequency domain resources. The sequential decrease with the time units on the whole may mean: Frequency domain positions of frequency domain resources corresponding to the $1^{st}$ time unit to the $K^{th}$ time unit decrease sequentially, and frequency domain positions of frequency domain resources corresponding to a $(K+1)^{th}$ time unit to an $M^{th}$ time unit decrease sequentially. The frequency domain resource corresponding to the $(K+1)^{th}$ time unit is the frequency domain resource whose frequency domain position is the highest in the M frequency domain resources.

In other words, in the case 2b, wrapping starts from the $K^{th}$ time unit. To be specific, the $K^{th}$ time unit is a time unit that is before the wrapping, and the $(K+1)^{th}$ time unit is a wrapping time unit. For example, when k is less than or equal to K, a $k^{th}$ time unit may be referred to as a time unit that is before the wrapping. The $(K+1)^{th}$ time unit may be referred to as the wrapping time unit.

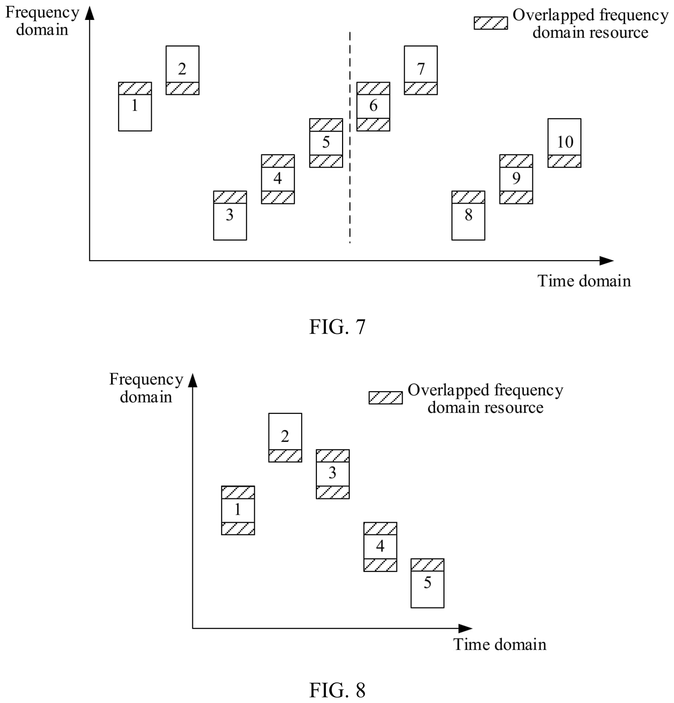

It should be understood that when the frequency hopping pattern 2 is periodic, two adjacent frequency hopping patterns 2 may form a layout in the frequency hopping pattern 1. For example, as shown in FIG. 7, after two frequency hopping patterns 2 shown in FIG. 5 are concatenated, a frequency domain resource #3 to a frequency domain resource #7 may form the layout in the frequency hopping pattern 1.

6.3. Frequency hopping pattern 3:

The frequency hopping pattern 3 may also be referred to as a non-staircase pattern (non-staircase pattern). In the frequency hopping pattern 3, there are two frequency domain resources adjacent in frequency domain but not adjacent in time domain. For example, as shown in FIG. 8, a frequency domain resource #1 corresponding to a $1^{st}$ time unit and a frequency domain resource #3 corresponding to a $3^{rd}$ time unit are adjacent in frequency domain, but are spaced by one time unit in time domain.

It may be understood that, for the frequency hopping pattern 3, because the two frequency domain resources adjacent in frequency domain are not adjacent in time domain, a receive end needs to provide further support to estimate the random phase error according to an optimization algorithm.

It should be understood that the examples in FIG. 4 to FIG. 8 are described by using the overlapped frequency hopping in the solution 1 as an example. Examples corresponding to the solution 2 are similar, and a difference lies in that there is no overlapped frequency domain resource. Details are not described herein.

7. Frequency hopping configuration information:

The foregoing frequency hopping pattern may be configured by using RRC signaling. The frequency hopping configuration information may include the following plurality of parameters. Descriptions are separately provided below.

Parameter a: is a frequency domain start position of a frequency domain resource corresponding to a $1^{st}$ time unit, namely, a frequency domain start position of an initial hop, for example, a start RB of the frequency domain resource corresponding to the $1^{st}$ time unit.

Parameter b: is a bandwidth of a frequency domain resource corresponding to an $i^{th}$ time unit in N time units. For example, using an example in which a bandwidth occupied by each time of frequency hopping is the same, the bandwidth of the frequency domain resource corresponding to the $i^{th}$ time unit may be the bandwidth or a quantity of RBs occupied by each time of frequency hopping.

Parameter c: is a corresponding frequency domain offset between two adjacent time units. The corresponding frequency domain offset between the two adjacent time units may be an offset in frequency domain between frequency domain resources corresponding to the two adjacent time units. This is uniformly described herein, and details are not described below.

The frequency domain value in frequency domain between the frequency domain resources corresponding to the two adjacent time units may be, for example, a frequency difference, a bandwidth value, or a quantity of occupied RBs between a frequency domain end position of the frequency domain resource corresponding to the $i^{th}$ time unit and a frequency domain start position of a frequency domain resource corresponding to an $(i+1)^{th}$ time unit. For another example, the offset may be a frequency difference, a bandwidth value, or a quantity of occupied RBs between a center frequency of the frequency domain resource corresponding to the $i^{th}$ time unit and a center frequency of a frequency domain resource corresponding to an $(i+1)^{th}$ time unit.

Parameter d: is an overlapped size between the frequency domain resource corresponding to the $i^{th}$ time unit and a frequency domain resource corresponding to a $j^{th}$ time unit in the N time units, where $1 \leq i \neq j \leq N$, and the overlapped size may be a bandwidth, a quantity of RBs, or the like. It may be understood that the parameter d may alternatively indicate an overlapped size between two frequency domain resources adjacent in frequency domain. For the solution 1, namely, the overlapped frequency hopping, the parameter d may alternatively be determined based on the parameter c. For the solution 2, namely, the non-overlapped frequency hopping, the frequency hopping configuration information may not include the parameter d, or the overlapped size indicated by the parameter d is 0.

In a possible implementation, a frequency domain resource corresponding to each time unit in the N time units has a same bandwidth, and a corresponding frequency domain offset between any two adjacent time units in the N time units is the same, or the overlapped size between the frequency domain resource corresponding to the $i^{th}$ time unit and the frequency domain resource corresponding to the $j^{th}$ time unit in the N time units is the same. In this way, configuration is simple, so that signaling overheads and complexity of a transmit end can be reduced. It may be understood that the foregoing parameters may alternatively vary. This is not specifically limited in embodiments of this application.

Parameter e: is a quantity of frequency hopping times or a quantity of frequency hops, namely, a value of N in the N time units in one frequency hopping pattern periodicity.

It may be understood that the overlapped size between the frequency domain resource corresponding to the $i^{th}$ time unit and the frequency domain resource corresponding to the $j^{th}$ time unit in the N time units may be an overlapped size between two frequency domain resources adjacent in frequency domain. In a frequency hopping pattern, an overlapped size between any two adjacent frequency domain resources may be the same, and therefore the overlapped size between the two frequency domain resources adjacent in frequency domain may be replaced with a frequency domain overlapped bandwidth.

It may be understood that frequency hopping resources in the frequency hopping pattern 1 may be determined based on the frequency hopping configuration information. For example, in the frequency hopping pattern 1, a quantity of frequency hops in one frequency hopping pattern periodicity is N, namely, the N time units. Each time unit in the N time units is for sending one reference signal, in other words, the frequency hopping pattern 1 includes N frequency domain resources. In the frequency hopping pattern 1, a frequency domain start position of the frequency domain resource corresponding to the $1^{st}$ time is the frequency domain resource corresponding to the $K^{th}$ time unit. In other words, in the frequency hopping pattern 1, a frequency domain start position of an initial hop is a frequency domain resource whose frequency domain position is the lowest or highest in the N frequency domain resources. To be specific, a frequency domain resource corresponding to each time domain unit in the N time domain units in the frequency hopping pattern 1 may be determined based on a characteristic that the frequency domain resources in the frequency hopping pattern 1 increase or decrease sequentially with the time units and with reference to the bandwidth of the frequency domain resource corresponding to the $i^{th}$ time unit, the corresponding frequency domain offset between the two adjacent time units, the quantity of frequency hopping times, or the like.

However, the foregoing frequency hopping configuration information is not applicable to the frequency hopping pattern 2 and the frequency hopping pattern 3, and there are specifically the following two problems:

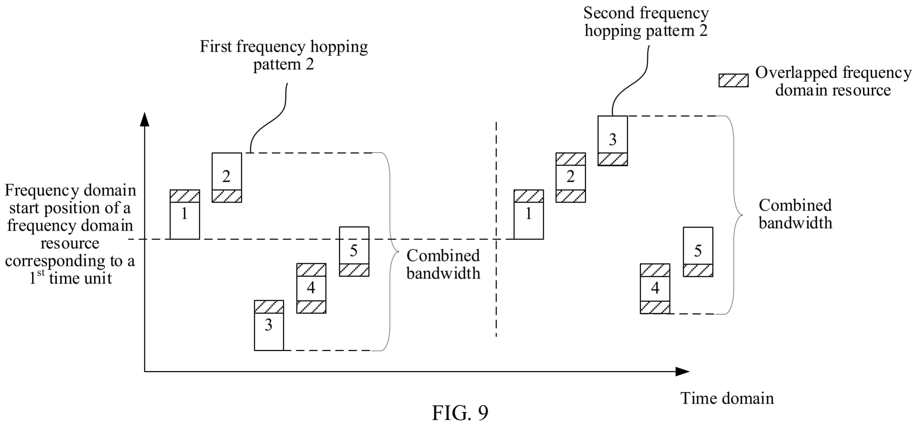

Problem 1: Resources used when the transmit end sends reference signals are related to network scheduling. To be specific, the frequency domain resource corresponding to the $1^{st}$ time unit may not be a frequency domain resource whose frequency domain position is the highest or a frequency domain resource whose frequency domain position is the lowest in a plurality of frequency domain resources for frequency hopping. In other words, the frequency hopping pattern 2 is used in a network to send or receive reference signals. However, for the frequency hopping pattern 2, a unique frequency hopping pattern 2 cannot be determined by using the frequency hopping configuration information. For example, as shown in FIG. 9, there may be a plurality of possible frequency hopping patterns such as a first frequency hopping pattern 2 and a second frequency hopping pattern 2 based on the frequency hopping configuration information. In this case, when sending reference signals based on the frequency hopping configuration information, a terminal device may send the reference signals by using any one of the frequency hopping patterns 2 (for example, selecting the first frequency hopping pattern 2). In a possible case, the network considers that the terminal device uses the second frequency hopping pattern 2, considers that a non-overlapped part of a $3^{rd}$ frequency domain resource in the first frequency hopping pattern 2 is idle, and may schedule another terminal device to send data or a reference signal on the 3rd frequency domain resource (the non-overlapped part). Consequently, the two terminal devices send data or reference signals on the 3rd frequency domain resource (the non-overlapped part). This causes mutual interference.

Problem 2: When the terminal device supports the frequency hopping pattern 3, a frequency domain resource corresponding to each of a plurality of time units after a first time unit cannot be determined by using the frequency hopping configuration information, that is, frequency domain resources for subsequent hops cannot be determined, and the interference problem in the foregoing problem 1 also exists.

Based on the foregoing problems, embodiments of this application provide the following technical solutions. The following describes the technical solutions in embodiments of this application with reference to the accompanying drawings in embodiments of this application.

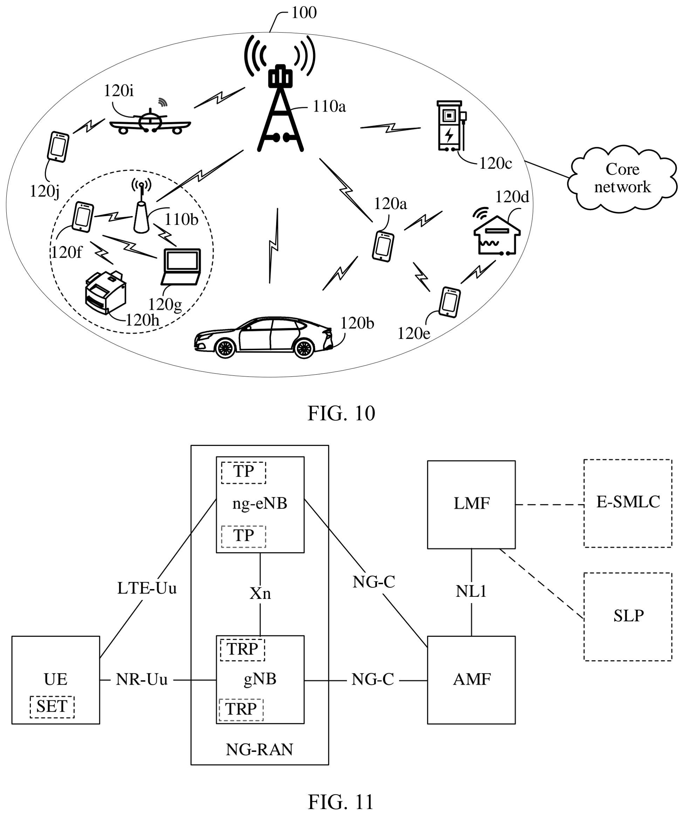

For ease of understanding of embodiments of this application, a service application scenario of this application is described by using an architecture of a communication system shown in FIG. 10 as an example. It should be understood that the architecture of the communication system and the service application scenario described in embodiments of this application are intended to describe the technical solutions in embodiments of this application more clearly, but are not intended to limit the technical solutions provided in embodiments of this application. A person of ordinary skill in the art may know that, as the communication architecture evolves and a new service application scenario emerges, the technical solutions provided in embodiments of this application are also applicable to a similar technical problem.

FIG. 10 is a diagram of an architecture of a communication system 100 according to an embodiment of this application. An example in which the communication system 100 includes at least one network device (for example, 110a or 110b in FIG. 10) and at least one terminal device (for example, 120a to 120j in FIG. 10) connected to the network device is used in FIG. 10 for description. It should be understood that the network device may be connected to a core network (core network, CN) in a wireless or wired manner. A CN device in the CN and the network device may be different physical devices, or may be a same physical device that integrates a logical function of the CN and a logical function of a radio access network. It may be understood that quantities of network devices and terminal devices in FIG. 10 are merely examples, and may be larger or smaller. This is not specifically limited in this embodiment of this application.

FIG. 11 is a diagram of an example application scenario applicable to an embodiment of this application, and shows a service-based positioning service network architecture. In a 5G core network (5G core network, 5GC)-based positioning architecture, functions of functional entities are as follows: A location management function (location management function, LMF) is responsible for supporting different types of location services related to a target terminal device, including positioning the terminal device and transferring assistance data to the terminal device. The LMF may perform the following information exchange with a 4G base station (for example, an ng-eNB) or a 5G base station (for example, a gNB) and the terminal device: performing information exchange with the ng-eNB/gNB by using an NR positioning protocol A (NR positioning protocol annex, NRPPa) message, for example, obtaining configuration information for a PRS, configuration information for an SRS, cell timing, and cell location information; or performing transmission of UE capability information, assistance information, or measurement information with the terminal device by using an LTE positioning protocol (LTE positioning protocol, LPP) message. An access and mobility management function (access and mobility management function, AMF) may receive a location service request related to the target terminal device from a 5GC location server (location server, LCS) entity, or the AMF may start some location services on behalf of the specific target terminal device, and forward the location service request to the LMF. If location calculation is completed on a terminal device side, after obtaining location information reported by the terminal device, the AMF returns the related location information to the 5GC LCS entity. The terminal device may measure downlink signals from an NG-RAN and another source to support positioning. The ng-eNB/gNB may provide configuration information for the target terminal device, and transfer the configuration information to the LMF. In addition, in FIG. 11, NL1 represents an NL1 interface, NG-C represents an NG-C interface, LTE-Uu represents an LTE-Uu interface, NR-Uu represents an NR-Uu interface, and Xn represents a connection between the ng-eNB and the gNB.

The following separately describes the network device and the terminal device.

Network device:

In a possible implementation, the network device may be a device that communicates with the terminal device. The network device may also be referred to as an access network, a RAN device, an access node, a RAN entity, a RAN node, or the like. As shown in FIG. 10, a plurality of network devices in the communication system 100 may be nodes of a same type, or may be nodes of different types. In some scenarios, the network device and the terminal device are relative. For example, the network element 120i in FIG. 10 may be a helicopter or an uncrewed aerial vehicle, and may be configured as a mobile base station. For the terminal device 120j that accesses the communication system 100 via the network element 120i, the network element 120i may be a base station 110a. However, for the base station 110a, the network element 120i is a terminal device. Both the network device and the terminal device are sometimes referred to as communication apparatuses. For example, the network elements 110a and 110b in FIG. 10 may be understood as communication apparatuses having functions of a base station, and the network elements 120a to 120j may be understood as communication apparatuses having functions of a terminal.

In a possible scenario, the network device may be a transmission reception point (transmission reception point, TRP), a base station, a remote radio unit (remote radio unit, RRU) or a baseband unit (baseband unit, BBU) (which may also be referred to as a digital unit (digital unit, DU)) of a split base station, a broadband network gateway (broadband network gateway, BNG), an aggregation switch, a non-3GPP access device, a relay station, an access point, or the like. The network device may be a macro base station (for example, the network element 110a in FIG. 10), a micro base station or an indoor base station (for example, the network element 110b in FIG. 10), a relay node or a donor node, or a radio controller in a CRAN scenario. Optionally, the network device may alternatively be a server, a wearable device, a vehicle, a vehicle-mounted device, or the like. For example, a network device in a V2X system may be a road side unit (road side unit, RSU). In addition, the network device in embodiments of this application may be an eNB or an eNodeB (evolved NodeB) in LTE, a radio controller in a CRAN scenario, a base station (for example, a next generation NodeB (gNodeB, gNB)) in a 5G communication system, a base station in a future evolved system (for example, a 6G communication system), or the like. This is not specifically limited herein.

In a possible implementation, the network device may include a central unit (central unit, CU), a DU, a CU-control plane (control plane, CP), a CU-user plane (user plane, UP), or a radio unit (radio unit, RU). The network device may further include an active antenna unit (active antenna unit, AAU). The CU implements some functions of the network device, and the DU implements some functions of the network device. For example, the CU is responsible for processing a non-real-time protocol and service, and implementing a function of an RRC layer and/or a function of a packet data convergence protocol (packet data convergence protocol, PDCP) layer. The DU is responsible for processing a physical layer protocol and a real-time service, and implementing functions of a radio link control (radio link control, RLC) layer, a media access control (media access control, MAC) layer, and a PHY layer. The AAU implements a part of processing functions of the physical layer, radio frequency processing, and a function related to an active antenna. Because information at the RRC layer eventually becomes information at the physical (physical, PHY) layer, or is converted from information at the PHY layer, in this architecture, higher layer signaling, for example, RRC signaling, may also be considered as being sent by the DU or sent by the DU and the AAU. It may be understood that the network device may be a device including one or more of a CU node, a DU node, or an AAU node. In addition, the CU may be classified as a network device in a RAN or a network device in a CN. This is not limited in embodiments of this application.

It should be understood that in different systems, the CU (or the CU-CP and the CU-UP), the DU, or the RU may alternatively have different names, but a person skilled in the art may understand meanings thereof. For example, in an ORAN system, the CU may also be referred to as an open CU (open CU, O-CU), the DU may also be referred to as an open DU (open DU, O-DU), the CU-CP may also be referred to as an open CU-CP (open CU-CP, O-CU-CP), the CU-UP may also be referred to as an open CU-UP (open CU-UP, O-CU-UP), and the RU may also be referred to as an open RU (open RU, O-RU). For ease of description, the CU, the CU-CP, the CU-UP, the DU, and the RU are used as examples in embodiments of this application for description. Any one of the CU (or the CU-CP and the CU-UP), the DU, and the RU in embodiments of this application may be implemented by a software module, a hardware module, or a combination of a software module and a hardware module.

Terminal device:

In a possible implementation, the terminal device may be a device, for example, a terminal or a chip that may be used in the terminal, configured to implement a wireless communication function. The terminal may be user equipment (user equipment, UE), an access terminal, a terminal unit, a terminal station, a mobile station, a remote station, a remote terminal, a mobile device, a terminal agent, a terminal apparatus, or the like in a 5G network or a future evolved public land mobile network (public land mobile network, PLMN). The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a VR terminal device, an AR terminal device, a wireless terminal in industrial control (industrial control), a wireless terminal in self-driving (self-driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), or the like. In a possible implementation, the terminal device may be mobile or fixed.

The following describes structures of the network device and the terminal device.

In a possible implementation, the network device and the terminal device in embodiments of this application may also be referred to as communication apparatuses, and each may be a general-purpose device or a special-purpose device. This is not specifically limited in embodiments of this application.

In a possible implementation, related functions of the terminal device or the network device in embodiments of this application may be implemented by one device, may be jointly implemented by a plurality of devices, or may be implemented by one or more functional modules in one device. This is not specifically limited in embodiments of this application. It may be understood that the foregoing function may be a network element in a hardware device, a software function running on dedicated hardware, a combination of hardware and software, or a virtualization function instantiated on a platform (for example, a cloud platform).

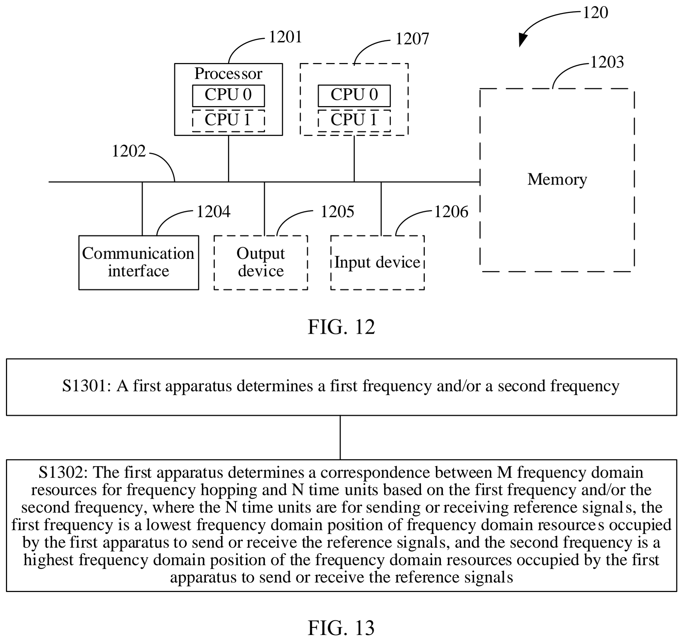

For example, the related functions of the network device or the terminal device in embodiments of this application may be implemented by a communication apparatus 120 in FIG. 12. FIG. 12 is a diagram of a structure of the communication apparatus 120 according to an embodiment of this application. The communication apparatus 120 includes one or more processors 1201. Optionally, the communication apparatus may further include a communication line 1202 and at least one communication interface (an example in which a communication interface 1204 and one processor 1201 are included is merely used in FIG. 12 for description). Optionally, the communication apparatus 120 may further include a memory 1203.

The processor 1201 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 1202 may include a path for connecting different components.

The communication interface 1204 may be a transceiver module configured to communicate with another device or a communication network, for example, an Ethernet, a RAN, or a wireless local area network (wireless local area network, WLAN). For example, the transceiver module may be an apparatus like a transceiver or a transceiver machine. In a possible implementation, the communication interface 1204 may alternatively be a transceiver circuit in the processor 1201, and is configured to implement signal input and signal output of the processor.

The memory 1203 may be an apparatus that has a storage function. For example, the memory 1203 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a magnetic disk storage medium or another magnetic storage device, or any other medium that can carry or store expected program code in a form of an instruction or a data structure and that can be accessed by a computer, but is not limited thereto. The memory may exist independently, and is connected to the processor through the communication line 1202. The memory may alternatively be integrated with the processor.

Optionally, the memory 1203 is configured to store computer-executable instructions for executing the solutions in this application, and the processor 1201 controls the execution. The processor 1201 is configured to execute the computer-executable instructions stored in the memory 1203, to implement methods provided in embodiments of this application.

Alternatively, in embodiments of this application, the processor 1201 may implement a processing-related function in methods provided in the following embodiments of this application, and the communication interface 1204 is responsible for communicating with another device or a communication network. This is not specifically limited in embodiments of this application.

In a possible implementation, the memory 1203 in this embodiment of this application may be further configured to store information or parameters, for example, a first frequency, a second frequency, a BWP, frequency hopping configuration information, or a reference signal, that are described in the following embodiments.

The computer-executable instructions in embodiments of this application may also be referred to as application program code. This is not specifically limited in embodiments of this application.

During specific implementation, in an embodiment, the processor 1201 may include one or more CPUs, for example, a CPU 0 and a CPU 1 in FIG. 12.

During specific implementation, in an embodiment, the communication apparatus 120 may include a plurality of processors, for example, the processor 1201 and a processor 1207 in FIG. 12. Each of these processors may be a single-core (single-CPU) processor, or may be a multicore (multi-CPU) processor. The processor herein may be one or more devices, circuits, and/or processing cores configured to process data (for example, computer program instructions).

During specific implementation, in an embodiment, the communication apparatus 120 may further include an output device 1205 and an input device 1206. The output device 1205 communicates with the processor 1201, and may display information in a plurality of manners.

The communication apparatus 120 may be a general-purpose apparatus or a special-purpose apparatus. For example, the communication apparatus 120 may be a desktop computer, a portable computer, a network server, a personal digital assistant (personal digital assistant, PDA), a mobile phone, a tablet computer, a wireless terminal device, an embedded device, or a device having a structure similar to that in FIG. 12. A type of the communication apparatus 120 is not limited in this embodiment of this application.

It should be understood that, for the "problem 1" above, embodiments of this application provide a resource determining method. The method may be performed by a first apparatus. The first apparatus may be the terminal device in FIG. 10 to FIG. 12 or a module or unit of the terminal device (for example, a chip, a chip system, a chip circuit, or a circuit of the terminal device). Alternatively, the first apparatus may be the network device in FIG. 10 to FIG. 12 or a module or unit of the network device (for example, a chip, a chip system, a chip circuit, or a circuit of the terminal device).

In a possible implementation, the first apparatus determines a first frequency and/or a second frequency, and determines a correspondence between M frequency domain resources for frequency hopping and N time units based on the first frequency and/or the second frequency, where the N time units are for sending or receiving reference signals. The first frequency is a lowest frequency domain position of frequency domain resources occupied for sending or receiving the reference signals, and the second frequency is a highest frequency domain position of the frequency domain resources occupied for sending or receiving the reference signals, where M is an integer greater than 1, and N is an integer greater than 1. In this way, the first apparatus may determine the first frequency and/or the second frequency, and determine the correspondence between the M frequency domain resources for frequency hopping and the N time units, so that frequency hopping resources for sending or receiving the reference signals can be uniquely determined, to avoid sending or receiving a reference signal on a same frequency hopping resource as another apparatus, and therefore avoid interference. This helps improve positioning accuracy.

It should be further understood that, for the "problem 2" above, embodiments of this application provide a resource determining method. The method may be performed by a first apparatus. The first apparatus may be the terminal device in FIG. 10 to FIG. 12 or a module or unit of the terminal device (for example, a chip, a chip system, a chip circuit, or a circuit of the terminal device).

In a possible implementation, the first apparatus receives frequency hopping configuration information, and determines a correspondence between N time units and M frequency domain resources based on the frequency hopping configuration information. The frequency hopping configuration information indicates that an $i^{th}$ time unit in the N time units is associated with a $j^{th}$ frequency domain resource in the M frequency domain resources. The M frequency domain resources are for frequency hopping, and the N time units are for sending or receiving reference signals, where M is an integer greater than 1, N is an integer greater than 1, $1 \leq i \leq N$, and $1 \leq j \leq M$. In this way, the first apparatus may determine a correspondence between each time unit in the N time units and each frequency domain resource in the M frequency domain resources based on the frequency hopping configuration information, so that frequency hopping resources for sending or receiving the reference signals can be uniquely determined, to avoid sending or receiving a reference signal on a same frequency hopping resource as another apparatus, and therefore avoid interference. This helps improve positioning accuracy.

The foregoing methods provided in embodiments of this application are described below in detail with reference to FIG. 13 to FIG. 20.

It should be understood that, in the following embodiments of this application, a name of a signal between devices or apparatuses, a name of each parameter in a signal, a name of information carried in a signal, or the like is merely an example, and another name may alternatively be used in a specific implementation. This is not specifically limited in embodiments of this application.

FIG. 13 is a schematic flowchart of a resource determining method according to an embodiment of this application. As shown in FIG. 13, the resource determining method includes the following steps:

Step S1301: A first apparatus determines a first frequency and/or a second frequency.

Step S1302: The first apparatus determines a correspondence between M frequency domain resources for frequency hopping and N time units based on the first frequency and/or the second frequency. The N time units are for sending or receiving reference signals, the first frequency is a lowest frequency domain position of frequency domain resources occupied by the first apparatus to send or receive the reference signals, and the second frequency is a highest frequency domain position of the frequency domain resources occupied by the first apparatus to send or receive the reference signals, where M is an integer greater than 1, and N is an integer greater than 1.

The following further describes steps S1301 and S1302.

For step S1301:

It should be understood that step S1301 relates to the first apparatus, the first frequency, and the second frequency. Descriptions are separately provided below.

1. First apparatus:

It should be understood that the first apparatus may be classified into a type 1 and a type 2. Descriptions are separately provided below.

For the type 1:

In a possible implementation, the first apparatus may be the terminal device in FIG. 10 to FIG. 12 or a module or unit of the terminal device. For example, the first apparatus may be a chip, a chip system, a chip circuit, or a circuit of the terminal device. The terminal device may be a REDCAP terminal device, or may be a common terminal device. It may be understood that, that the first apparatus sends the reference signals is applicable to the "scenario 1" above, namely, uplink frequency hopping-based positioning. To be specific, the first apparatus may determine the correspondence between the M frequency domain resources and the N time units that are for sending the reference signals, and determine, based on the correspondence, a frequency hopping pattern for sending the reference signals to a network device. In this way, frequency hopping resources for sending the reference signals can be uniquely determined, to avoid sending a reference signal to the network device on a same frequency hopping resource as another apparatus, and therefore avoid interference.

It may be further understood that, that the first apparatus receives the reference signals is applicable to the "scenario 2" above, namely, downlink frequency hopping-based positioning. To be specific, the network device periodically sends wide-bandwidth reference signals, and the first apparatus receives reference signals from the network device in a frequency hopping manner (a part of the wide-bandwidth reference signal sent by the network device is received each time).

It should be understood that, that the first apparatus receives the reference signals is also applicable to a scenario 3. In the scenario 3, the network device sends narrowband reference signals (for example, PRSs with bandwidths of 20 MHz) to the terminal device in a plurality of time units. Correspondingly, the terminal device receives the narrowband reference signals from the network device in the plurality of time units. In other words, the network device may send a plurality of narrowband reference signals in a frequency hopping manner, and the terminal device may receive the plurality of narrowband reference signals in the frequency hopping manner. To be specific, the first apparatus may determine the correspondence between the M frequency domain resources and the N time units that are for sending the reference signals, and determine, based on the correspondence, a frequency hopping pattern for receiving the reference signals from the network device. In this way, frequency hopping resources for receiving the reference signals from the network device can be uniquely determined, to avoid receiving a reference signal from the network device on an incorrect frequency hopping resource.

For the type 2:

In a possible implementation, the first apparatus may be the network device in FIG. 10 to FIG. 12 or a module or unit of the network device. For example, the first apparatus may be a chip, a chip system, a chip circuit, or a circuit of the network device.

In other words, the first apparatus may determine the correspondence between the M frequency domain resources and the N time units that are for sending the reference signals, and determine, based on the correspondence, a frequency hopping pattern for sending the reference signals. In this way, frequency hopping resources for sending the reference signals by the first apparatus to a terminal device can be uniquely determined, so that the terminal device can receive the reference signals. Further, sending the reference signals by the first apparatus in a frequency hopping manner can reduce power consumption, to meet an energy saving requirement of the first apparatus. Therefore, in this embodiment of this application, positioning accuracy can be further improved when the energy saving requirement of the network device is met. Certainly, a common terminal device may alternatively periodically send wide-bandwidth reference signals, and the network device may receive reference signals in an overlapped frequency hopping or non-overlapped frequency hopping manner, to reduce power consumption and receiving complexity of the network device.

It may be understood that the time unit may also be referred to as a frequency hopping moment, a frequency hopping time domain resource, or the like. For details, refer to the descriptions of the time unit in the "bandwidth-limited positioning scenario" above, and the details are not described again.

2. First frequency and second frequency:

It should be understood that, that the first frequency is the lowest frequency domain position of the frequency domain resources occupied by the first apparatus to send or receive the reference signals may be replaced with: The first frequency is a lowest frequency domain position of frequency domain resources that are allowed to be occupied by the first apparatus to send or receive the reference signals. That the second frequency is the highest frequency domain position of the frequency domain resources occupied by the first apparatus to send or receive the reference signals may be replaced with: The second frequency is a highest frequency domain position of the frequency domain resources that are allowed to be occupied by the first apparatus to send or receive the reference signals. The occupied frequency domain resource may be an occupied frequency range, an occupied BWP, or the like. In other words, the first frequency and/or the second frequency may be associated with a capability of the first apparatus.

It may be understood that the lowest frequency domain position of the frequency domain resource may be the frequency domain start position in the "frequency hopping pattern 1" above, and the frequency domain start position may be, for example, a start RB corresponding to the frequency domain resource, a start RE corresponding to the frequency domain resource, or a start subcarrier corresponding to the frequency domain resource. The highest frequency domain position of the frequency domain resource may be, for example, a highest RB corresponding to the frequency domain resource, a highest RE corresponding to the frequency domain resource, or a highest subcarrier corresponding to the frequency domain resource. For details about the lowest frequency domain position and the highest frequency domain position, refer to the related descriptions in the "frequency hopping pattern 1" above, and the details are not described herein again.

In a possible implementation, the first frequency is a sum of a reference frequency and a first frequency domain offset, and/or the second frequency is a sum of a reference frequency and a second frequency domain offset. The reference frequency is one of the following: a start frequency of a BWP, a highest frequency of the BWP, a center frequency of the BWP, or a reference frequency corresponding to the BWP. For example, the reference frequency corresponding to the BWP may be a point A (point A). For details about the point A, refer to TS 38.211, and the details are not described herein. It should be understood that the reference frequency corresponding to the first frequency may be the same as or different from the reference frequency corresponding to the second frequency. For example, the first frequency may be a sum of the start frequency of the BWP and the first frequency domain offset, and the second frequency is a sum of the highest frequency of the BWP and the second frequency domain offset.

The following further describes the BWP, the first frequency domain offset, and the second frequency domain offset.

2.1. For the BWP:

It may be understood that the BWP may be the initial BWP, the active BWP, or a BWP other than the active BWP in a plurality of BWPs configured by the network in the "frequency domain resource" above. Details are not described again.

For another example, the BWP may alternatively be a virtual BWP. The virtual BWP may have a same SCS as an active BWP, but has a wider bandwidth. The bandwidth (or a frequency range) of the virtual BWP may not be the active BWP configured by a network. The virtual BWP may have an extended virtual boundary for frequency hopping. For example, an available bandwidth of the virtual BWP may be greater than a bandwidth of the active BWP for the first apparatus. In other words, if the first frequency and/or the second frequency are/is a start frequency, a highest frequency, a reference frequency, or the like of the virtual BWP, the M frequency domain resources may be within the virtual BWP. In this way, the REDCAP terminal device may also use a frequency domain resource that is aligned with a BWP for the common terminal device.

For example, for a BWP configured by the network, the first frequency or the second frequency may be in an inactive BWP other than the active BWP. In this way, resources in BWPs for the REDCAP terminal device and the common terminal device can be better matched (for example, RBs are aligned).

In other words, the first frequency and/or the second frequency may be determined by using the related reference frequency of the BWP, so that the M frequency domain resources determined by using the first frequency and/or the second frequency can be flexibly designed. For example, the M frequency domain resources may be within the active BWP, or may cross different BWPs.

2.2. For the first frequency domain offset:

Optionally, the first frequency domain offset may be 0. In other words, the first frequency may be the start frequency of the BWP, the first frequency may be the center frequency of the BWP, or the first frequency may be the reference frequency corresponding to the BWP. Certainly, the first frequency domain offset may be greater than 0. In this way, the first frequency may be greater than the start frequency of the BWP. Alternatively, the first frequency domain offset may be less than 0. In this way, the first frequency may be less than the start frequency of the BWP. The first frequency domain offset may be represented (or reflected) by a quantity of RBs, a quantity of REs, a quantity of subcarriers, or a bandwidth. The first frequency domain offset may be one RB, two RBs, or more RBs. This is not specifically limited in embodiments of this application. It may be understood that a unit of the first frequency domain offset may be Hz, kHz, MHz, or the like. This is not specifically limited.

2.3. For the second frequency domain offset:

Optionally, the second frequency domain offset may be 0. In other words, the second frequency may be the highest frequency of the BWP, or the second frequency may be the center frequency of the BWP. Certainly, the second frequency domain offset may be greater than 0, that is, the second frequency may be greater than the highest frequency of the BWP. Alternatively, the second frequency domain offset may be less than 0, that is, the second frequency may be less than the highest frequency of the BWP.

In a possible implementation, the first frequency and/or the second frequency may be agreed on in a protocol; the first frequency and/or the second frequency are/is negotiated in advance by the first apparatus and the network; or the first frequency and/or the second frequency are/is indicated or configured by the network.

It may be understood that when the network indicates the first frequency and/or the second frequency, the correspondence between the M frequency domain resources and the N time units can be aligned between the first apparatus and a receive end (for example, the network device in the scenario 1 or the terminal device in the scenario 3), to avoid sending or receiving a reference signal on an incorrect frequency hopping resource.

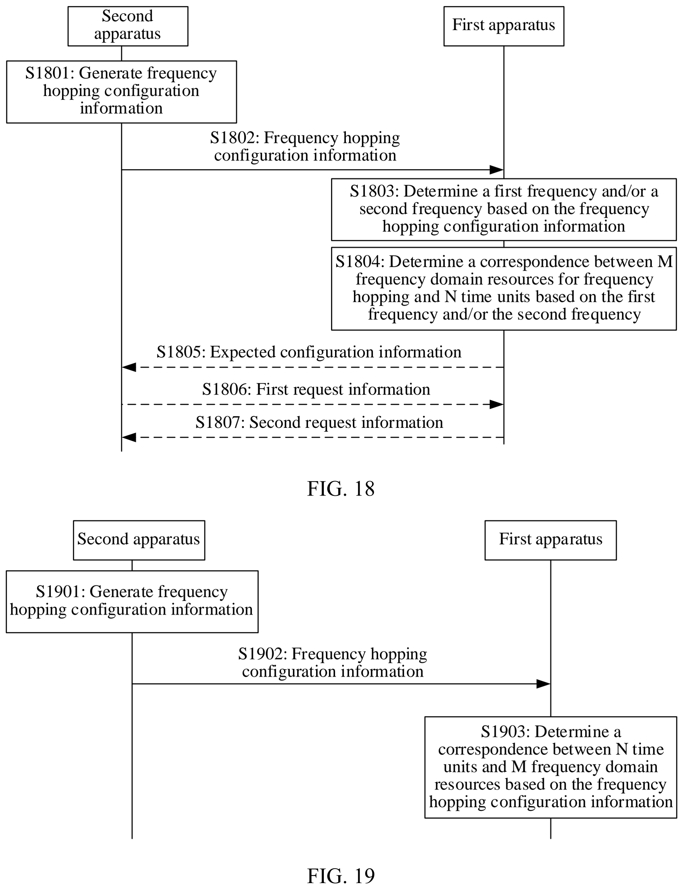

It should be understood that for a specific implementation in which the first frequency and/or the second frequency are/is indicated or configured by the network, refer to a method procedure shown in FIG. 18. Details are not described herein again.

For step S1302:

For ease of understanding, a relationship between M and N is first described, and then the relationship between the M frequency domain resources and the N time units is described.

For the relationship between M and N:

In a possible implementation, M may be equal to N. To be specific, the first apparatus may send one reference signal in one time unit. Frequency domain resources corresponding to different time units are different, or the time units are in one-to-one correspondence with the frequency domain resources.

In another possible implementation, M may be greater than N. To be specific, the first apparatus may send a plurality of reference signals in one time unit by using a plurality of different frequency domain resources. Time units corresponding to different frequency domain resources may be the same, or a plurality of frequency domain resources may correspond to a same time unit.

In still another possible implementation, M may be less than N. To be specific, the first apparatus may send, in a plurality of time units, reference signals that occupy a same frequency domain resource. Frequency domain resources corresponding to different time units may be the same, or a plurality of time units may correspond to a same frequency domain resource.

In a possible implementation, the N time units may be time units for sending N reference signals in one reference signal frequency hopping pattern periodicity. N in the N time units may be a quantity of frequency hopping times or a quantity of frequency hops in one frequency hopping pattern. That the N time units are the time units for sending the N reference signals includes: Each time unit in the N time units is for sending one reference signal.

In other words, in one frequency hopping pattern periodicity, one reference signal may be sent at each frequency hopping moment.

In a possible implementation, step S1302 may be replaced with: The first apparatus determines N frequency domain resources or N frequency domain resource sets for frequency hopping that correspond to N time units, where the N time units are for sending or receiving reference signals, the first frequency is a lowest frequency domain position of frequency domain resources occupied by the first apparatus to send or receive the reference signals, and the second frequency is a highest frequency domain position of the frequency domain resources occupied by the first apparatus to send or receive the reference signals, where N is an integer greater than 1.

It may be understood that the N frequency domain resource sets may include a plurality of frequency domain resources, and a quantity of the plurality of frequency domain resources may be equal to a quantity of reference signals simultaneously sent or received by the first apparatus in a same time unit.

In other words, the first apparatus may determine the first frequency and/or the second frequency based on the frequency domain resources occupied by the first apparatus to send or receive the reference signals, and determine that the frequency hopping resources may be the N time units and the N frequency domain resources that are in one-to-one correspondence, that is, one time unit may be for sending or receiving one reference signal. Alternatively, the first apparatus determines that the frequency hopping resources may be the N time units and the N frequency domain resource sets that are in one-to-one correspondence. In this way, one time unit may correspond to a plurality of different frequency domain resources, and the first apparatus may simultaneously send or receive a plurality of different reference signals.

In another possible implementation, step S1302 may be replaced with: determining, based on the first frequency and/or the second frequency, N frequency domain resources or N frequency domain resource sets that correspond to N time units, where the N time units are for sending or receiving reference signals, the first frequency is lower than a lowest frequency of the N frequency domain resources, and the second frequency is higher than a highest frequency of the N frequency domain resources, where N is an integer greater than 1.

In other words, the first apparatus may determine, based on the first frequency and/or the second frequency, the N frequency domain resources in a frequency range corresponding to the first frequency and/or the second frequency, and determine a correspondence between the N time units and the N frequency domain resources or the N frequency domain resource sets.

In a possible implementation, the reference signal is for positioning. For example, the reference signal may be the reference signal described in the "reference signal" above, and details are not described herein again.

It may be understood that the reference signals sent or received in the N time units are for a same device or apparatus. For example, in the scenario 1, the reference signals are sent by the first apparatus in the N time units. In the scenario 2, the reference signals received by the first apparatus in the N time units are wide-bandwidth reference signals from the network device. In the scenario 3, the reference signals received by the first apparatus in the N time units are narrow-bandwidth reference signals from the network device.

For the relationship between the M frequency domain resources and the N time units:

It should be understood that the M frequency domain resources and the N time units may be frequency domain resources and time units in a frequency hopping pattern in which two frequency domain resources adjacent in frequency domain are also adjacent in time domain, for example, M frequency domain resources and N time units in the "frequency hopping pattern 1" and "frequency hopping pattern 2" above.

It may be understood that the correspondence between the M frequency domain resources and the N time units may include a correspondence between each time unit in the N time units and each frequency domain resource in the M frequency domain resources. The correspondence between each time unit in the N time units and each frequency domain resource in the M frequency domain resources may be a correspondence between each time unit in the N time units and a frequency domain position of each frequency domain resource in the M frequency domain resources. It may be understood that the frequency domain position of the frequency domain resource may be a center frequency, a frequency domain start position, a frequency domain end position, or the like of the frequency domain resource. For details, refer to the related descriptions in the "frequency hopping pattern 1" above, and the details are not described again. It should be understood that the correspondence between the M frequency domain resources and the N time units may be determined in three manners: a manner 1 to a manner 3. In the manner 1, the foregoing correspondence is determined based on the first frequency. In the manner 2, the foregoing correspondence is determined based on the second frequency. In the manner 3, the foregoing correspondence is determined based on the first frequency and the second frequency. In this embodiment of this application, the frequency hopping pattern may be uniquely determined in the foregoing manners 1 to 3, to resolve the problem that there are a plurality of possible frequency hopping patterns 2 in the "problem 1" above.

It may be understood that, in view of a principle similarity between the solution 1 and the solution 2, the following describes a specific implementation of step S1302 by using a frequency hopping pattern of the overlapped frequency hopping in the solution 1 as an example. For details about a frequency hopping pattern of the non-overlapped frequency hopping in the solution 2, refer to related descriptions corresponding to the solution 1. This is uniformly described herein, and details are not described again. It should be understood that the manner 3 is a combination of the manner 1 and the manner 2. For a specific implementation, refer to the manner 1 and the manner 2, and details are not described again.

The following separately describes the manner 1 and the manner 2.

A. Manner 1:

In a possible implementation, a frequency domain resource corresponding to a $K^{th}$ time unit in the N time units is determined based on the first frequency, and the frequency domain resource corresponding to the $K^{th}$ time unit is a frequency domain resource whose frequency domain position is the lowest or highest in the M frequency domain resources.

In other words, the frequency domain resource corresponding to the $K^{th}$ time unit, namely, the frequency domain resource whose frequency domain position is the highest or the frequency domain resource whose frequency domain position is the lowest in the M frequency domain resources, may be determined by using the first frequency. In this way, the frequency hopping resources for sending or receiving the reference signals can be uniquely determined, to avoid the interference.

For example, in FIG. 9, if it is determined that the frequency domain resource corresponding to the $K^{th}$ time unit (using an example in which the frequency domain resource corresponding to the $K^{th}$ time unit is the frequency domain resource whose frequency domain position is the highest) is a frequency domain resource #3 corresponding to a $3^{rd}$ time unit, it may be uniquely determined that the frequency hopping pattern is a second frequency hopping pattern 2. For the frequency hopping pattern 1, when the frequency domain resource corresponding to the Kth time unit is determined, it may be determined that a frequency domain start position of a frequency domain resource corresponding to a 1st time unit, namely, a frequency domain start position of an initial hop, is the first frequency. In this way, frequency hopping resources in the frequency hopping pattern 1 can be uniquely determined. The following separately describes, based on the case 1 and the case 2 in the "frequency hopping pattern 2" above, how to determine the frequency domain resource corresponding to the Kth time unit.

Case 1:

In a possible implementation, that the frequency domain resource corresponding to the Kth time unit is determined based on the first frequency includes: The frequency domain resource corresponding to the Kth time unit is determined based on a third frequency, and a frequency domain resource corresponding to the third frequency is the frequency domain resource whose frequency domain position is the highest in the M frequency domain resources. The third frequency is determined based on the first frequency and a total bandwidth occupied by the M frequency domain resources.

It may be understood that the total bandwidth occupied by the M frequency domain resources may be the combined bandwidth in the "bandwidth-limited positioning scenario" above. For details, refer to the related descriptions in the "bandwidth-limited positioning scenario", and the details are not described again.

It should be understood that the third frequency may be a highest frequency domain position relative to the first frequency. For example, the third frequency is a sum of the first frequency and the total bandwidth occupied by the M frequency domain resources. In other words, the third frequency may be determined by using a formula (1).

$$F_{c-h} = F_l + B \qquad\qquad \text{formula (1)}$$

In the formula (1), $F_{c-h}$ is the third frequency, $F_l$ is the first frequency, and B is the total bandwidth occupied by the M frequency domain resources, namely, the combined bandwidth. A unit in the formula (1) may be Hz, kHz, MHz, or an RB.

Optionally, the total bandwidth occupied by the M frequency domain resources is determined based on the following parameters: a bandwidth of a frequency domain resource corresponding to an ith time unit in the N time units, the quantity of frequency hopping times, and a corresponding frequency domain offset between two adjacent time units in the N time units. The quantity of frequency hopping times may be replaced with a quantity of frequency hopping times or a quantity of frequency hops in one reference signal frequency hopping pattern periodicity. The corresponding frequency domain offset between two adjacent time units in the N time units may be replaced with an overlapped size or a frequency domain overlapped bandwidth between the frequency domain resource corresponding to the ith time unit and a frequency domain resource corresponding to a jth time unit in the N time units, where $1 \leq i \neq j \leq N$. For details, refer to the parameters c and d in the "frequency hopping configuration information" above, and the details are not described again.

For example, B in the foregoing formula (1) is the combined bandwidth, and may be a sum of bandwidths of frequency domain resources corresponding to n time units and a corresponding frequency domain offset between two adjacent time units in the *n* time units in one reference signal frequency hopping pattern periodicity (including the *n* time units). For example, $B = \sum_{i=1}^{n}\left(b_i + f_{i,i-1}\right)$. For example, the foregoing formula (1) may be rewritten as a formula (2).

$$F_{c-h} = F_l + \sum_{i=1}^{n}\left(b_i + f_{i,i-1}\right) \qquad\qquad \text{formula (2)}$$

In the formula (2), $F_{c-h}$ is the third frequency, $F_l$ is the first frequency, $b_i$ is a bandwidth of a frequency domain resource corresponding to an ith time unit in the *n* time units, n is a quantity of frequency hopping times or a quantity of frequency hops, and $f_{i,i-1}$ represents a corresponding frequency domain offset between the ith time unit and an (i-1)th time unit in the n time units, namely, the corresponding frequency domain offset between two adjacent time units in the N time units. For example, $f_{i,i-1}$ may be an offset between a frequency domain end position of the frequency domain resource corresponding to the ith time unit and a frequency domain start position of a frequency domain resource corresponding to an (i+1)th time unit. $f_{1,0}=0$, $1 \leq n \leq N$, and n is an integer.

It may be understood that, for the overlapped frequency hopping in the solution 1, when a bandwidth occupied by each time of frequency hopping is the same, an overlapped size between two adjacent frequency domain resources is also the same. Therefore, it may be determined, by using the bandwidth $b$ (or a quantity of RBs) occupied by each time of frequency hopping and the overlapped size $p$, that $B = n \cdot b - (n-1)p$ in the formula (1). For the non-overlapped frequency hopping in the solution 2, $f_{i,i-1}$ in the foregoing formula (1) and formula (2) may be an offset between a highest frequency domain position of the frequency domain resource corresponding to the ith time unit and the frequency domain start position of the frequency domain resource corresponding to the $(i+1)^{th}$ time unit, and $f_{i,i-1}$ may be 0. In other words, in the solution 2, the plurality of frequency domain resources for frequency hopping may be consecutive in frequency domain, and the combined bandwidth may not need to be determined by using $f_{i,i-1}$. In addition, when the bandwidth occupied by each time of frequency hopping is the same, the combined bandwidth may be determined based on the quantity of frequency hopping times and the bandwidth $b$ occupied by each time of frequency hopping, that is, $B=n \cdot b$.

It should be understood that when the first frequency and the third frequency are determined, as the frequency domain positions of the frequency domain resources increase sequentially with the time units on the whole in the case 1, the frequency domain resource whose frequency domain position is the lowest or the frequency domain resource whose frequency domain position is the highest in the M frequency domain resources may be determined based on a frequency domain resource (for example, one or more of a frequency domain start position, a center frequency, or a highest frequency domain position) corresponding to any time unit in the n time units in one frequency hopping pattern periodicity.

In a possible implementation, that the frequency domain resource corresponding to the $K^{th}$ time unit is determined based on the third frequency includes: The $K^{th}$ time unit is determined based on the third frequency and a frequency domain resource corresponding to a $t^{th}$ time unit in the N time units, where $1 \leq t \leq N$.

It may be understood that the $t^{th}$ time unit may be any time unit in the N time units. When N is greater than $n$ and t is greater than $n$, a ranking of the $t^{th}$ time unit in the $n$ time units in one frequency hopping pattern periodicity may be determined through t modulo $n$ (for example, $t \bmod n$).

In other words, the first apparatus may determine a value of K in the $K^{th}$ time unit based on a ranking that is of any time unit in the N time units and that is in the $n$ time units and a frequency domain resource corresponding to the time unit, that is, determine a ranking that is of a time unit corresponding to the frequency domain resource whose frequency domain position is the highest in the M frequency domain resources and that is in the $n$ time units and/or a ranking that is of a time unit corresponding to the frequency domain resource whose frequency domain position is the lowest in the M frequency domain resources and that is in the $n$ time units. In this way, frequency hopping resource information (for example, including frequency domain resource information and time domain resource information) for sending or receiving the reference signals can be uniquely determined.

It should be understood that, in consideration of resource utilization and resource scheduling flexibility, there may be different frequency domain position relationships between the frequency domain resource whose frequency domain position is the highest in the M frequency domain resources and the third frequency. Different frequency domain position relationships may correspond to different frequency hopping patterns, in other words, different frequency domain position relationships may correspond to different values of K.

The following further describes a specific implementation of determining the $K^{th}$ time unit.

In a possible implementation, that the $K^{th}$ time unit is determined based on the third frequency and the frequency domain resource corresponding to the $t^{th}$ time unit in the N time units includes: The $K^{th}$ time unit is determined based on a frequency domain position relationship between the frequency domain resource corresponding to the $t^{th}$ time unit and the third frequency. The frequency domain position relationship is a first frequency domain position relationship or a second frequency domain position relationship. The first frequency domain position relationship is: A frequency domain position corresponding to a sum of a frequency domain start position of the frequency domain resource corresponding to the $t^{th}$ time unit and $b_t$ is greater than the third frequency. The second frequency domain position relationship is: A frequency domain position corresponding to a sum of a frequency domain start position of the frequency domain resource corresponding to the $t^{th}$ time unit and $b_t$ is equal to the third frequency; or the frequency domain position is less than the third frequency, where a difference between the frequency domain position and the third frequency is less than $b_{t+1}$ or $b$. $b_t$ is a bandwidth of the frequency domain resource corresponding to the $t^{th}$ time unit, $b_{t+1}$ is a bandwidth of a frequency domain resource corresponding to a $(t+1)^{th}$ time unit, and $b$ is the bandwidth occupied by each time of frequency hopping. It may be understood that, when the bandwidth occupied by each time of frequency hopping is the same, $b_t$ may be equal to $b$.

It should be understood that the frequency domain start position of the frequency domain resource corresponding to the $t^{th}$ time unit may be indicated by the network, or may be determined based on another time unit. For example, the frequency domain start position of the frequency domain resource corresponding to the $t^{th}$ time unit may be determined based on a frequency domain resource corresponding to a $(t-x)^{th}$ time unit and based on both $b_i$ and $f_{i,i-1}$ or both $b$ and $p$, where $1 \leq t-x \leq N$. x is an integer, and for example, may be 1, 2, 3, -1, -2, -3, or another value.

In other words, the first apparatus may alternatively determine the $K^{th}$ time unit based on the frequency domain position relationship between the frequency domain resource corresponding to the $t^{th}$ time unit and the third frequency, so that different position relationships may correspond to different $K^{th}$ time units and different frequency domain resources corresponding to the $K^{th}$ time units. In this way, resource utilization or resource scheduling flexibility can be improved.

In a possible implementation, the first frequency domain position relationship may include a position relationship 1a or a position relationship 1b. In the position relationship 1a, an actual (actual) bandwidth of the frequency domain resource corresponding to the $t^{th}$ time unit is the same as $b_t$. In the position relationship 1b, an actual bandwidth of the frequency domain resource corresponding to the $t^{th}$ time unit is less than $b_t$, and an actual highest frequency domain position of the frequency domain resource corresponding to the $t^{th}$ time unit may be equal to the third frequency.

In other words, for the position relationship 1a, a highest frequency domain position of the frequency domain resource whose frequency domain position is the highest in the M frequency domain resources may be greater than the third frequency. To be specific, when the first apparatus performs frequency hopping to a position near a highest frequency (namely, the third frequency), the first apparatus may continue to perform frequency hopping in a third frequency direction (namely, a frequency increasing direction), so that a frequency domain start position of a frequency domain resource corresponding to a next hop (namely, a next time unit) may be greater than the first frequency. For the position relationship 1b, an actual highest frequency domain position of the frequency domain resource whose frequency domain position is the highest in the M frequency domain resources is equal to the third frequency. To be specific, when the first apparatus performs frequency hopping to a position near a highest frequency, the first apparatus may continue to perform frequency hopping in a third frequency direction. However, an actual frequency hopping bandwidth is less than a configured bandwidth, where the configured bandwidth may be, for example, $b_t$ or the bandwidth $b$ occupied by each time of frequency hopping. Therefore, a frequency domain start position of a frequency domain resource corresponding to a next hop may be equal to the first frequency.

It may be understood that, for the second frequency domain position relationship, a highest frequency domain position of the frequency domain resource whose frequency domain position is the highest in the M frequency domain resources is less than or equal to the third frequency. In other words, when the first apparatus performs frequency hopping to a position near the third frequency, a next hop starts from a lowest frequency (namely, the first frequency).

It should be understood that the frequency domain position relationship may be agreed on in a protocol; the frequency domain position relationship may be negotiated in advance by the first apparatus and the network; or the frequency domain position relationship may be indicated or configured by the network. This is not specifically limited in this embodiment of this application. It may be understood that names such as the first frequency domain position, the position relationship 1a, the position relationship 1b, and the second frequency domain position relationship are merely examples, and other names may alternatively be used. This is not specifically limited in embodiments of this application.

The following uses the frequency hopping pattern of the overlapped frequency hopping in the solution 1 as an example to describe the foregoing frequency domain position relationship.

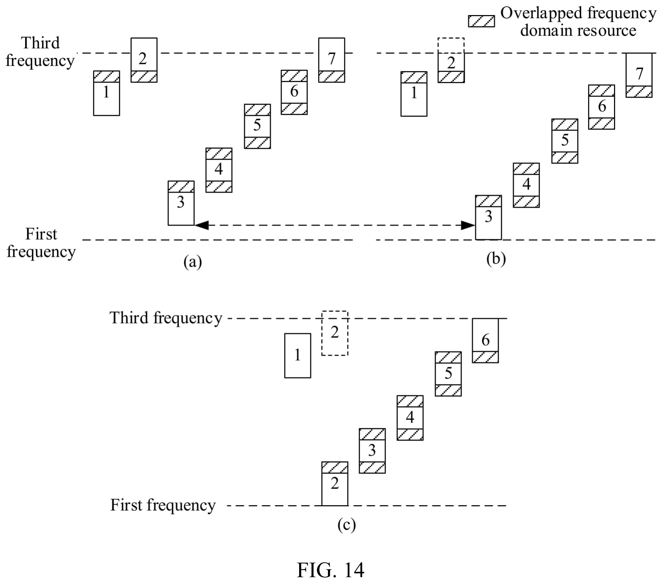

For example, for the position relationship 1a, refer to (a) in FIG. 14; for the position relationship 1b, refer to (b) in FIG. 14; and for the second frequency domain position relationship, refer to (c) in FIG. 14. The following separately provides descriptions.

For the position relationship 1a:

The actual (actual) bandwidth of the frequency domain resource corresponding to the $t^{th}$ time unit is the same as $b_t$. Therefore, the frequency domain position corresponding to the sum of the frequency domain start position of the frequency domain resource corresponding to the $t^{th}$ time unit and $b_t$, namely, a highest frequency domain position of the frequency domain resource corresponding to the $t^{th}$ time unit, is an actual highest frequency domain position, and the actual highest frequency domain position may be greater than the third frequency. In other words, for (a) in FIG. 14, a highest frequency domain position of a frequency domain resource #2 corresponding to a $2^{nd}$ time unit may be greater than the third frequency, that is, the highest frequency domain position of the frequency domain resource whose frequency domain position is the highest in the M frequency domain resources may be greater than the third frequency. In this way, the frequency domain resource corresponding to the $t^{th}$ time unit is the frequency domain resource whose frequency domain position is the highest (namely, a frequency domain resource corresponding to a time unit that is before wrapping) in the M frequency domain resources, and the frequency domain resource corresponding to the $(t+1)^{th}$ time unit is the frequency domain resource whose frequency domain position is the lowest (namely, a frequency domain resource corresponding to a wrapping time unit) in the M frequency domain resources.

It should be understood that because the third frequency is determined based on the first frequency, when the combined bandwidth remains unchanged, a frequency domain start position of the frequency domain resource whose frequency domain position is the lowest in the M frequency domain resources may be greater than the first frequency. For details, refer to a frequency domain resource #3 corresponding to a $3^{rd}$ time unit in (a) in FIG. 14, and a frequency domain start position of the frequency domain resource #3 is greater than the first frequency.

It may be understood that, as shown in (a) in FIG. 14, a frequency domain resource #1 corresponding to a $1^{st}$ time unit and the frequency domain resource #2 corresponding to the $2^{nd}$ time unit may be jointly processed with remaining frequency domain resources (for example, the frequency domain resource #3 corresponding to the $3^{rd}$ time unit, a frequency domain resource #4 corresponding to a $4^{th}$ time unit, and a frequency domain resource #5 corresponding to a $5^{th}$ time unit), to improve the resource utilization.

For the position relationship 1b:

As described above, the actual bandwidth of the frequency domain resource corresponding to the $t^{th}$ time unit is

less than $b_t$. Therefore, a highest frequency domain position of the frequency domain resource corresponding to the $t^{th}$ time unit is not the actual highest frequency domain position, and the actual highest frequency domain position is equal to the third frequency. For details, refer to a frequency domain resource #2 corresponding to a $2^{nd}$ time unit in (b) in FIG. 14. In other words, the frequency domain resource corresponding to the $t^{th}$ time unit is the frequency domain resource whose frequency domain position is the highest in the M frequency domain resources, and the frequency domain resource corresponding to the $(t+1)^{th}$ time unit is the frequency domain resource whose frequency domain position is the lowest in the M frequency domain resources.

It may be understood that, because the actual highest frequency domain position is equal to the third frequency, a frequency domain start position of the frequency domain resource whose frequency domain position is the lowest in the M frequency domain resources may be equal to the first frequency. For details, refer to a frequency domain resource #3 corresponding to a $3^{rd}$ time unit in (b) in FIG. 14, and a frequency domain start position of the frequency domain resource #3 is equal to the first frequency. In other words, a lowest frequency occupied by the first apparatus to send the reference signals and the first frequency are overlapped by default, and no additional indication is needed, so that signaling overheads can be reduced.

It should be understood that, as shown in (b) in FIG. 14, a frequency domain resource #1 corresponding to a $1^{st}$ time unit and the frequency domain resource #2 corresponding to the $2^{nd}$ time unit may not be jointly processed with remaining frequency domain resources (for example, the frequency domain resource #3 corresponding to the $3^{rd}$ time unit, a frequency domain resource #4 corresponding to a $4^{th}$ time unit, and a frequency domain resource #5 corresponding to a $5^{th}$ time unit). In this way, the resource scheduling flexibility of the network can be improved.

For the second frequency domain position relationship:

A difference of the second frequency domain position relationship from the foregoing position relationships lies in: A highest frequency domain position of the frequency domain resource corresponding to the $t^{th}$ time unit is less than or equal to the third frequency, and the highest frequency domain position of the frequency domain resource corresponding to the $t^{th}$ time unit should be close to the third frequency. When the frequency domain position corresponding to the sum of the frequency domain start position of the frequency domain resource corresponding to the $t^{th}$ time unit and $b_t$ is greater than the third frequency, a frequency domain resource corresponding to a $(t-1)^{th}$ time unit is the frequency domain resource whose frequency domain position is the highest in the M frequency domain resources (this is specific to a case in which t-1 is not equal to 1, that is, the $(t-1)^{th}$ time unit is not a $1^{st}$ time unit), or a frequency domain resource corresponding to a $(t-1)^{th}$ time unit is a frequency domain resource, other than the frequency domain resource whose frequency domain position is the highest in the M frequency domain resources, that is closest to the third frequency (that is, the $(t-1)^{th}$ time unit is a $1^{st}$ time unit). In other words, the $(t-1)^{th}$ time unit is the time unit that is before the wrapping in the case 1. The frequency domain resource corresponding to the $t^{th}$ time unit is the frequency domain resource whose frequency domain position is the lowest in the M frequency domain resources, and an actual frequency domain start position of the frequency domain resource corresponding to the $t^{th}$ time unit is the first frequency, that is, the $t^{th}$ time unit is the wrapping time unit in the case 1.

For example, in (c) in FIG. 14, the $t^{th}$ time unit is a $2^{nd}$ time unit, namely, the wrapping time unit, and a frequency domain start position of a frequency domain resource #2 corresponding to the $2^{nd}$ time unit is the first frequency. The $(t-1)^{th}$ time unit is a $1^{st}$ time unit, namely, the time unit that is before the wrapping, and a frequency domain resource #1 corresponding to the $1^{st}$ time unit is a frequency domain resource, other than a frequency domain resource #6 corresponding to a $6^{th}$ time unit, that is closest to the third frequency.

It may be understood that, as shown in (c) in FIG. 14, the frequency domain resource #1 corresponding to the $1^{st}$ time unit may not be jointly processed with remaining frequency domain resources (for example, the frequency domain resource #2 corresponding to the $2^{nd}$ time unit to a frequency domain resource #5 corresponding to a $5^{th}$ time unit). In this way, the resource scheduling flexibility of the network can be improved.

It should be understood that, with reference to the foregoing descriptions, for the frequency domain resource corresponding to the $K^{th}$ time unit, the following content may be determined:

　　1. When the frequency domain position corresponding to the sum of the frequency domain start position of the frequency domain resource corresponding to the $t^{th}$ time unit and $b_t$ is greater than the third frequency, for the first frequency domain position relationship, the frequency domain resource corresponding to the $t^{th}$ time unit is the frequency domain resource whose frequency domain position is the highest in the M frequency domain resources, and the frequency domain resource corresponding to the $(t+1)^{th}$ time unit is the frequency domain resource whose frequency domain position is the lowest in the M frequency domain resources.

For the position relationship 1a, the highest frequency domain position of the frequency domain resource whose frequency domain position is the highest in the M frequency domain resources may be greater than the third frequency, and the third frequency is in a frequency range occupied by the frequency domain resource whose frequency domain position is the highest. The frequency domain start position of the frequency domain resource whose frequency domain position is the lowest in the M frequency domain resources may be greater than the first frequency.

For the position relationship 1b, the highest frequency domain position of the frequency domain resource whose frequency domain position is the highest in the M frequency domain resources may be equal to the third frequency, and the frequency domain start position of the frequency domain resource whose frequency domain position is the lowest in the M frequency domain resources may be equal to the first frequency.

2. For the second frequency domain position relationship: The frequency domain resource corresponding to the $t^{th}$ time unit is the frequency domain resource whose frequency domain position is the lowest in the M frequency domain resources. When the $(t-1)^{th}$ time unit is not the $1^{st}$ unit, the frequency domain resource corresponding to the $(t-1)^{th}$ time unit is the frequency domain resource whose frequency domain position is the highest in the M frequency domain resources. When the $(t-1)^{th}$ time unit is the $1^{st}$ time unit, the frequency domain resource corresponding to the $(t-1)^{th}$ time unit is the frequency domain resource, other than the frequency domain resource whose frequency domain position is the highest in the M frequency domain resources, that is closest to the third frequency.

For example, whether the frequency domain resource corresponding to the $t^{th}$ time unit is the frequency domain resource corresponding to the $K^{th}$ time unit may be determined based on the frequency domain position relationship between the frequency domain resource corresponding to the $t^{th}$ time unit and the third frequency. If it is determined that the frequency domain resource corresponding to the $t^{th}$ time unit is not the frequency domain resource corresponding to the $K^{th}$ time unit, the first apparatus may determine, based on the frequency domain resource corresponding to the $t^{th}$ time unit and based on both $b_i$ and $f_{i,i-1}$, $b$, or both $b$ and $p$, frequency domain resources corresponding to the $(t+1)^{th}$ time unit, a $(t+2)^{th}$ time unit, and a $(t+x)^{th}$ time unit or frequency domain resources corresponding to the $(t-1)^{th}$ time unit, a $(t-2)^{th}$ time unit, and the $(t-x)^{th}$ time unit, and determine, based on the foregoing position relationship, whether the frequency domain resource corresponding to the $(t+x)^{th}$ time unit or the $(t-x)^{th}$ time unit is the frequency domain resource corresponding to the $K^{th}$ time unit.

The following uses a case 1a and a case 1b for description.

For the case 1a:

In a possible implementation, the frequency domain resource corresponding to the $K^{th}$ time unit is the frequency domain resource whose frequency domain position is the highest in the M frequency domain resources, and a frequency domain resource corresponding to a $(K+1)^{th}$ time unit is the frequency domain resource whose frequency domain position is the lowest in the M frequency domain resources. That the $K^{th}$ time unit is determined based on the frequency domain position relationship between the frequency domain resource corresponding to the $t^{th}$ time unit and the third frequency includes: The $K^{th}$ time unit is determined based on the frequency domain position relationship and a frequency domain resource corresponding to the $1^{st}$ time unit.

For the second frequency domain position relationship, a ranking of the $K^{th}$ time unit may be determined by using a formula (3) or (4).

$$K = \max_{t}\left\{f_1 + \sum_{i=1}^{t}\left(b_i + f_{i,i-1}\right) \leq F_{c-h}\right\} \qquad \text{formula (3)}$$

$$K + 1 = \min_{t}\left\{f_1 + \sum_{i=1}^{t}\left(b_i + f_{i,i-1}\right) > F_{c-h}\right\} \qquad \text{formula (4)}$$

In the formulas (3) and (4), $t$ represents the $t^{th}$ time unit in the $n$ time units, $f_1$ is a frequency domain start position of the frequency domain resource corresponding to the $1^{st}$ time unit, and $F_{c-h}$ is the third frequency. For details about $f_{i,i-1}$, refer to the related descriptions in the formula (2), and the details are not described again. It may be understood that, for the formula (3), when frequency domain resources are in ascending order starting from the frequency domain resource corresponding to the $1^{st}$ time unit, until the highest frequency domain position of the frequency domain resource corresponding to the $t^{th}$ time unit is closest to $F_{c-h}$, it may be determined that the $t^{th}$ time unit is the $K^{th}$ time unit, namely, the time unit that is before the wrapping. In this way, the $(t+1)^{th}$ time unit is the $(K+1)^{th}$ time unit, namely, the wrapping time unit.

For the formula (4), when frequency domain resources are in ascending order starting from the frequency domain resource corresponding to the $1^{st}$ time unit, until the highest frequency domain position of the frequency domain resource corresponding to the $t^{th}$ time unit starts to exceed $F_{c-h}$, it may be determined that a frequency domain position of the frequency domain resource corresponding to the $t^{th}$ time unit exceeds a frequency domain position of the frequency domain resource corresponding to the $K^{th}$ time unit. In other words, the $t^{th}$ time unit is the $(K+1)^{th}$ time unit, namely, the wrapping time unit. In this way, the $(t-1)^{th}$ time unit is the $K^{th}$ time unit, namely, the time unit that is before the wrapping.

It may be understood that the foregoing formula (3) and formula (4) are specific to n time units in one frequency hopping pattern periodicity, that is, N is equal to n. If N is greater than n, the formula (3) may be rewritten as a formula (5), and the formula (4) may be rewritten as a formula (6).

$$K = \max_t\{f_1 + \textstyle\sum_{i=1}^{t \bmod n}(b_i + f_{i,i-1}) \leq F_{c-h}\} \qquad \text{formula (5)}$$

$$K + 1 = \min_t\{f_1 + \textstyle\sum_{i=1}^{t \bmod n}(b_i + f_{i,i-1}) > F_{c-h}\} \qquad \text{formula (6)}$$

It should be understood that, for the first frequency domain position correspondence, a ranking of the $K^{th}$ time unit may be determined by using a formula (7).

$$K = \min_t\{f_1 + \textstyle\sum_{i=1}^{t}(b_i + f_{i,i-1}) > F_{c-h}\} \qquad \text{formula (7)}$$

For specific meanings of the parameters in the formula (7), refer to the foregoing formula (3) and formula (4). Details are not described again.

It may be understood that, for the formula (7), when frequency domain resources are in ascending order starting from the frequency domain resource corresponding to the $1^{st}$ time unit, until the highest frequency domain position of the frequency domain resource corresponding to the $t^{th}$ time unit is closest to $F_{c-h}$ and is greater than $F_{c-h}$, it may be determined that the $t^{th}$ time unit is the $K^{th}$ time unit, namely, the time unit that is before the wrapping, and the $(t+1)^{th}$ time unit is the $(K+1)^{th}$ time unit, namely, the wrapping time unit.

It may be understood that this is specific to $n$ time units in one frequency hopping pattern periodicity, that is, N is equal to $n$. If N is greater than $n$, the foregoing formula (7) may be rewritten as a formula (8).

$$K = \min_t\{f_1 + \textstyle\sum_{i=1}^{t \bmod n}(b_i + f_{i,i-1}) > F_{c-h}\} \qquad \text{formula (8)}$$

For the case 1b:

The case 1b is similar to the case 1a. A difference lies in: The frequency domain resource corresponding to the $K^{th}$ time unit is the frequency domain resource whose frequency domain position is the lowest in the M frequency domain resources, and a frequency domain resource corresponding to a $(K-1)^{th}$ time unit is the frequency domain resource whose frequency domain position is the highest in the M frequency domain resources. In other words, the $K^{th}$ time unit is the wrapping time unit, and the $(K-1)^{th}$ time unit is the time unit that is before the wrapping.

In other words, in the formulas (3) to (8) in the foregoing case 1a, a formula corresponding to K+1 is K in the case 1b. For example, $K + 1 = \min_t\{f_1 + \sum_{i=1}^{t}(b_i + f_{i,i-1}) > F_{c-h}\}$ in the formula (4) is K in the case 1b, that is, $K = \min_t\{f_1 + \sum_{i=1}^{t}(b_i + f_{i,i-1}) > F_{c-h}\}$. For example, $K = \min_t\{f_1 + \sum_{i=1}^{t}(b_i + f_{i,i-1}) > F_{c-h}\}$ in the formula (7) is K-1 in the case 1b, that is, $K = \min_t\{f_1 + \sum_{i=1}^{t}(b_i + f_{i,i-1}) > F_{c-h}\} + 1$.

It may be understood that, in the foregoing formulas (3) to (8), for the overlapped frequency hopping in the solution 1, when the bandwidth occupied by each time of frequency hopping is the same, the overlapped size between two adjacent frequency domain resources is also the same. Therefore, it may be determined, by using the bandwidth b (or the quantity of RBs) occupied by each time of frequency hopping and the overlapped size $p$, that $\sum_{i=1}^{t}(b_i + f_{i,i-1}) = t \cdot b - (t-1)p$.

It may be further understood that for the non-overlapped frequency hopping in the solution 2, $f_{i,i-1}$ may be the offset between the frequency domain end position of the frequency domain resource corresponding to the $i^{th}$ time unit and the frequency domain start position of the frequency domain resource corresponding to the $(i+1)^{th}$ time unit. Therefore, $f_{i,i-1}=0$ when the plurality of frequency domain resources for frequency hopping may be consecutive in frequency domain.

In addition, when the bandwidth occupied by each time of frequency hopping is the same, $\sum_{i=1}^{t}(b_i + f_{i,i-1}) = t \cdot b$, where $b$ is the bandwidth occupied by each time of frequency hopping.

It should be understood that the foregoing formulas (3) to (8) are merely examples, and the $K^{th}$ time unit may alternatively be determined based on a frequency domain resource corresponding to another time unit. A specific manner is similar to those corresponding to the foregoing formulas (3) to (8). Details are not described herein again.

It may be understood that in the case 1, a case 1c may further exist for the first frequency domain position relationship and the second frequency domain position relationship. To be specific, the frequency domain resource corresponding to the $K^{th}$ time unit is not the frequency domain resource whose frequency domain position is the highest in the M frequency domain resources, and a frequency domain resource corresponding to a $(K+1)^{th}$ time unit is the frequency domain resource whose position is the lowest in the M frequency domain resources; or the frequency domain resource corresponding to the $K^{th}$ time unit is the frequency domain resource whose frequency domain position is the lowest in the M frequency domain resources, but a frequency domain resource corresponding to a $(K-1)^{th}$ time unit is not the frequency domain resource whose frequency domain position is the highest in the M frequency domain resources, for example, as in the cases shown in (a) and (c) in FIG. 14. The foregoing formulas (3) to (8) are also applicable to the case 1c.

The following describes a specific implementation of determining the correspondence between the M frequency domain resources and the N time units based on the $K^{th}$ time unit and the frequency domain resource corresponding to the $K^{th}$ time unit.

It should be understood that, as described above, the correspondence between the M frequency domain resources and the N time units may include a frequency domain resource corresponding to an $m^{th}$ time unit, and the frequency domain resource corresponding to the $m^{th}$ time unit is determined based on the frequency domain resource corresponding to the $K^{th}$ time unit. The frequency domain resource corresponding to the $m^{th}$ time unit is a frequency domain resource in the M frequency domain resources. The M frequency domain resources are determined based on the following plurality of parameters: position information of the frequency domain resource corresponding to the $t^{th}$ time unit in the N time units, a bandwidth of the frequency domain resource corresponding to the $m^{th}$ time unit in the N time units, the quantity of frequency hopping times, or the corresponding frequency domain offset between two adjacent time units in the N time units, where $1 \le t \ne m \le N$.

The position information of the frequency domain resource corresponding to the $t^{th}$ time unit in the N time units may be any time unit other than the $m^{th}$ time unit in the N time units. The position information may include a frequency domain position of the frequency domain resource. For details, refer to the related descriptions in the "frequency hopping pattern 1" above, and the details are not described again.

It may be understood that, for details about the foregoing parameters, refer to the descriptions of the "parameters a to e" above and the parameters in the foregoing formulas (1) and (2), and the details are not described herein again. In addition, according to the related descriptions of the problem 1 above, for a value of M in the M frequency domain resources, refer to the foregoing related descriptions of the "relationship between M and N", and details are not described herein again.

It should be understood that the foregoing plurality of parameters may be replaced with position information of the frequency domain resource corresponding to the $1^{st}$ time unit in the N time units, the bandwidth of the frequency domain resource corresponding to the $i^{th}$ time unit, the overlapped size between the frequency domain resource corresponding to the $i^{th}$ time unit and the frequency domain resource corresponding to the $j^{th}$ time unit, or the quantity of frequency hopping times. The $i^{th}$ time unit and the $j^{th}$ time unit are time units in the N time units, where $1 \le i \ne j \le N$. It may be understood that i or j may be equal to m.

It may be understood that, according to the foregoing descriptions of the correspondence between the M frequency domain resources and the N time units, the correspondence between the M frequency domain resources and the N time units may be determined by determining a frequency domain resource (for example, a frequency domain start position, a center frequency, or a frequency domain end position) corresponding to each time unit in the N time units.

The following provides descriptions by using an example in which the frequency domain start position of the frequency domain resource corresponding to each time unit in the N time units is determined.

For example, a frequency domain start position of the frequency domain resource corresponding to the $m^{th}$ time unit is determined based on the following plurality of parameters: the frequency domain resource corresponding to the $K^{th}$ time unit, the frequency domain start position of the frequency domain resource corresponding to the $t^{th}$ (for example, t is equal to 1) time unit, the corresponding frequency domain offset between the $i^{th}$ time unit and the $(i-1)^{th}$ time unit in the N time units, and a bandwidth of the frequency domain resource corresponding to the $m^{th}$ time unit.

Because the first frequency domain position relationship and the second frequency domain position relationship correspond to different frequency hopping patterns, the following separately provides descriptions based on the first frequency domain position relationship and the second frequency domain position relationship.

For the first frequency domain position relationship:

1. For the position relationship 1a:

In the position relationship 1a, because the frequency domain start position of the frequency domain resource whose frequency domain position is the highest in the M frequency domain resources may be greater than the third frequency (as shown in (a) in FIG. 14), the frequency domain start position of the frequency domain resource whose frequency domain position is the highest in the M frequency domain resources may be greater than the first frequency.

In the case 1a, the frequency domain resource corresponding to the K$^{th}$ time unit is the frequency domain resource whose frequency domain position is the highest in the M frequency domain resources, and the frequency domain resource corresponding to the (K+1)$^{th}$ time unit is the frequency domain resource whose frequency domain position is the lowest in the M frequency domain resources. In other words, a frequency domain end position (namely, the highest frequency domain position) $F_K$ of the frequency domain resource corresponding to the K$^{th}$ time unit is greater than the third frequency, and a frequency domain start position of the frequency domain resource corresponding to the (K+1)$^{th}$ time unit is greater than the first frequency, that is, the frequency domain start position is a difference between $F_K$ and the combined bandwidth. For details about the combined bandwidth, refer to $B$ in the formula (1), where $B = \sum_{i=1}^{n}(b_i + f_{i,i-1})$ .

For $\sum_{i=1}^{n}(b_i + f_{i,i-1})$ , refer to the formula (2). Details are not described again.

For example, the frequency domain start position of the frequency domain resource corresponding to the m$^{th}$ time unit may be determined according to a formula (9) or a formula (10).

$$f_m = \begin{cases} f_1 + \sum_{i=2}^{m \bmod N}(b_{i-1} + f_{i,i-1}), \; if \; (m \bmod N) < K+1 \\ F_K - \sum_{i=1}^{n}(b_i + f_{i,i-1}) + \sum_{i=K+2}^{m \bmod N}(b_{i-1} + f_{i,i-1}), if \; (m \bmod N) \geq K+1 \end{cases} \quad \text{formula (9)}$$

In the formula (9), $f_m$ is the frequency domain start position of the frequency domain resource corresponding to the m$^{th}$ time unit, n is the quantity of frequency hopping times or the quantity of frequency hops (namely, the quantity of frequency hopping times or the quantity of frequency hops in one frequency hopping pattern periodicity) in the formula (2), $f_1$ is the frequency domain start position of the frequency domain resource corresponding to the 1$^{st}$ time unit in the N time units, $F_K$ is the frequency domain end position of the frequency domain resource corresponding to the K$^{th}$ time unit, $b_i$ is the bandwidth of the frequency domain resource corresponding to the i$^{th}$ time unit in the n time units, and $f_{i,i-1}$ is the frequency domain offset between resources corresponding to the i$^{th}$ time unit and the (i-1)$^{th}$ time unit in the N time units in the formula (2). $f_{1,0}$=0, and $f_{K+1,K}$=0. It may be understood that, that $f_{K+1,K}$=0 may indicate that a frequency domain offset between the K$^{th}$ time unit and the (K+1)$^{th}$ time unit is 0, or may indicate that this case is unavailable, meaningless, or the like.

It may be further understood that, that $f_{K+1,K}$=0 may alternatively indicate that a frequency domain offset between an m1$^{th}$ time unit and an (m1+1)$^{th}$ time unit is 0, or may indicate that this case is unavailable, meaningless, or the like. (*m1 mod N*) = *K* , and ((*m1* + 1) *mod N*)=*K* + 1.

It may be understood that, for the formula (9), when a remainder obtained by dividing m by N is less than K+1, that is, (*m mod N*) < *K* + *1*, $f_m$ may be in ascending order starting from $f_1$, until a frequency domain end position (namely, a highest frequency domain position) of the frequency domain resource corresponding to $f_m$ is equal to $F_K$, to be specific, a frequency domain start position of the frequency domain resource corresponding to the K$^{th}$ time unit is $f_K = f_1 + \sum_{i=2}^{K}(b_{i-1} + f_{i,i-1})$ , in other words, the frequency domain end position $F_K$ of the frequency domain resource corresponding to the K$^{th}$ time unit is a sum of $f_k$ and the bandwidth $b_K$ of the frequency domain resource corresponding to the K$^{th}$ time unit, that is, $F_K = f_K + b_K$. When (*m mod N*) = *K* + 1, $f_m$ is equal to the frequency domain start position $f_{K+1}$ of the frequency domain resource for the (K+1)$^{th}$ time unit, and $f_m$ may be greater than the first frequency. For example, $f_{K+1}$ may be a difference between $F_K$ and the combined bandwidth, that is, $f_{K+1} = F_K - B$. It may be understood that, according to the related descriptions of the foregoing formula (2), $B = \sum_{i=1}^{n}(b_i + f_{i,i-1})$ . In this way, $f_{K+1} = F_K - \sum_{i=1}^{n}(b_i + f_{i,i-1})$ . It may be further understood that $\sum_{i=1}^{n}(b_i + f_{i,i-1})$ in the formula (9) may be replaced with the combined bandwidth $B,$ namely, the total bandwidth occupied by the M frequency domain resources. For details, refer to the related descriptions of the formula (1), and the details are not described herein again.

$$f_m = \begin{cases} f_1 + \sum_{i=2}^{m \bmod N}(b_{i-1} + f_{i,i-1}), \; if \; (m \bmod N) < K+1 \\ F_K - \sum_{i=1}^{n}(b_i + f_{i,i-1}), if \; (m \bmod N) = K+1 \\ F_K - \sum_{i=1}^{n}(b_i + f_{i,i-1}) + \sum_{i=K+2}^{m \bmod N}(b_{i-1} + f_{i,i-1}), if \; (m \bmod N) > K+1 \end{cases} \quad \text{formula (10)}$$

It may be understood that for specific meanings of the parameters in the formula (10), refer to the formula (9). Details are not described again.

In the case 1b, the frequency domain resource corresponding to the K$^{th}$ time unit is the frequency domain resource whose frequency domain position is the lowest in the M frequency domain resources, and the frequency domain resource corresponding to the (K-1)$^{th}$ time unit is the frequency domain resource whose frequency domain position is the highest in the M frequency domain resources. In this case, the formula (9) may be rewritten as a formula (11).

$$f_m = \begin{cases} f_1 + \sum_{i=2}^{m\ mod\ N}\left(b_{i-1} + f_{i,i-1}\right),\ if\ (m\ mod\ N) < K \\ F_{K-1} - \sum_{i=1}^{n}\left(b_i + f_{i,i-1}\right) + \sum_{i=K+1}^{m\ mod\ N}\left(b_{i-1} + f_{i,i-1}\right),\ if\ (m\ mod\ N) \geq K \end{cases} \qquad \text{formula (11)}$$

$F_{K-1}$ is a highest frequency domain position of the frequency domain resource corresponding to the (K-1)$^{th}$ time unit, and $f_{K,K-1}$=0. For specific meanings of the parameters in the formula (11), refer to the formula (9). Details are not described again.

It may be understood that, in the case 1b, the formula (10) may be rewritten as a formula (12).

$$f_m = \begin{cases} f_1 + \sum_{i=2}^{m\ mod\ N}\left(b_{i-1} + f_{i,i-1}\right),\ if\ (m\ mod\ N) < K \\ F_{K-1} - \sum_{i=1}^{n}\left(b_i + f_{i,i-1}\right),\ if\ (m\ mod\ N) = K \\ F_{K-1} - \sum_{i=1}^{n}\left(b_i + f_{i,i-1}\right) + \sum_{i=K+1}^{m\ mod\ N}\left(b_{i-1} + f_{i,i-1}\right),\ if\ (m\ mod\ N) > K \end{cases} \qquad \text{formula (12)}$$

For specific meanings of the parameters in the formula (12), refer to the formula (10). Details are not described again.

2. For the position relationship 1b:

According to the foregoing descriptions of the position relationship 1b, a difference from the position relationship 1a lies in: The highest frequency domain position of the frequency domain resource whose frequency domain position is the highest in the M frequency domain resources is actually the third frequency, and the frequency domain start position of the frequency domain resource whose frequency domain position is the lowest in the M frequency domain resources is the first frequency.

In the case 1a, a frequency domain end position (namely, the highest frequency domain position) $F_K$ of the frequency domain resource corresponding to the K$^{th}$ time unit is actually equal to the third frequency $F_{c-h}$, and a frequency domain start position of the frequency domain resource corresponding to the (K+1)$^{th}$ time unit may be equal to the first frequency $F_l$.

For example, the frequency domain start position of the frequency domain resource corresponding to the m$^{th}$ time unit may be determined according to a formula (13) or a formula (14).

$$f_m = \begin{cases} f_1 + \sum_{i=2}^{m\ mod\ N}\left(b_{i-1} + f_{i,i-1}\right),\ if\ (m\ mod\ N) < K + 1 \\ F_l + \sum_{i=K+2}^{m\ mod\ N}\left(b_{i-1} + f_{i,i-1}\right),\ if\ (m\ mod\ N) \geq K + 1 \end{cases} \qquad \text{formula (13)}$$

$$f_m = \begin{cases} f_1 + \sum_{i=2}^{m\ mod\ N}\left(b_{i-1} + f_{i,i-1}\right),\ if\ (m\ mod\ N) < K + 1 \\ F_l,\ if\ (m\ mod\ N) = K + 1 \\ F_l + \sum_{i=K+2}^{m\ mod\ N}\left(b_{i-1} + f_{i,i-1}\right),\ if\ (m\ mod\ N) > K + 1 \end{cases} \qquad \text{formula (14)}$$

In the formula (13) and the formula (14), $F_l$ is the first frequency. For specific meanings of other parameters, refer to the formula (9). Details are not described again. It may be understood that, according to the related descriptions of the position relationship 1b, an actual bandwidth of the frequency domain resource corresponding to the Kth time unit is less than the bandwidth $b_K$ configured (or indicated) by the network, to be specific, a sum of a frequency domain start position $f_K$ of the frequency domain resource corresponding to the Kth time unit and $b_K$ is greater than the third frequency $F_{c-h}$, where $f_K = f_1 + \sum_{i=2}^{K}\left(b_{i-1} + f_{i,i-1}\right)$. Similarly, in the case 1b, the frequency domain resource corresponding to the (K-1)th time unit is the frequency domain resource whose frequency domain position is the highest in the M frequency domain resources, and the frequency domain resource corresponding to the Kth time unit is the frequency domain resource whose frequency domain position is the lowest in the M frequency domain resources. In this way, the formula (13) may be rewritten as a formula (15), and the formula (14) may be rewritten as a formula (16).

$$f_m = \begin{cases} f_1 + \sum_{i=2}^{m \bmod N}\left(b_{i-1} + f_{i,i-1}\right), & if \ (m \bmod N) < K \\ F_l + \sum_{i=K+1}^{m \bmod N}\left(b_{i-1} + f_{i,i-1}\right), & if \ (m \bmod N) \geq K \end{cases} \qquad \text{formula (15)}$$

$$f_m = \begin{cases} f_1 + \sum_{i=2}^{m \bmod N}\left(b_{i-1} + f_{i,i-1}\right), & if \ (m \bmod N) < K \\ F_l, & if \ (m \bmod N) = K \\ F_l + \sum_{i=K+1}^{m \bmod N}\left(b_{i-1} + f_{i,i-1}\right), & if \ (m \bmod N) > K \end{cases} \qquad \text{formula (16)}$$

In the formula (15) and the formula (16), $F_l$ is the first frequency. For specific meanings of other parameters, refer to the formula (9). Details are not described again.

3. For the second frequency domain position relationship:

According to the foregoing descriptions of the second frequency domain position relationship, a difference from the position relationship 1b lies in: A frequency domain end position of a frequency domain resource corresponding to a previous time unit of the frequency domain resource whose frequency domain position is the lowest in the M frequency domain resources is less than or equal to the third frequency. When the frequency domain end position is equal to the third frequency, the second frequency domain position relationship is applicable to the foregoing case 1a and case 1b. When the frequency domain end position is less than the third frequency, the second frequency domain position relationship is applicable to the foregoing case 1c. In addition, formulas for determining the $K^{th}$ time unit are also different in the position relationship 1b and the second frequency domain position relationship. For details, refer to the related descriptions of the formula (3), and the details are not described herein again. It may be understood that, for the second frequency domain position relationship, because the frequency domain start position of the frequency domain resource whose frequency domain position is the lowest in the M frequency domain resources is also the first frequency, in the second frequency domain position relationship, the frequency domain start position of the frequency domain resource corresponding to the $m^{th}$ time unit may be determined by reusing the foregoing formulas (13) to (16). Details are not described again.

For the case 2:

It may be understood that, in the case 2, because the first frequency is determined, the frequency domain resource whose frequency domain position is the lowest in the M frequency domain resources may be determined based on the first frequency. In this way, the frequency domain resource corresponding to the $K^{th}$ time unit may be determined based on the third frequency that is determined based on the first frequency, so that the correspondence between the M frequency domain resources and the N time units can be determined.

It should be understood that a frequency domain position relationship in the case 2 is similar to the frequency domain position relationship in the case 1, and a difference lies in: A frequency domain position relationship between a frequency domain resource corresponding to a $t^{th}$ time unit and the first frequency is different from the foregoing first frequency domain position relationship and second frequency domain position relationship. The following describes a specific implementation of determining the $K^{th}$ time unit.

In a possible implementation, that the frequency domain resource corresponding to the $K^{th}$ time unit is determined based on the first frequency includes: The $K^{th}$ time unit is determined based on the frequency domain position relationship between the frequency domain resource corresponding to the $t^{th}$ time unit and the first frequency. The frequency position relationship is a third frequency domain position relationship or a fourth frequency domain position relationship. The third frequency domain position relationship is: A frequency domain position corresponding to a sum of a frequency domain start position of the frequency domain resource corresponding to the $t^{th}$ time unit and $b_t$ is equal to the first frequency; or the frequency domain position is greater than the first frequency, where a difference between the frequency domain position and the first frequency is less than $b_{t+1}$ or $b$. The fourth frequency domain position relationship is: A frequency domain position corresponding to a sum of a frequency domain start position of the frequency domain resource corresponding to the $t^{th}$ time unit and $b_t$ is less than the first frequency. $b_t$ is a bandwidth of the frequency domain resource corresponding to the $t^{th}$ time unit, $b_{t+1}$ is a bandwidth of a frequency domain resource corresponding to a $(t+1)^{th}$ time unit, and $b$ is a bandwidth occupied by each time of frequency hopping. It may be understood that, when the bandwidth occupied by each time of frequency hopping is the same, $b_t$ may be equal to $b$.

In other words, the first apparatus may alternatively determine the $K^{th}$ time unit based on the frequency domain position relationship between the frequency domain resource corresponding to the $t^{th}$ time unit and the first frequency, so that different position relationships may correspond to different $K^{th}$ time units and different frequency domain resources corresponding to the $K^{th}$ time units. In this way, resource utilization or resource scheduling flexibility can be improved.

In a possible implementation, the third frequency domain position relationship may include a position relationship 3a or a position relationship 3b. In the position relationship 3a, the frequency domain resource corresponding to the $t^{th}$ time unit is the frequency domain resource whose frequency domain position is the lowest in the M frequency domain resources, and a frequency domain end position (namely, a lowest frequency domain position) of the frequency domain resource is greater than or equal to the first frequency. The frequency domain resource corresponding to the $(t+1)^{th}$ time unit is the frequency domain resource whose frequency domain position is the highest in the M frequency domain resources, and a frequency domain start position of the frequency domain resource is determined based on the frequency domain end position of the frequency domain resource corresponding to the $t^{th}$ time unit and the combined bandwidth B. In this way, the frequency domain start position of the frequency domain resource corresponding to the $(t+1)^{th}$ time unit may be greater than or equal to the third frequency. In the position relationship 3b, a difference from the position relationship 3a lies in: The frequency domain resource corresponding to the $(t+1)^{th}$ time unit is the frequency domain resource whose frequency domain position is the highest in the M frequency domain resources, and the frequency domain resource corresponding to the $t^{th}$ time unit may not be the frequency domain resource whose frequency domain position is the lowest in the M frequency domain resources. A frequency domain start position of the frequency domain resource corresponding to the $(t+1)^{th}$ time unit may be equal to the third frequency.

In other words, for the position relationship 3a, the lowest frequency domain position of the frequency domain resource whose frequency domain position is the lowest in the M frequency domain resources may be greater than the first frequency. To be specific, when the first apparatus performs frequency hopping to a position near a lowest frequency (namely, the first frequency), a frequency domain start position of a next hop is greater than the third frequency. For the position relationship 3b, when the first apparatus performs frequency hopping to a position near the first frequency, a next hop starts from the third frequency.

It may be understood that, for the fourth frequency domain position relationship, an actual bandwidth of the frequency domain resource corresponding to the $t^{th}$ time unit is less than $b_t$, an actual frequency domain end position (namely, a lowest frequency domain position) of the frequency domain resource corresponding to the $t^{th}$ time unit may be equal to the first frequency, and a frequency domain start position of the frequency domain resource corresponding to the $(t+1)^{th}$ time unit may be equal to the third frequency. To be specific, when the first apparatus performs frequency hopping to a position near a lowest frequency, the first apparatus may continue to perform frequency hopping in a first frequency direction. However, an actual frequency hopping bandwidth is less than a configured bandwidth, where the configured bandwidth may be, for example, $b_t$ or the bandwidth $b$ occupied by each time of frequency hopping.

It should be understood that the frequency domain position relationship may be agreed on in a protocol; the frequency domain position relationship may be negotiated in advance by the first apparatus and the network; or the frequency domain position relationship may be indicated or configured by the network. This is not specifically limited in this embodiment of this application.

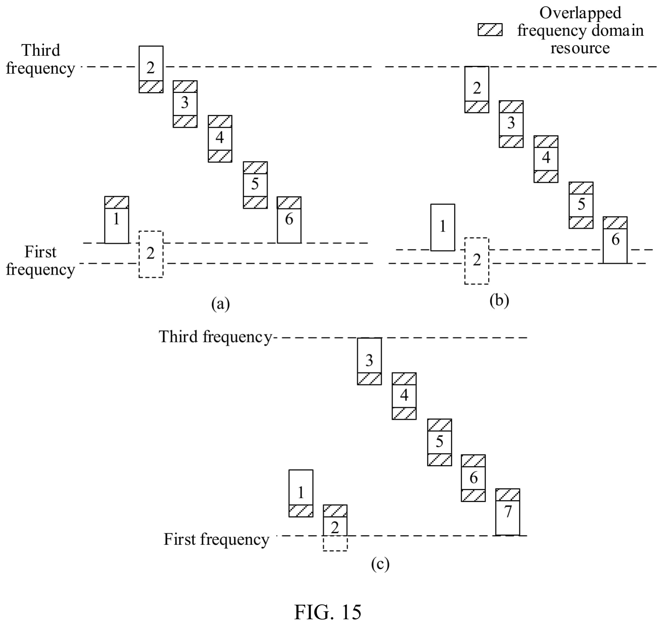

For example, for details about the position relationship 3a, refer to (a) in FIG. 15; for details about the position relationship 3b, refer to (b) in FIG. 15; and for details about the fourth frequency domain position relationship, refer to (c) in FIG. 15. The following separately provides descriptions.

For the position relationship 3a:

In (a) in FIG. 15, the $t^{th}$ time unit is a $1^{st}$ time unit, a frequency domain resource #1 corresponding to the $1^{st}$ time unit and a frequency domain resource #6 corresponding to a $6^{th}$ time unit may be frequency domain resources whose frequency domain positions are the lowest in six frequency domain resources, and a lowest frequency domain position of the frequency domain resource #1 corresponding to the $1^{st}$ time unit is greater than the first frequency. The $(t+1)^{th}$ time unit is a $2^{nd}$ time unit, a frequency domain resource #2 corresponding to the $2^{nd}$ time unit is a frequency domain resource whose frequency domain position is the highest in the six frequency domain resources, and a frequency domain start position (namely, a highest frequency domain position) of the frequency domain resource #2 corresponding to the $2^{nd}$ time unit is greater than the third frequency.

It may be understood that, as shown in (a) in FIG. 15, the frequency domain resource #1 corresponding to the $1^{st}$ time unit may be jointly processed with remaining frequency domain resources (for example, the frequency domain resource #2 corresponding to the $2^{nd}$ time unit to the frequency domain resource #6 corresponding to the $6^{th}$ time unit), to improve the resource utilization.

For the position relationship 3b:

In (b) in FIG. 15, the $t^{th}$ time unit is a $1^{st}$ time unit, a frequency domain resource #1 corresponding to the $1^{st}$ time unit is not a frequency domain resource whose frequency domain position is the lowest in six frequency domain resources, and a frequency domain resource #6 corresponding to a $6^{th}$ time unit is the frequency domain resource whose frequency domain position is the lowest in the six frequency domain resources. The $(t+1)^{th}$ time unit is a $2^{nd}$ time unit, a frequency domain resource #2 corresponding to the 2<sup>nd</sup> time unit is a frequency domain resource whose frequency domain position is the highest in the six frequency domain resources, and a frequency domain start position of the frequency domain resource #2 corresponding to the 2<sup>nd</sup> time unit is equal to the third frequency.

It may be understood that, as shown in (b) in FIG. 15, the frequency domain resource #1 corresponding to the 1<sup>st</sup> time unit may not be jointly processed with remaining frequency domain resources (for example, the frequency domain resource #2 corresponding to the 2<sup>nd</sup> time unit, a frequency domain resource #3 corresponding to a 3<sup>rd</sup> time unit, a frequency domain resource #4 corresponding to a 4<sup>th</sup> time unit, a frequency domain resource #5 corresponding to a 5<sup>th</sup> time unit, and the frequency domain resource #6 corresponding to the 6<sup>th</sup> time unit). In this way, the resource scheduling flexibility of the network can be improved.

For the fourth frequency domain position relationship:

In (c) in FIG. 15, the t<sup>th</sup> time unit is a 2<sup>nd</sup> time unit, an actual bandwidth of a frequency domain resource #2 corresponding to the 2<sup>nd</sup> time unit is less than a bandwidth configured for the frequency domain resource #2, and a frequency domain end position (namely, a lowest frequency domain position) of the frequency domain resource #2 is equal to the first frequency. In other words, that a lowest frequency occupied by a reference signal sent by a transmit end and the first frequency are overlapped may be used as a default selection of the transmit end and a receive end, so that no additional indication is needed, and signaling overheads can be reduced.

It should be understood that in (c) in FIG. 15, a frequency domain resource #1 and the frequency domain resource #2 may not be jointly processed with remaining frequency domain resources (for example, a frequency domain resource #3 corresponding to a 3<sup>rd</sup> time unit, a frequency domain resource #4 corresponding to a 4<sup>th</sup> time unit, a frequency domain resource #5 corresponding to a 5<sup>th</sup> time unit, a frequency domain resource #6 corresponding to a 6<sup>th</sup> time unit, and a frequency domain resource #7 corresponding to a 7<sup>th</sup> time unit). In this way, the resource scheduling flexibility of the network can be improved.

For example, whether the frequency domain resource corresponding to the t<sup>th</sup> time unit is the frequency domain resource corresponding to the K<sup>th</sup> time unit may be determined based on the third frequency domain position relationship or the fourth frequency domain position relationship. If it is determined that the frequency domain resource corresponding to the t<sup>th</sup> time unit is not the frequency domain resource corresponding to the K<sup>th</sup> time unit, the first apparatus may determine, based on the frequency domain resource corresponding to the t<sup>th</sup> time unit and based on both $b_i$ and $f_{i,i-1}$, $b$, or both $b$ and $p$, frequency domain resources corresponding to the (t+1)<sup>th</sup> time unit, a (t+2)<sup>th</sup> time unit, and a (t+x)<sup>th</sup> time unit or frequency domain resources corresponding to a (t-1)<sup>th</sup> time unit, a (t-2)<sup>th</sup> time unit, and a (t-x)<sup>th</sup> time unit, and determine, based on the foregoing position relationship, whether the frequency domain resource corresponding to the (t+x)<sup>th</sup> time unit or the (t-x)<sup>th</sup> time unit is the frequency domain resource corresponding to the K<sup>th</sup> time unit.

The following uses a case 2a and a case 2b for description.

For the case 2a:

In a possible implementation, the frequency domain resource corresponding to the K<sup>th</sup> time unit is the frequency domain resource whose frequency domain position is the highest in the M frequency domain resources, and a frequency domain resource corresponding to a (K-1)<sup>th</sup> time unit is the frequency domain resource whose frequency domain position is the lowest in the M frequency domain resources. That the K<sup>th</sup> time unit is determined based on the frequency domain position relationship between the frequency domain resource corresponding to the t<sup>th</sup> time unit and the first frequency includes: The K<sup>th</sup> time unit is determined based on the frequency domain position relationship and a frequency domain resource corresponding to a 1<sup>st</sup> time unit.

For the third frequency domain position correspondence, a ranking of the K<sup>th</sup> time unit may be determined by using a formula (17) or (18).

$$K = \max_{t}\{f_1 - \sum_{i=1}^{t}(b_i + f_{i,i-1}) \geq F_l\} + 1 \qquad \text{formula (17)}$$

$$K = \min_{t}\{f_1 - \sum_{i=1}^{t}(b_i + f_{i,i-1}) < F_l\} \qquad \text{formula (18)}$$

In the formulas (17) and (18), $F_l$ is the first frequency. For specific meanings of other parameters, refer to the related descriptions of the formula (3) and the formula (4). Details are not described herein again.

It may be understood that the foregoing formula (17) and formula (18) are specific to $n$ time units in one frequency hopping pattern periodicity, that is, N is equal to $n$. If N is greater than $n$, the formula (17) may be rewritten as a formula (19), and the formula (18) may be rewritten as a formula (20).

$$K=\max_{t}\left\{f_1 - \sum_{i=1}^{t \bmod n}\left(b_i + f_{i,i-1}\right) \geq F_l\right\} + 1 \qquad \text{formula (19)}$$

$$K=\min_{t}\left\{f_1 - \sum_{i=1}^{t \bmod n}\left(b_i + f_{i,i-1}\right) < F_l\right\} \qquad \text{formula (20)}$$

It should be understood that, for the fourth frequency domain position correspondence, a ranking of the $K^{th}$ time unit may be determined by using a formula (21).

$$K=\min_{t}\left\{f_1 - \sum_{i=1}^{t}\left(b_i + f_{i,i-1}\right) < F_l\right\} + 1 \qquad \text{formula (21)}$$

For the specific parameters in the formula (21), refer to the foregoing formula (17) and formula (18). Details are not described again. It may be understood that, for the formula (21), when frequency domain resources are in descending order from the frequency domain resource corresponding to the $1^{st}$ time unit, until the frequency domain end position (namely, the lowest frequency domain position) of the frequency domain resource corresponding to the $t^{th}$ time unit is close to the first frequency $F_l$ and less than $F_l$, it may be determined that the $t^{th}$ time unit is the $(K-1)^{th}$ time unit, namely, the time unit that is before the wrapping, and the $(t+1)^{th}$ time unit is the $K^{th}$ time unit, namely, the wrapping time unit.

It may be understood that this is specific to n time units in one frequency hopping pattern periodicity, that is, N is equal to *n*. If N is greater than *n,* the foregoing formula (21) may be rewritten as a formula (22).

$$K=\min_{t}\left\{f_1 - \sum_{i=1}^{t \bmod n}\left(b_i + f_{i,i-1}\right) < F_l\right\} + 1 \qquad \text{formula (22)}$$

For the case 2b:

The case 2b is similar to the case 2a. A difference lies in: The frequency domain resource corresponding to the $K^{th}$ time unit is the frequency domain resource whose frequency domain position is the lowest in the M frequency domain resources, and the frequency domain resource corresponding to the $(K+1)^{th}$ time unit is the frequency domain resource whose frequency domain position is the highest in the M frequency domain resources. In other words, the $K^{th}$ time unit is the time unit that is before the wrapping, and the $(K+1)^{th}$ time unit is the wrapping time unit.

In other words, in the formulas (17) to (22) in the foregoing case 2a, a formula corresponding to K is K+1 in the case 2b. For example, $K = \min_{t}\left\{f_1 - \sum_{i=1}^{t}\left(b_i + f_{i,i-1}\right) < F_l\right\}$ in the formula (18) is K+1 in the case 2b, that is, $K = \min_{t}\left\{f_1 - \sum_{i=1}^{t}\left(b_i + f_{i,i-1}\right) < F_l\right\} - 1$. For example, $K=\min_{t}\left\{f_1 - \sum_{i=1}^{t}\left(b_i + f_{i,i-1}\right) < F_l\right\} + 1$ in the formula (21) is K+1 in the case 2b, that is, $K=\min_{t}\left\{f_1 - \sum_{i=1}^{t}\left(b_i + f_{i,i-1}\right) < F_l\right\}$.

It may be understood that, in the foregoing formulas (17) to (22), for the overlapped frequency hopping in the solution 1, when the bandwidth occupied by each time of frequency hopping is the same, the overlapped size between two adjacent frequency domain resources is also the same. Therefore, it may be determined, by using the bandwidth *b* (or the quantity of RBs) occupied by each time of frequency hopping and the overlapped size *p,* that $\sum_{i=1}^{t}\left(b_i + f_{i,i-1}\right)=t \cdot b - (t - 1)p$.

It may be further understood that for the non-overlapped frequency hopping in the solution 2, $f_{i,i-1}$ may be the offset between the frequency domain end position of the frequency domain resource corresponding to the $i^{th}$ time unit and the frequency domain start position of the frequency domain resource corresponding to the $(i+1)^{th}$ time unit. Therefore, $f_{i,i-1}=0$ when the plurality of frequency domain resources for frequency hopping may be consecutive in frequency domain. It may be further understood that when the bandwidth occupied by each time of frequency hopping is the same, $\sum_{i=1}^{t}\left(b_i + f_{i,i-1}\right) = t \cdot b$, where b is the bandwidth occupied by each time of frequency hopping.

It should be understood that the foregoing formulas (17) to (22) are merely examples, and the $K^{th}$ time unit may alternatively be determined based on a frequency domain resource corresponding to another time unit. A specific manner is similar to those corresponding to the foregoing formulas (17) to (22). Details are not described herein again.

It may be understood that in the case 2, the position relationship 3b corresponds to a case 2c. To be specific, the frequency domain resource corresponding to the $K^{th}$ time unit is the frequency domain resource whose frequency domain position is the highest in the M frequency domain resources, and a frequency domain resource corresponding to a $(K-1)^{th}$ time unit is not the frequency domain resource whose frequency domain position is the lowest in the M frequency domain resources; or the frequency domain resource corresponding to the K$^{th}$ time unit is not the frequency domain resource whose frequency domain position is the lowest in the M frequency domain resources, and the frequency domain resource corresponding to the (K+1)$^{th}$ time unit is the frequency domain resource whose frequency domain position is the highest in the M frequency domain resources, for example, as in the case shown in (b) in FIG. 15. The foregoing formulas (17) to (22) are also applicable to the case 2c.

The following describes a specific implementation of determining the correspondence between the M frequency domain resources and the N time units based on the K$^{th}$ time unit and the frequency domain resource corresponding to the K$^{th}$ time unit.

It may be understood that the case 2 is similar to the case 1, and a difference lies in: The third frequency domain position relationship and the fourth frequency domain position relationship correspond to different frequency hopping patterns. The following separately provides descriptions by using an example in which the frequency domain start position of the frequency domain resource corresponding to each time unit in the N time units is determined.

For the third frequency domain position relationship:

1. For the position relationship 3a:

In the position relationship 3a, because the frequency domain end position of the frequency domain resource whose frequency domain position is the lowest in the M frequency domain resources may be greater than the first frequency (as shown in (a) in FIG. 15), the frequency domain start position of the frequency domain resource corresponding to each time unit in the N time units may be greater than the third frequency.

In the case 2a, the frequency domain resource corresponding to the K$^{th}$ time unit is the frequency domain resource whose frequency domain position is the highest in the M frequency domain resources, and the frequency domain resource corresponding to the (K-1)$^{th}$ time unit is the frequency domain resource whose frequency domain position is the lowest in the M frequency domain resources. In other words, a frequency domain end position (namely, a lowest frequency domain position) $F_{K-1}$ of the frequency domain resource corresponding to the (K-1)$^{th}$ time unit may be greater than or equal to the first frequency $F_l$, and a frequency domain start position of the frequency domain resource corresponding to the K$^{th}$ time unit is greater than or equal to the third frequency $F_{c-h}$, that is, the frequency domain start position is a sum of $F_{K-1}$ and the combined bandwidth. For details about the combined bandwidth, refer to $B$ in the formula (1), where

$$B = \sum_{i=1}^{n}\left(b_i + f_{i,i-1}\right)$$ . For $\sum_{i=1}^{n}\left(b_i + f_{i,i-1}\right)$, refer to the formula (2). Details are not described again.

For example, a frequency domain start position of a frequency domain resource corresponding to an m$^{th}$ time unit may be determined according to a formula (23) or a formula (24).

$$f_m = \begin{cases} f_1 - \sum_{i=2}^{m \bmod N}\left(b_{i-1} + f_{i,i-1}\right), & \text{if } (m \bmod N) < K \\ F_{k-1} + \sum_{i=1}^{n}\left(b_i + f_{i,i-1}\right) - \sum_{i=K+1}^{m \bmod N}\left(b_{i-1} + f_{i,i-1}\right), & \text{if } (m \bmod N) \geq K \end{cases} \qquad \text{formula (23)}$$

In the formula (23), $f_m$ is the frequency domain start position of the frequency domain resource corresponding to the m$^{th}$ time unit, $n$ is the quantity of frequency hopping times or the quantity of frequency hops (namely, the quantity of frequency hopping times or the quantity of frequency hops in one frequency hopping pattern periodicity) in the formula (2), $f_1$ is a frequency domain start position of the frequency domain resource corresponding to the 1$^{st}$ time unit in the N time units, $F_{K-1}$ is the frequency domain end position (namely, the lowest frequency domain position) of the frequency domain resource corresponding to the (K-1)$^{th}$ time unit, $b_i$ is the bandwidth of the frequency domain resource corresponding to the i$^{th}$ time unit in the n time units, and $f_{i,i-1}$ is the frequency domain offset between resources corresponding to the i$^{th}$ time unit and the (i-1)$^{th}$ time unit in the N time units in the formula (2). $f_{1,0}$=0, and $f_{K,K-1}$=0. It may be understood that $f_{K,K-1}$=0 may indicate that a frequency domain offset between the frequency domain resources corresponding to the K$^{th}$ time unit and the (K-1)$^{th}$ time unit is 0, or may indicate that this case is unavailable, meaningless, or the like.

It may be further understood that $f_{K,K-1}$=0 may alternatively indicate that a frequency domain offset between frequency domain resources corresponding to an m1$^{th}$ time unit and an (m1-1)$^{th}$ time unit is 0, or may indicate that this case is unavailable, meaningless, or the like. (m1 mod N)=K, and ((m1 - 1) mod N)=K - 1.

It may be understood that, for the formula (23), when a remainder obtained by dividing m by N is less than K, that is, (m mod N) < K, $f_m$ may be in descending order starting from $f_1$, until a frequency domain end position (namely, a lowest frequency domain position) of the frequency domain resource corresponding to $f_m$ is equal to $F_{K-1}$, to be specific, a frequency domain start position of the frequency domain resource corresponding to the (K-1)$^{th}$ time unit is

$$f_{K-1} = f_1 - \sum_{i=2}^{K-1}\left(b_{i-1} + f_{i,i-1}\right)$$ , in other words, the frequency domain end position $F_{K-1}$ of the frequency domain resource corresponding to the (K-1)$^{th}$ time unit is a difference between $f_{K-1}$ and a bandwidth $b_{K-1}$ of the frequency domain resource corresponding to the (K-1)$^{th}$ time unit, that is, $F_{K-1}$=$f_{K-1}$-$b_{K-1}$, where $F_{K-1} \geq F_l$. When (m mod N) = K, $f_m$ is

equal to the frequency domain start position $f_K$ of the frequency domain resource for the K$^{th}$ time unit, and $f_m$ may be greater than or equal to the third frequency $F_{c-h}$. For example, $f_K$ may be a sum of $F_{K-1}$ and the combined bandwidth, that is, $f_K = F_{K-1} + B$. It may be understood that, according to the related descriptions of the foregoing formula (2), $B = \sum_{i=1}^{n}(b_i + f_{i,i-1})$ . In this way, $f_K = F_{K-1} + \sum_{i=1}^{n}(b_i + f_{i,i-1})$ . It may be further understood that

$\sum_{i=1}^{n}(b_i + f_{i,i-1})$ in the formula (23) may be replaced with the combined bandwidth $B$, namely, the total bandwidth occupied by the M frequency domain resources. For details, refer to the related descriptions of the formula (1), and the details are not described herein again.

$$f_m = \begin{cases} f_1 - \sum_{i=2}^{m \bmod N}(b_{i-1} + f_{i,i-1}), & if \ (m \bmod N) < K \\ F_{K-1} + \sum_{i=1}^{n}(b_i + f_{i,i-1}), & if \ (m \bmod N) = K \\ F_{K-1} + \sum_{i=1}^{n}(b_i + f_{i,i-1}) - \sum_{i=K+1}^{m \bmod N}(b_{i-1} + f_{i,i-1}), & if \ (m \bmod N) > K \end{cases} \qquad \text{formula (24)}$$

It may be understood that for specific meanings of the parameters in the formula (24), refer to the formula (23). Details are not described again.

In the case 2b, the frequency domain resource corresponding to the K$^{th}$ time unit is the frequency domain resource whose frequency domain position is the lowest in the M frequency domain resources, and the frequency domain resource corresponding to the (K+1)$^{th}$ time unit is the frequency domain resource whose frequency domain position is the highest in the M frequency domain resources. In this case, the formula (23) may be rewritten as a formula (25).

$$f_m = \begin{cases} f_1 - \sum_{i=2}^{m \bmod N}(b_{i-1} + f_{i,i-1}), & if \ (m \bmod N) < K + 1 \\ F_K + \sum_{i=1}^{n}(b_i + f_{i,i-1}) - \sum_{i=K+2}^{m \bmod N}(b_{i-1} + f_{i,i-1}), & if \ (m \bmod N) \geq K + 1 \end{cases} \qquad \text{formula (25)}$$

$F_K$ is a frequency domain end position of the frequency domain resource corresponding to the K$^{th}$ time unit, and $f_{K+1,K}=0$. For specific meanings of the parameters in the formula (25), refer to the formula (23). Details are not described again.

It may be understood that the formula (25) may be rewritten as a formula (26).

$$f_m = \begin{cases} f_1 - \sum_{i=2}^{m \bmod N}(b_{i-1} + f_{i,i-1}), & if \ (m \bmod N) < K + 1 \\ F_K + \sum_{i=1}^{n}(b_i + f_{i,i-1}), & if \ (m \bmod N) = K + 1 \\ F_K + \sum_{i=1}^{n}(b_i + f_{i,i-1}) - \sum_{i=K+2}^{m \bmod N}(b_{i-1} + f_{i,i-1}), & if \ (m \bmod N) > K + 1 \end{cases} \qquad \text{formula (26)}$$

For specific meanings of the parameters in the formula (26), refer to the formula (25). Details are not described again.

2. For the position relationship 3b:

According to the foregoing descriptions of the position relationship 3b, a difference from the position relationship 3a lies in: A highest frequency domain position (namely, the frequency domain start position) of the frequency domain resource whose frequency domain position is the highest in the M frequency domain resources is the third frequency $F_{c-h}$, and a frequency domain end position of a frequency domain resource corresponding to a previous time unit of the frequency domain resource whose frequency domain position is the highest is greater than the first frequency $F_l$. According to the foregoing descriptions of the case 2c, the position relationship 3b is applicable to the case 2c. The following provides descriptions by using an example in which the frequency domain resource corresponding to the K$^{th}$ time unit is the frequency domain resource whose frequency domain position is the highest in the M frequency domain resources, and the frequency domain resource corresponding to the (K-1)$^{th}$ time unit is not the frequency domain resource whose frequency domain position is the lowest in the M frequency domain resources.

For example, a frequency domain start position of a frequency domain resource corresponding to an m$^{th}$ time unit may be determined according to a formula (27) or a formula (28).

$$f_m = \begin{cases} f_1 - \sum_{i=2}^{m \bmod N}(b_{i-1} + f_{i,i-1}), & if\ (m \bmod N) < K \\ F_{c-h} - \sum_{i=K+1}^{m \bmod N}(b_{i-1} + f_{i,i-1}), & if\ (m \bmod N) \geq K \end{cases} \qquad \text{formula (27)}$$

$$f_m = \begin{cases} f_1 - \sum_{i=2}^{m \bmod N}(b_{i-1} + f_{i,i-1}), & if\ (m \bmod N) < K \\ F_{c-h}, & if\ (m \bmod N) = K \\ F_{c-h} - \sum_{i=K+1}^{m \bmod N}(b_{i-1} + f_{i,i-1}), & if\ (m \bmod N) > K \end{cases} \qquad \text{formula (28)}$$

In the formula (27) and the formula (28), $F_{c-h}$ is the third frequency, and $F_{c-h}$ may be replaced with $F_l + \sum_{i=1}^{n}(b_i + f_{i,i-1})$. For specific meanings of other parameters, refer to the formula (23). Details are not described again.

3. For the fourth frequency domain position relationship:

According to the foregoing descriptions of the fourth frequency domain position relationship, a difference from the position relationship 3b lies in: A frequency domain resource corresponding to a previous time unit of the frequency domain resource whose frequency domain position is the highest in the M frequency domain resources is the frequency domain resource whose frequency domain position is the lowest in the M frequency domain resources. To be specific, a frequency domain start position (namely, a highest frequency domain position) of the frequency domain resource whose frequency domain position is the highest in the M frequency domain resources is the third frequency $F_{c-h}$, and a frequency domain end position (namely, a lowest frequency domain position) of the frequency domain resource whose frequency domain position is the lowest in the M frequency domain resources is actually the first frequency $F_l$, that is, an actual frequency domain end position of a frequency domain resource corresponding to the time unit that is before the wrapping is equal to the first frequency.

It may be understood that the fourth frequency domain position relationship is applicable to the case 2a and the case 2b. In the case 2a, the frequency domain resource corresponding to the $K^{th}$ time unit is the frequency domain resource whose frequency domain position is the highest in the M frequency domain resources, that is, the frequency domain start position of the frequency domain resource corresponding to the $K^{th}$ time unit is the third frequency $F_{c-h}$. The frequency domain resource corresponding to the $(K-1)^{th}$ time unit is the frequency domain resource whose frequency domain position is the lowest in the M frequency domain resources, that is, the frequency domain end position of the frequency domain resource corresponding to the $(K-1)^{th}$ time unit is the first frequency $F_l$.

For example, a frequency domain start position of a frequency domain resource corresponding to an $m^{th}$ time unit may be determined according to a formula (29) or a formula (30).

$$f_m = \begin{cases} f_1 - \sum_{i=2}^{m \bmod N}(b_{i-1} + f_{i,i-1}), & if\ (m \bmod N) < K \\ F_l + \sum_{i=1}^{n}(b_i + f_{i,i-1}) - \sum_{i=K+1}^{m \bmod N}(b_{i-1} + f_{i,i-1}), & if\ (m \bmod N) \geq K \end{cases} \qquad \text{formula (29)}$$

$$f_m = \begin{cases} f_1 - \sum_{i=2}^{m \bmod N}(b_{i-1} + f_{i,i-1}), & if\ (m \bmod N) < K \\ F_l + \sum_{i=1}^{n}(b_i + f_{i,i-1}), & if\ (m \bmod N) = K \\ F_l + \sum_{i=1}^{n}(b_i + f_{i,i-1}) - \sum_{i=K+1}^{m \bmod N}(b_{i-1} + f_{i,i-1}), & if\ (m \bmod N) > K \end{cases} \qquad \text{formula (30)}$$

For specific meanings of the parameters in the formula (29) and the formula (30), refer to the formula (23) and the formula (24). In addition, $F_l + \sum_{i=1}^{n}(b_i + f_{i,i-1})$ is actually the third frequency $F_{c-h}$.

In the case 2b, the frequency domain resource corresponding to the $K^{th}$ time unit is the frequency domain resource whose frequency domain position is the lowest in the M frequency domain resources, and the frequency domain resource corresponding to the $(K+1)^{th}$ time unit is the frequency domain resource whose frequency domain position is the highest in the M frequency domain resources. In other words, the frequency domain end position of the frequency domain resource corresponding to the $K^{th}$ time unit is the first frequency $F_l$, and the frequency domain start position of the frequency domain resource corresponding to the $(K+1)^{th}$ time unit is the third frequency $F_{c-h}$.

For example, a frequency domain start position of a frequency domain resource corresponding to an $m^{th}$ time unit may be determined according to a formula (31) or a formula (32).

$$f_m = \begin{cases} f_1 - \sum_{i=2}^{m \bmod N}(b_{i-1} + f_{i,i-1}), & \text{if } (m \bmod N) < K+1 \\ F_l + \sum_{i=1}^{n}(b_i + f_{i,i-1}) - \sum_{i=K+2}^{m \bmod N}(b_{i-1} + f_{i,i-1}), & \text{if } (m \bmod N) \geq K+1 \end{cases} \qquad \text{formula (31)}$$

$$f_m = \begin{cases} f_1 - \sum_{i=2}^{m \bmod N}(b_{i-1} + f_{i,i-1}), & \text{if } (m \bmod N) < K+1 \\ F_l + \sum_{i=1}^{n}(b_i + f_{i,i-1}), & \text{if } (m \bmod N) = K+1 \\ F_l + \sum_{i=1}^{n}(b_i + f_{i,i-1}) - \sum_{i=K+2}^{m \bmod N}(b_{i-1} + f_{i,i-1}), & \text{if } (m \bmod N) > K+1 \end{cases} \qquad \text{formula (32)}$$

For specific meanings of the parameters in the formula (31) and the formula (32), refer to the formula (23) and the formula (24). In addition, $F_l + \sum_{i=1}^{n}(b_i + f_{i,i-1})$ is actually the third frequency $F_{c-h}$.

B. Manner 2:

A difference of the manner 2 from the manner 1 lies in: The second frequency is determined, so that an upper limit of the M frequency domain resources can be determined based on the second frequency. In this way, the correspondence between the M frequency domain resources and the N time units may be determined by determining a fourth frequency (a frequency domain resource corresponding to the fourth frequency is a frequency domain resource whose frequency domain position is the lowest in the M frequency domain resources) based on the second frequency.

In a possible implementation, a frequency domain resource corresponding to a $K^{th}$ time unit in the N time units is determined based on the second frequency, and the frequency domain resource corresponding to the $K^{th}$ time unit is the frequency domain resource whose frequency domain position is the lowest or highest in the M frequency domain resources.

In other words, the frequency domain resource corresponding to the $K^{th}$ time unit, namely, the frequency domain resource whose frequency domain position is the highest or the frequency domain resource whose frequency domain position is the lowest in the M frequency domain resources, may be determined by using the first frequency. In this way, the frequency hopping resources for sending or receiving the reference signals can be uniquely determined, to avoid the interference.

The following separately describes, based on the case 1 and the case 2 in the "frequency hopping pattern 2" above, how to determine the frequency domain resource corresponding to the $K^{th}$ time unit.

In a possible implementation, that the frequency domain resource corresponding to the $K^{th}$ time unit is determined based on the second frequency includes: The frequency domain resource corresponding to the $K^{th}$ time unit is determined based on the fourth frequency, and the frequency domain resource corresponding to the fourth frequency is the frequency domain resource whose frequency domain position is the lowest in the M frequency domain resources, where the fourth frequency is determined based on the second frequency and a total bandwidth occupied by the M frequency domain resources.

It may be understood that the total bandwidth occupied by the M frequency domain resources may be the combined bandwidth in the "bandwidth-limited positioning scenario" above. For details, refer to the related descriptions in the "bandwidth-limited positioning scenario", and the details are not described again.

It should be understood that the fourth frequency may be a lowest frequency domain position relative to the second frequency. For example, the fourth frequency is a sum of the second frequency and the total bandwidth occupied by the M frequency domain resources. In other words, the fourth frequency may be determined by using a formula (33).

$$F_{c-l} = F_h - B \qquad \text{formula (33)}$$

In the formula (33), $F_{c-l}$ is the fourth frequency, $F_h$ is the second frequency, and $B$ is the total bandwidth occupied by the M frequency domain resources, namely, the combined bandwidth. The parameter B in the formula (33) is similar to that in the formula (1). For example,

$$B = \sum_{i=1}^{n}(b_i + f_{i,i-1}).$$

In a possible implementation, that the frequency domain resource corresponding to the $K^{th}$ time unit is determined based on the fourth frequency includes: The $K^{th}$ time unit is determined based on the fourth frequency and a frequency domain resource corresponding to a $t^{th}$ time unit in the N time units, where $1 \leq t \leq N$.

It may be understood that the $t^{th}$ time unit may be any time unit in the N time units. When N is greater than $n$ and t is greater than *n,* a ranking of the t$^{th}$ time unit in *n* time units in one frequency hopping pattern periodicity may be determined through t modulo *n* (for example, *t mod n*).

In other words, the first apparatus may determine a value of K in the K$^{th}$ time unit based on a ranking that is of any time unit in the N time units and that is in the n time units and a frequency domain resource corresponding to the time unit, that is, determine a ranking that is of a time unit corresponding to the frequency domain resource whose frequency domain position is the highest in the M frequency domain resources and that is in the n time units and/or a ranking that is of a time unit corresponding to the frequency domain resource whose frequency domain position is the lowest in the M frequency domain resources and that is in the n time units. In this way, frequency hopping resource information (for example, including frequency domain resource information and time domain resource information) for sending or receiving the reference signals can be uniquely determined.

It should be understood that, in consideration of resource utilization and resource scheduling flexibility, there may be different frequency domain position relationships between the frequency domain resource whose frequency domain position is the highest in the M frequency domain resources and the second frequency. Different frequency domain position relationships may correspond to different frequency hopping patterns, in other words, different frequency domain position relationships may correspond to different values of K.

The following further describes a specific implementation of determining the K$^{th}$ time unit.

In a possible implementation, that the K$^{th}$ time unit is determined based on the fourth frequency and the frequency domain resource corresponding to the t$^{th}$ time unit in the N time units includes: The K$^{th}$ time unit is determined based on a frequency domain position relationship between the frequency domain resource corresponding to the t$^{th}$ time unit and the second frequency. The frequency domain position relationship is a fifth frequency domain position relationship or a sixth frequency domain position relationship. The fifth frequency domain position relationship is: A frequency domain position corresponding to a sum of a frequency domain start position of the frequency domain resource corresponding to the t$^{th}$ time unit and $b_t$ is equal to the second frequency; or the frequency domain position is less than the second frequency, where a difference between the frequency domain position and the second frequency is less than $b_{t+1}$ or *b*. The sixth frequency domain position relationship is: A frequency domain position corresponding to a sum of a frequency domain start position of the frequency domain resource corresponding to the t$^{th}$ time unit and $b_t$ is greater than the second frequency. $b_t$ is a bandwidth of the frequency domain resource corresponding to the t$^{th}$ time unit, $b_{t+1}$ is a bandwidth of a frequency domain resource corresponding to a (t+1)$^{th}$ time unit, and *b* is a bandwidth occupied by each time of frequency hopping. It may be understood that, when the bandwidth occupied by each time of frequency hopping is the same, $b_t$ may be equal to *b*.

In other words, the first apparatus may alternatively determine the K$^{th}$ time unit based on the frequency domain position relationship between the frequency domain resource corresponding to the t$^{th}$ time unit and the second frequency, so that different position relationships may correspond to different K$^{th}$ time units and different frequency domain resources corresponding to the K$^{th}$ time units. In this way, resource utilization or resource scheduling flexibility can be improved.

In a possible implementation, the fifth frequency domain position relationship may include a position relationship 5a or a position relationship 5b. In the position relationship 5a, the frequency domain resource corresponding to the t$^{th}$ time unit is the frequency domain resource whose frequency domain position is the highest in the M frequency domain resources, and a frequency domain end position (namely, a highest frequency domain position) of the frequency domain resource is less than or equal to the second frequency. The frequency domain resource corresponding to the (t+1)$^{th}$ time unit is the frequency domain resource whose frequency domain position is the lowest in the M frequency domain resources, and a frequency domain start position of the frequency domain resource is determined based on the frequency domain start position of the frequency domain resource corresponding to the t$^{th}$ time unit and the combined bandwidth B. In this way, a frequency domain end position of the frequency domain resource corresponding to the (t+1)$^{th}$ time unit may be less than the fourth frequency. A difference of the position relationship 5b from the position relationship 5a lies in: The frequency domain resource corresponding to the t$^{th}$ time unit may not be the frequency domain resource whose frequency domain position is the highest in the M frequency domain resources. A frequency domain end position of the frequency domain resource corresponding to the (t+1)$^{th}$ time unit may be equal to the fourth frequency.

It should be understood that, for the sixth frequency domain position relationship, an actual bandwidth of the frequency domain resource corresponding to the t$^{th}$ time unit is less than $b_t$, to be specific, the frequency domain resource corresponding to the t$^{th}$ time unit is the frequency domain resource whose frequency domain position is the highest in the M frequency domain resources, that is, a frequency domain start position of the frequency domain resource corresponding to the (t+1)$^{th}$ time unit may be less than the fourth frequency.

In other words, for the position relationship 5a, the frequency domain end position (namely, the highest frequency domain position) of the frequency domain resource whose frequency domain position is the highest in the M frequency domain resources may be less than the second frequency. To be specific, when the first apparatus performs frequency hopping to a position near a lowest frequency (namely, the second frequency), a frequency domain start position of a next hop is less than the fourth frequency. For the position relationship 5b, when the first apparatus performs frequency hopping to a position near the second frequency, a next hop starts from the fourth frequency.

It may be understood that, for the sixth frequency domain position relationship, the actual bandwidth of the frequency domain resource corresponding to the $t^{th}$ time unit is less than $b_t$, an actual frequency domain end position (namely, a highest frequency domain position) of the frequency domain resource corresponding to the $t^{th}$ time unit may be equal to the second frequency, and a frequency domain end position of the frequency domain resource corresponding to the $(t+1)^{th}$ time unit may be equal to the fourth frequency. To be specific, when the first apparatus performs frequency hopping to a position near the second frequency (a highest frequency), the first apparatus may continue to perform frequency hopping in a second frequency direction. However, an actual frequency hopping bandwidth is less than a configured bandwidth, where the configured bandwidth may be, for example, $b_t$ or the bandwidth $b$ occupied by each time of frequency hopping.

It should be understood that the frequency domain position relationship may be agreed on in a protocol; the frequency domain position relationship may be negotiated in advance by the first apparatus and the network; or the frequency domain position relationship may be indicated or configured by the network. This is not specifically limited in this embodiment of this application.

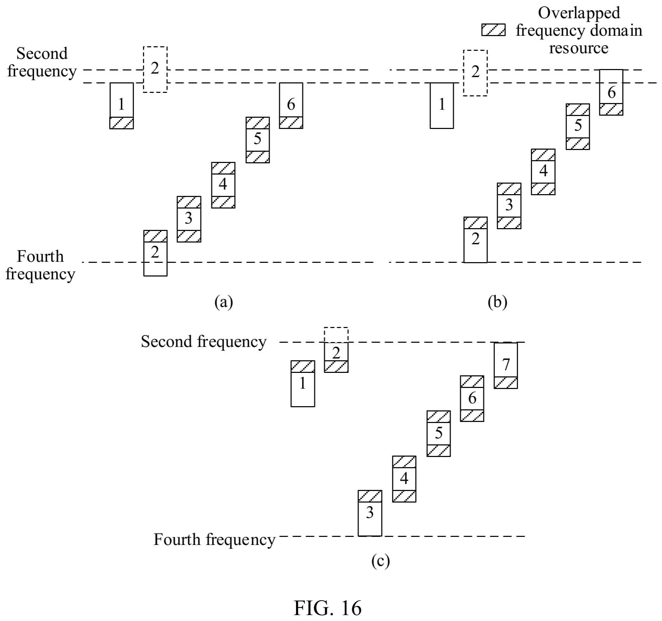

For example, for details about the position relationship 5a, refer to (a) in FIG. 16; for details about the position relationship 5b, refer to (b) in FIG. 16; and for details about the sixth frequency domain position relationship, refer to (c) in FIG. 16.

For the position relationship 5a, in (a) in FIG. 16, the $t^{th}$ time unit is a $1^{st}$ time unit, a frequency domain resource #1 corresponding to the $1^{st}$ time unit may be a frequency domain resource whose frequency domain position is the highest in six frequency domain resources, and a highest frequency domain position of the frequency domain resource #1 corresponding to the $1^{st}$ time unit is less than the second frequency. The $(t+1)^{th}$ time unit is a $2^{nd}$ time unit, a frequency domain resource #2 corresponding to the $2^{nd}$ time unit is a frequency domain resource whose frequency domain position is the lowest in the six frequency domain resources, and a frequency domain start position (namely, a lowest frequency domain position) of the frequency domain resource #2 corresponding to the $2^{nd}$ time unit is less than the fourth frequency.

It may be understood that, in the position relationship 5a, the frequency domain resource #1 corresponding to the $1^{st}$ time unit may be jointly processed with remaining frequency domain resources (for example, the frequency domain resource #2 corresponding to the $2^{nd}$ time unit to a frequency domain resource corresponding to a $6^{th}$ time unit), to improve the resource utilization.

For the position relationship 5b, in (b) in FIG. 16, the $t^{th}$ time unit is a $1^{st}$ time unit, a frequency domain resource #1 corresponding to the $1^{st}$ time unit is not a frequency domain resource whose frequency domain position is the highest in six frequency domain resources, and a frequency domain resource #6 corresponding to a $6^{th}$ time unit is the frequency domain resource whose frequency domain position is the highest in the six frequency domain resources. The $(t+1)^{th}$ time unit is a $2^{nd}$ time unit, a frequency domain resource #2 corresponding to the $2^{nd}$ time unit is a frequency domain resource whose frequency domain position is the lowest in the six frequency domain resources, and a frequency domain start position of the frequency domain resource #2 corresponding to the $2^{nd}$ time unit is equal to the fourth frequency. It may be understood that, as shown in (b) in FIG. 16, the frequency domain resource #1 corresponding to the $1^{st}$ time unit may not be jointly processed with remaining frequency domain resources (for example, the frequency domain resource #2 corresponding to the $2^{nd}$ time unit to the frequency domain resource #6 corresponding to the $6^{th}$ time unit). In this way, the resource scheduling flexibility of the network can be improved.

For the sixth frequency domain position relationship, in (c) in FIG. 16, the $t^{th}$ time unit is a $2^{nd}$ time unit, an actual bandwidth of a frequency domain resource #2 corresponding to the $2^{nd}$ time unit is less than a bandwidth configured for the frequency domain resource #2, and a frequency domain end position (namely, a highest frequency domain position) of the frequency domain resource #2 is equal to the second frequency. In other words, that a lowest frequency occupied by a reference signal sent by a transmit end and the first frequency are overlapped may be used as a default selection of the transmit end and a receive end, so that no additional indication is needed, and signaling overheads can be reduced.

It should be understood that in (c) in FIG. 16, a frequency domain resource #1 and the frequency domain resource #2 may not be jointly processed with remaining frequency domain resources (for example, a frequency domain resource #3 corresponding to a $3^{rd}$ time unit to a frequency domain resource #7 corresponding to a $7^{th}$ time unit). In this way, the resource scheduling flexibility of the network can be improved.

For example, whether the frequency domain resource corresponding to the $t^{th}$ time unit is the frequency domain resource corresponding to the $K^{th}$ time unit may be determined based on the fifth frequency domain position relationship or the sixth frequency domain position relationship. If it is determined that the frequency domain resource corresponding to the $t^{th}$ time unit is not the frequency domain resource corresponding to the $K^{th}$ time unit, the first apparatus may determine, based on the frequency domain resource corresponding to the $t^{th}$ time unit and based on both $b_i$ and $f_{i,i-1}$, $b$, or both $b$ and $p$, frequency domain resources corresponding to the $(t+1)^{th}$ time unit, a $(t+2)^{th}$ time unit, and a $(t+x)^{th}$ time unit or frequency domain resources corresponding to a $(t-1)^{th}$ time unit, a $(t-2)^{th}$ time unit, and a $(t-x)^{th}$ time unit, and determine, based on the foregoing position relationship, whether the frequency domain resource corresponding to the $(t+x)^{th}$ time unit or the $(t-x)^{th}$ time unit is the frequency domain resource corresponding to the $K^{th}$ time unit.

The following uses a case 1a and a case 1b for description.

For the case 1a:

In a possible implementation, the frequency domain resource corresponding to the K$^{th}$ time unit is the frequency domain resource whose frequency domain position is the highest in the M frequency domain resources, and a frequency domain resource corresponding to a (K+1)$^{th}$ time unit is the frequency domain resource whose frequency domain position is the lowest in the M frequency domain resources. That the K$^{th}$ time unit is determined based on the frequency domain position relationship between the frequency domain resource corresponding to the t$^{th}$ time unit and the second frequency includes: The K$^{th}$ time unit is determined based on the frequency domain position relationship and a frequency domain resource corresponding to a 1$^{st}$ time unit.

For the fifth frequency domain position correspondence, a ranking of the K$^{th}$ time unit may be determined by using a formula (34) or (35).

$$K = \max_{t}\left\{f_1 + \sum_{i=1}^{t}(b_i + f_{i,i-1}) \le F_h\right\} \qquad \text{formula (34)}$$

$$K + 1 = \min_{t}\left\{f_1 + \sum_{i=1}^{t}(b_i + f_{i,i-1}) > F_h\right\} \qquad \text{formula (35)}$$

In the formulas (34) and (35), $F_h$ is the second frequency. For specific meanings of other parameters, refer to the related descriptions of the formula (3) and the formula (4). Details are not described herein again.

It may be understood that the foregoing formula (33) and formula (34) are specific to $n$ time units in one frequency hopping pattern periodicity, that is, N is equal to $n$. If N is greater than n, the formula (34) may be rewritten as a formula (36), and the formula (35) may be rewritten as a formula (37).

$$K = \max_{t}\left\{f_1 + \sum_{i=1}^{t\ mod\ n}(b_i + f_{i,i-1}) \le F_h\right\} \qquad \text{formula (36)}$$

$$K + 1 = \min_{t}\left\{f_1 + \sum_{i=1}^{t\ mod\ n}(b_i + f_{i,i-1}) > F_h\right\} \qquad \text{formula (37)}$$

It should be understood that, for the fourth frequency domain position correspondence, a ranking of the (K+1)$^{th}$ time unit may be determined by using a formula (38).

$$K = \min_{t}\left\{f_1 + \sum_{i=1}^{t}(b_i + f_{i,i-1}) > F_h\right\} \qquad \text{formula (38)}$$

For the specific parameters in the formula (38), refer to the foregoing formula (34) and formula (35). Details are not described again.

It may be understood that this is specific to n time units in one frequency hopping pattern periodicity, that is, N is equal to $n$. If N is greater than $n$, the foregoing formula (38) may be rewritten as a formula (39).

$$K = \min_{t}\left\{f_1 + \sum_{i=1}^{t\ mod\ n}(b_i + f_{i,i-1}) > F_h\right\} \qquad \text{formula (39)}$$

For the case 1b:

The case 1b is similar to the case 1a. A difference lies in: The frequency domain resource corresponding to the K$^{th}$ time unit is the frequency domain resource whose frequency domain position is the lowest in the M frequency domain resources, and a frequency domain resource corresponding to a (K-1)$^{th}$ time unit is the frequency domain resource whose frequency domain position is the highest in the M frequency domain resources. In other words, the K$^{th}$ time unit is the wrapping time unit, and the (K-1)$^{th}$ time unit is the time unit that is before the wrapping.

In other words, in the formulas (34) to (39) in the foregoing case 1a, a formula corresponding to K+1 is K in the case 1b. For example, $K + 1 = \min_{t}\left\{f_1 + \sum_{i=1}^{t}(b_i + f_{i,i-1}) > F_h\right\}$ in the formula (37) is K in the case 1b, that is, $K = \min_{t}\left\{f_1 + \sum_{i=1}^{t}(b_i + f_{i,i-1}) > F_h\right\}$. For example, $K = \min_{t}\left\{f_1 + \sum_{i=1}^{t}(b_i + f_{i,i-1}) > F_h\right\}$ in the formula (38) is K-1 in the case 1b, that is, $K = \min\limits_{t}\left\{f_1 + \sum_{i=1}^{t}\left(b_i + f_{i,i-1}\right) > F_h\right\} + 1$ .

It should be understood that the foregoing formulas (34) to (39) are merely examples, and the K$^{th}$ time unit may alternatively be determined based on a frequency domain resource corresponding to another time unit. A specific manner is similar to those corresponding to the foregoing formulas (34) to (39). Details are not described herein again.

It may be understood that in the case 1, a case 1c may further exist for the first frequency domain position relationship and the second frequency domain position relationship. To be specific, the frequency domain resource corresponding to the K$^{th}$ time unit is not the frequency domain resource whose frequency domain position is the highest in the M frequency domain resources, and a frequency domain resource corresponding to a (K+1)$^{th}$ time unit is the frequency domain resource whose position is the lowest in the M frequency domain resources; or the frequency domain resource corresponding to the K$^{th}$ time unit is the frequency domain resource whose frequency domain position is the lowest in the M frequency domain resources, but a frequency domain resource corresponding to a (K-1)$^{th}$ time unit is not the frequency domain resource whose frequency domain position is the highest in the M frequency domain resources, for example, as in the case shown in (b) in FIG. 16. The foregoing formulas (34) to (39) are also applicable to the case 1c.

It should be understood that, in the manner 2, for the fifth frequency domain position relationship or the sixth frequency domain position relationship, manners of determining the correspondence between the M frequency domain resources and the N time units are similar to those corresponding to the foregoing formulas (9) to (16), or the correspondence between the M frequency domain resources and the N time units may be determined according to different formulas. The following provides examples for description.

1. For the position relationship 5a:

In the position relationship 5a, because the frequency domain end position of the frequency domain resource whose frequency domain position is the highest in the M frequency domain resources may be less than or equal to the second frequency, the frequency domain start position of the frequency domain resource whose frequency domain position is the lowest in the M frequency domain resources may be less than or equal to the fourth frequency.

In the case 1a, the frequency domain resource corresponding to the K$^{th}$ time unit is the frequency domain resource whose frequency domain position is the highest in the M frequency domain resources, and the frequency domain resource corresponding to the (K+1)$^{th}$ time unit is the frequency domain resource whose frequency domain position is the lowest in the M frequency domain resources. In other words, the frequency domain end position (namely, the highest frequency domain position) $F_K$ of the frequency domain resource corresponding to the K$^{th}$ time unit is less than or equal to the second frequency $F_h$, and the frequency domain start position of the frequency domain resource corresponding to the (K+1)$^{th}$ time unit is less than or equal to the fourth frequency, that is, the frequency domain start position is a difference between $F_K$ and the combined bandwidth. For details about the combined bandwidth, refer to $B$ in the formula (1), where $B = \sum_{i=1}^{n}\left(b_i + f_{i,i-1}\right)$ . For $\sum_{i=1}^{n}\left(b_i + f_{i,i-1}\right)$ , refer to the formula (2). Details are not described again.

For example, a frequency domain start position of a frequency domain resource corresponding to an m$^{th}$ time unit may be determined according to a formula (40) or a formula (41).

$$f_m = \begin{cases} f_1 + \sum_{i=2}^{m \bmod N}\left(b_{i-1} + f_{i,i-1}\right), & if\ (m\ mod\ N) < K + 1 \\ F_K - \sum_{i=1}^{n}\left(b_i + f_{i,i-1}\right) + \sum_{i=K+2}^{m \bmod N}\left(b_{i-1} + f_{i,i-1}\right), & if\ (m\ mod\ N) \geq K + 1 \end{cases} \quad \text{formula (40)}$$

$$f_m = \begin{cases} f_1 + \sum_{i=2}^{m \bmod N}\left(b_{i-1} + f_{i,i-1}\right), & if\ (m\ mod\ N) < K + 1 \\ F_K - \sum_{i=1}^{n}\left(b_i + f_{i,i-1}\right), & if\ (m\ mod\ N) = K + 1 \\ F_K - \sum_{i=1}^{n}\left(b_i + f_{i,i-1}\right) + \sum_{i=K+2}^{m \bmod N}\left(b_{i-1} + f_{i,i-1}\right), & if\ (m\ mod\ N) > K + 1 \end{cases} \quad \text{formula (41)}$$

For specific meanings of the parameters in the formula (40) and the formula (41), refer to the formula (9) and the formula (10). Details are not described again.

In the case 1b, the frequency domain resource corresponding to the K$^{th}$ time unit is the frequency domain resource whose frequency domain position is the lowest in the M frequency domain resources, and the frequency domain resource corresponding to the (K-1)$^{th}$ time unit is the frequency domain resource whose frequency domain position is the highest in the M frequency domain resources. In this case, the formula (40) may be rewritten as a formula (42).

$$f_m = \begin{cases} f_1 + \sum_{i=2}^{m \bmod N}(b_{i-1} + f_{i,i-1}), & if \ (m \bmod N) < K \\ F_{K-1} - \sum_{i=1}^{n}(b_i + f_{i,i-1}) + \sum_{i=K+1}^{m \bmod N}(b_{i-1} + f_{i,i-1}), & if \ (m \bmod N) \geq K \end{cases} \qquad \text{formula (42)}$$

$F_{K-1}$ is the highest frequency domain position (namely, the frequency domain end position) of the frequency domain resource corresponding to the (K-1)$^{th}$ time unit. For specific meanings of the parameters in the formula (42), refer to the formula (9). Details are not described again.

It may be understood that, in the case 1b, the formula (40) may be rewritten as a formula (43).

$$f_m = \begin{cases} f_1 + \sum_{i=2}^{m \bmod N}(b_{i-1} + f_{i,i-1}), & if \ (m \bmod N) < K \\ F_{K-1} - \sum_{i=1}^{n}(b_i + f_{i,i-1}), & if \ (m \bmod N) = K \\ F_{K-1} - \sum_{i=1}^{n}(b_i + f_{i,i-1}) + \sum_{i=K+1}^{m \bmod N}(b_{i-1} + f_{i,i-1}), & if \ (m \bmod N) > K \end{cases} \qquad \text{formula (43)}$$

For specific meanings of the parameters in the formula (43), refer to the formula (10). Details are not described again.

2. For the position relationship 5b:

According to the foregoing descriptions of the position relationship 5b, a difference from the position relationship 5a lies in: The lowest frequency domain position (namely, the frequency domain start position) of the frequency domain resource whose frequency domain position is the lowest in the M frequency domain resources is the fourth frequency $F_{c-l}$, and a frequency domain end position of a frequency domain resource corresponding to a previous time unit of the frequency domain resource whose frequency domain position is the lowest is less than the second frequency $F_h$. According to the foregoing descriptions of the case 1c, the position relationship 5b is applicable to the case 1c. The following provides descriptions by using an example in which the frequency domain resource corresponding to the K$^{th}$ time unit is the frequency domain resource whose frequency domain position is the lowest in the M frequency domain resources, and the frequency domain resource corresponding to the (K-1)$^{th}$ time unit is not the frequency domain resource whose frequency domain position is the highest in the M frequency domain resources (for example, in (b) in FIG. 16).

For example, a frequency domain start position of a frequency domain resource corresponding to an m$^{th}$ time unit may be determined according to a formula (44) or a formula (45).

$$f_m = \begin{cases} f_1 + \sum_{i=2}^{m \bmod N}(b_{i-1} + f_{i,i-1}), & if \ (m \bmod N) < K \\ F_{c-l} + \sum_{i=K+1}^{m \bmod N}(b_{i-1} + f_{i,i-1}), & if \ (m \bmod N) \geq K \end{cases} \qquad \text{formula (44)}$$

$$f_m = \begin{cases} f_1 + \sum_{i=2}^{m \bmod N}(b_{i-1} + f_{i,i-1}), & if \ (m \bmod N) < K \\ F_{c-l}, & if \ (m \bmod N) = K \\ F_{c-l} + \sum_{i=K+1}^{m \bmod N}(b_{i-1} + f_{i,i-1}), & if \ (m \bmod N) > K \end{cases} \qquad \text{formula (45)}$$

In the formula (44) and the formula (45), $F_{c-l}$ is the fourth frequency, and $F_{c-l}$ may be replaced with $F_h - \sum_{i=1}^{n}(b_i + f_{i,i-1})$ . For specific meanings of other parameters, refer to the formula (9). Details are not described again.

3. For the sixth frequency domain position relationship:

According to the foregoing descriptions of the sixth frequency domain position relationship, a difference from the position relationship 5b lies in: A frequency domain resource corresponding to a previous time unit of the frequency domain resource whose frequency domain position is the lowest in the M frequency domain resources is the frequency domain resource whose frequency domain position is the highest in the M frequency domain resources. To be specific, a frequency domain end position (namely, a highest frequency domain position) of the frequency domain resource whose frequency domain position is the highest in the M frequency domain resources is the second frequency $F_h$, and the frequency domain start position (namely, a lowest frequency domain position) of the frequency domain resource whose frequency domain position is the lowest in the M frequency domain resources is actually the fourth frequency $F_{c-l}$, that is, an actual frequency domain end position of a frequency domain resource corresponding to the time unit that is before the wrapping is equal to the second frequency.

It may be understood that the sixth frequency domain position relationship is applicable to the case 1a and the case 1b. In the case 1a, the frequency domain resource corresponding to the $K^{th}$ time unit is the frequency domain resource whose frequency domain position is the highest in the M frequency domain resources, that is, the frequency domain end position of the frequency domain resource corresponding to the $K^{th}$ time unit is the second frequency $F_h$. The frequency domain resource corresponding to the $(K+1)^{th}$ time unit is the frequency domain resource whose frequency domain position is the lowest in the M frequency domain resources, that is, the frequency domain start position of the frequency domain resource corresponding to the $(K+1)^{th}$ time unit is the fourth frequency $F_{c-l}$.

For example, a frequency domain start position of a frequency domain resource corresponding to an $m^{th}$ time unit may be determined according to a formula (46) or a formula (47).

$$f_m = \begin{cases} f_1 + \sum_{i=2}^{m\,mod\,N}(b_{i-1} + f_{i,i-1}), \ if \ (m\,mod\,N) < K+1 \\ F_h - \sum_{i=1}^{n}(b_i + f_{i,i-1}) + \sum_{i=K+2}^{m\,mod\,N}(b_{i-1} + f_{i,i-1}), if \ (m\,mod\,N) \geq K+1 \end{cases} \quad \text{formula (46)}$$

$$f_m = \begin{cases} f_1 + \sum_{i=2}^{m\,mod\,N}(b_{i-1} + f_{i,i-1}), \ if \ (m\,mod\,N) < K+1 \\ F_h - \sum_{i=1}^{n}(b_i + f_{i,i-1}), if \ (m\,mod\,N) = K+1 \\ F_h - \sum_{i=1}^{n}(b_i + f_{i,i-1}) + \sum_{i=K+2}^{m\,mod\,N}(b_{i-1} + f_{i,i-1}), if \ (m\,mod\,N) > K+1 \end{cases} \quad \text{formula (47)}$$

In the formula (46) and formula (47), $F_h - \sum_{i=1}^{n}(b_i + f_{i,i-1})$ may be replaced with the fourth frequency $F_{c-l}$. For specific meanings of other parameters, refer to the formula (9) and the formula (10).

In the case 1b, the frequency domain resource corresponding to the $(K-1)^{th}$ time unit is the frequency domain resource whose frequency domain position is the highest in the M frequency domain resources, and the frequency domain resource corresponding to the $K^{th}$ time unit is the frequency domain resource whose frequency domain position is the lowest in the M frequency domain resources. In other words, the frequency domain end position of the frequency domain resource corresponding to the $(K-1)^{th}$ time unit is the second frequency $F_h$, and the frequency domain start position of the frequency domain resource corresponding to the $(K+1)^{th}$ time unit is the fourth frequency $F_{c-l}$.

For example, a frequency domain start position of a frequency domain resource corresponding to an $m^{th}$ time unit may be determined according to a formula (48) or a formula (49).

$$f_m = \begin{cases} f_1 + \sum_{i=2}^{m\,mod\,N}(b_{i-1} + f_{i,i-1}), \ if \ (m\,mod\,N) < K \\ F_h - \sum_{i=1}^{n}(b_i + f_{i,i-1}) + \sum_{i=K+1}^{m\,mod\,N}(b_{i-1} + f_{i,i-1}), if \ (m\,mod\,N) \geq K \end{cases} \quad \text{formula (48)}$$

$$f_m = \begin{cases} f_1 - \sum_{i=2}^{m\,mod\,N}(b_{i-1} + f_{i,i-1}), \ if \ (m\,mod\,N) < K \\ F_h - \sum_{i=1}^{n}(b_i + f_{i,i-1}), if \ (m\,mod\,N) = K \\ F_h - \sum_{i=1}^{n}(b_i + f_{i,i-1}) + \sum_{i=K+1}^{m\,mod\,N}(b_{i-1} + f_{i,i-1}), if \ (m\,mod\,N) > K \end{cases} \quad \text{formula (49)}$$

In the formula (48) and formula (49), $F_h - \sum_{i=1}^{n}(b_i + f_{i,i-1})$ may be replaced with the fourth frequency $F_{c-l}$. For specific meanings of other parameters, refer to the formula (9) and the formula (10).

For the case 2:

It should be understood that a frequency domain position relationship in the case 2 is similar to the frequency domain position relationship in the case 1, and a difference lies in: A frequency domain position relationship between a frequency domain resource corresponding to a $t^{th}$ time unit and the fourth frequency is different from the fifth frequency domain position relationship and the sixth frequency domain position relationship. The following describes a specific implementation of determining the $K^{th}$ time unit.

In a possible implementation, that the frequency domain resource corresponding to the $K^{th}$ time unit is determined based on the second frequency includes: The $K^{th}$ time unit is determined based on the frequency domain position relationship between the frequency domain resource corresponding to the $t^{th}$ time unit and the fourth frequency.

The frequency position relationship is a seventh frequency domain position relationship or an eighth frequency domain position relationship. The seventh frequency domain position relationship is: A frequency domain position corresponding to a sum of a frequency domain start position of the frequency domain resource corresponding to the $t^{th}$ time unit and $b_t$ is less than the fourth frequency. The eighth frequency domain position relationship is: A frequency domain position corresponding to a sum of a frequency domain start position of the frequency domain resource corresponding to the $t^{th}$ time unit and $b_t$ is equal to the fourth frequency; or the frequency domain position is less than the fourth frequency, where a difference between the frequency domain position and the fourth frequency is less than $b_{t+1}$ or b. $b_t$ is a bandwidth of the frequency domain resource corresponding to the $t^{th}$ time unit, $b_{t+1}$ is a bandwidth of a frequency domain resource corresponding to a $(t+1)^{th}$ time unit, and $b$ is a bandwidth occupied by each time of frequency hopping. It may be understood that, when the bandwidth occupied by each time of frequency hopping is the same, $b_t$ may be equal to $b$.

In other words, the first apparatus may alternatively determine the $K^{th}$ time unit based on the frequency domain position relationship between the frequency domain resource corresponding to the $t^{th}$ time unit and the fourth frequency, so that different position relationships may correspond to different $K^{th}$ time units and different frequency domain resources corresponding to the $K^{th}$ time units. In this way, resource utilization or resource scheduling flexibility can be improved.

In a possible implementation, the seventh frequency domain position relationship may include a position relationship 7a or a position relationship 7b. In the position relationship 7a, an actual (actual) bandwidth of the frequency domain resource corresponding to the $t^{th}$ time unit is the same as $b_t$. In the position relationship 7b, an actual bandwidth of the frequency domain resource corresponding to the $t^{th}$ time unit is less than $b_t$, and an actual lowest frequency domain position of the frequency domain resource corresponding to the $t^{th}$ time unit may be equal to the fourth frequency.

In other words, for the position relationship 7a, a lowest frequency domain position of the frequency domain resource whose frequency domain position is the lowest in the M frequency domain resources may be less than the fourth frequency. To be specific, when the first apparatus performs frequency hopping to a position near a lowest frequency (namely, the fourth frequency), the first apparatus may continue to perform frequency hopping in a fourth frequency direction (namely, a frequency decreasing direction), so that a frequency domain end position of a frequency domain resource corresponding to a next hop (namely, a next time unit) may be less than the second frequency. For the position relationship 7b, an actual lowest frequency domain position (namely, a frequency domain end position) of the frequency domain resource whose frequency domain position is the lowest in the M frequency domain resources is equal to the fourth frequency. To be specific, when the first apparatus performs frequency hopping to a position near a lowest frequency, the first apparatus may continue to perform frequency hopping in a fourth frequency direction. However, an actual frequency hopping bandwidth is less than a configured bandwidth, where the configured bandwidth may be, for example, $b_t$ or the bandwidth $b$ occupied by each time of frequency hopping. Therefore, a frequency domain end position of a frequency domain resource corresponding to a next hop may be equal to the second frequency.

It may be understood that, for the eighth frequency domain position relationship, a lowest frequency domain position of the frequency domain resource whose frequency domain position is the lowest in the M frequency domain resources is less than or equal to the fourth frequency. In other words, when the first apparatus performs frequency hopping to a position near the fourth frequency, a next hop starts from a highest frequency (namely, the second frequency).

It should be understood that the frequency domain position relationship may be agreed on in a protocol; the frequency domain position relationship may be negotiated in advance by the first apparatus and the network; or the frequency domain position relationship may be indicated or configured by the network. This is not specifically limited in this embodiment of this application.

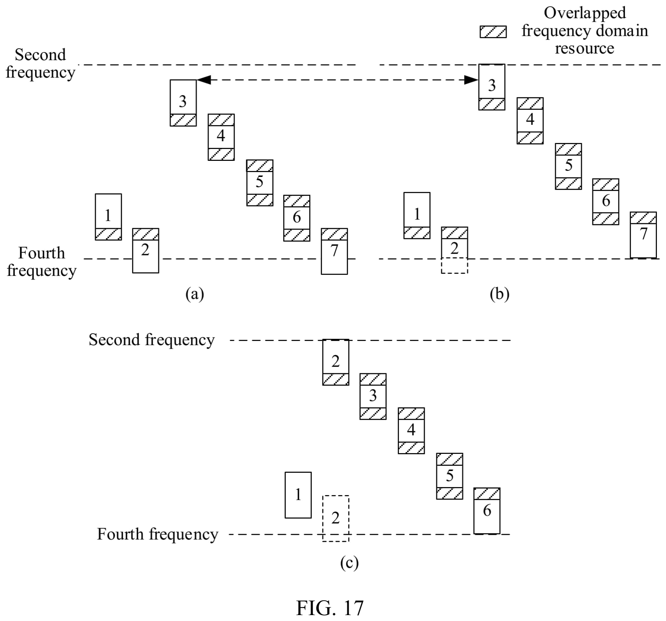

For example, for details about the position relationship 7a, refer to (a) in FIG. 17; for details about the position relationship 7b, refer to (b) in FIG. 17; and for details about the eighth frequency domain position relationship, refer to (c) in FIG. 17. The following separately provides descriptions.

For the position relationship 7a:

In (a) in FIG. 17, a $2^{nd}$ time unit is the $t^{th}$ time unit (namely, the time unit that is before the wrapping), to be specific, a lowest frequency domain position of a frequency domain resource #2 corresponding to the $2^{nd}$ time unit may be less than the fourth frequency, and an actual bandwidth of the frequency domain resource corresponding to the $2^{nd}$ time unit is the same as $b_t$. The $(t+1)^{th}$ time unit is a $3^{rd}$ time unit (namely, the wrapping time unit).

It may be understood that, as shown in (a) in FIG. 15, a frequency domain resource #1 corresponding to a $1^{st}$ time unit and the frequency domain resource #2 may be jointly processed with remaining frequency domain resources (for example, a frequency domain resource #3 corresponding to the $3^{rd}$ time unit to a frequency domain resource #7 corresponding to a $7^{th}$ time unit), to improve the resource utilization.

For the position relationship 7b:

As described above, the actual bandwidth of the frequency domain resource corresponding to the $t^{th}$ time unit is

less than $b_t$. Therefore, a lowest frequency domain position of the frequency domain resource corresponding to the $t^{th}$ time unit is not the actual highest frequency domain position, and the actual lowest frequency domain position is equal to the fourth frequency. For details, refer to a frequency domain resource #2 corresponding to a $2^{nd}$ time unit in (b) in FIG. 17. In other words, the frequency domain resource corresponding to the $t^{th}$ time unit is the frequency domain resource whose frequency domain position is the lowest in the M frequency domain resources, and the frequency domain resource corresponding to the $(t+1)^{th}$ time unit is the frequency domain resource whose frequency domain position is the highest in the M frequency domain resources.

It may be understood that, because the actual lowest frequency domain position is equal to the fourth frequency, a frequency domain start position of the frequency domain resource whose frequency domain position is the highest in the M frequency domain resources may be equal to the second frequency. For details, refer to a frequency domain resource #3 corresponding to a $3^{rd}$ time unit in (b) in FIG. 17, and a frequency domain start position of the frequency domain resource #3 is equal to the second frequency. In other words, a highest frequency occupied by the first apparatus to send the reference signals and the second frequency are overlapped by default, and no additional indication is needed, so that signaling overheads can be reduced.

It should be understood that, as shown in (b) in FIG. 17, a frequency domain resource #1 corresponding to a $1^{st}$ time unit and the frequency domain resource #2 corresponding to the $2^{nd}$ time unit may not be jointly processed with remaining frequency domain resources (for example, the $3^{rd}$ time unit to a frequency domain resource #7 corresponding to a $7^{th}$ time unit). In this way, the resource scheduling flexibility of the network can be improved.

For the eighth frequency domain position relationship:

A difference of the eighth frequency domain position relationship from the foregoing position relationship lies in: A lowest frequency domain position of the frequency domain resource corresponding to the $t^{th}$ time unit is less than or equal to the fourth frequency, and the lowest frequency domain position of the frequency domain resource corresponding to the $t^{th}$ time unit should be close to the fourth frequency. When the frequency domain position corresponding to the sum of the frequency domain start position of the frequency domain resource corresponding to the $t^{th}$ time unit and $b_t$ is less than the fourth frequency, a frequency domain resource corresponding to a $(t-1)^{th}$ time unit is the frequency domain resource whose frequency domain position is the lowest in the M frequency domain resources (this is specific to a case in which t-1 is not equal to 1, that is, the $(t-1)^{th}$ time unit is not a $1^{st}$ time unit), or a frequency domain resource corresponding to a $(t-1)^{th}$ time unit is a frequency domain resource, other than the frequency domain resource whose frequency domain position is the lowest in the M frequency domain resources, that is closest to the fourth frequency (that is, the $(t-1)^{th}$ time unit is a $1^{st}$ time unit). In other words, the $(t-1)^{th}$ time unit is the time unit that is before the wrapping in the case 2. The frequency domain resource corresponding to the $t^{th}$ time unit is the frequency domain resource whose frequency domain position is the highest in the M frequency domain resources, and an actual frequency domain start position of the frequency domain resource corresponding to the $t^{th}$ time unit is the second frequency, that is, the $t^{th}$ time unit is the wrapping time unit in the case 2.

For example, in (c) in FIG. 17, the $t^{th}$ time unit is a $2^{nd}$ time unit, namely, the wrapping time unit, and a frequency domain start position of a frequency domain resource #2 corresponding to the $2^{nd}$ time unit is the second frequency. The $(t-1)^{th}$ time unit is a $1^{st}$ time unit, namely, the time unit that is before the wrapping, and a frequency domain resource #1 corresponding to the $1^{st}$ time unit is a frequency domain resource, other than a frequency domain resource #6 corresponding to a $6^{th}$ time unit, that is closest to the fourth frequency.

It should be understood that, that the frequency domain resource corresponding to the time unit that is before the wrapping is not the frequency domain resource whose frequency domain position is the lowest in the M frequency domain resources in (c) in FIG. 17 may be referred to as a case 2c. To be specific, the frequency domain resource corresponding to the $K^{th}$ time unit is the frequency domain resource whose frequency domain position is the highest in the M frequency domain resources, and a frequency domain resource corresponding to a $(K-1)^{th}$ time unit is not the frequency domain resource whose position is the lowest in the M frequency domain resources; or the frequency domain resource corresponding to the $K^{th}$ time unit is the frequency domain resource whose frequency domain position is the lowest in the M frequency domain resources, but a frequency domain resource corresponding to a $(K+1)^{th}$ time unit is not the frequency domain resource whose frequency domain position is the highest in the M frequency domain resources.

It may be understood that, as shown in (c) in FIG. 17, the frequency domain resource #1 corresponding to the $1^{st}$ time unit may not be jointly processed with remaining frequency domain resources (for example, frequency domain resources corresponding to the $2^{nd}$ time unit to the $6^{th}$ time unit). In this way, the resource scheduling flexibility of the network can be improved.

The following uses a case 2a and a case 2b for description.

For the case 2a:

In a possible implementation, the frequency domain resource corresponding to the $K^{th}$ time unit is the frequency domain resource whose frequency domain position is the highest in the M frequency domain resources, and the frequency domain resource corresponding to the $(K-1)^{th}$ time unit is the frequency domain resource whose frequency domain position is the lowest in the M frequency domain resources. That the $K^{th}$ time unit is determined based on the frequency domain position relationship between the frequency domain resource corresponding to the $t^{th}$ time unit and the first frequency includes: The $K^{th}$ time unit is determined based on the frequency domain position relationship and a frequency domain resource corresponding to a $1^{st}$ time unit.

For the seventh frequency domain position correspondence, a ranking of the $K^{th}$ time unit may be determined by using a formula (50) or (51).

$$K=\max_{t}\{f_1 - \sum_{i=1}^{t}(b_i + f_{i,i-1}) \geq F_{c-l}\}+1 \qquad \text{formula (50)}$$

$$K=\min_{t}\{f_1 - \sum_{i=1}^{t}(b_i + f_{i,i-1}) < F_{c-l}\} \qquad \text{formula (51)}$$

In the formulas (50) and (51), $F_{c-l}$ is the fourth frequency. For specific meanings of other parameters, refer to the related descriptions of the formula (3) and the formula (4). Details are not described herein again.

It may be understood that the foregoing formula (50) and formula (51) are specific to $n$ time units in one frequency hopping pattern periodicity, that is, N is equal to $n$. If N is greater than $n$, the formula (50) may be rewritten as a formula (52), and the formula (51) may be rewritten as a formula (53).

$$K=\max_{t}\{f_1 - \sum_{i=1}^{t \bmod n}(b_i + f_{i,i-1}) \geq F_{c-l}\} + 1 \qquad \text{formula (52)}$$

$$K=\min_{t}\{f_1 - \sum_{i=1}^{t \bmod n}(b_i + f_{i,i-1}) < F_{c-l}\} \qquad \text{formula (53)}$$

It should be understood that, for the eighth frequency domain position correspondence, a ranking of the $K^{th}$ time unit may be determined by using a formula (54).

$$K=\min_{t}\{f_1 - \sum_{i=1}^{t}(b_i + f_{i,i-1}) < F_l\} + 1 \qquad \text{formula (54)}$$

For the specific parameters in the formula (54), refer to the foregoing formula (17) and formula (18). Details are not described again.

It may be understood that this is specific to $n$ time units in one frequency hopping pattern periodicity, that is, N is equal to $n$. If N is greater than $n$, the foregoing formula (54) may be rewritten as a formula (55).

$$K=\min_{t}\{f_1 - \sum_{i=1}^{t \bmod n}(b_i + f_{i,i-1}) < F_l\} + 1 \qquad \text{formula (55)}$$

For the case 2b:

The case 2b is similar to the case 2a. A difference lies in: The frequency domain resource corresponding to the $K^{th}$ time unit is the frequency domain resource whose frequency domain position is the lowest in the M frequency domain resources, and the frequency domain resource corresponding to the $(K+1)^{th}$ time unit is the frequency domain resource whose frequency domain position is the highest in the M frequency domain resources. In other words, the $K^{th}$ time unit is the time unit that is before the wrapping, and the $(K+1)^{th}$ time unit is the wrapping time unit.

In other words, in the formulas (50) to (55) in the foregoing case 2a, a formula corresponding to K is K+1 in the case 2b. For example, $K = \min_{t}\{f_1 - \sum_{i=1}^{t}(b_i + f_{i,i-1}) < F_l\}$ in the formula (51) is K+1 in the case 2b, that is,

$K = \min_{t}\{f_1 - \sum_{i=1}^{t}(b_i + f_{i,i-1}) < F_l\}-1$. For example, $K=\min_{t}\{f_1 - \sum_{i=1}^{t}(b_i + f_{i,i-1}) < F_l\} + 1$ in

the formula (54) is K+1 in the case 2b, that is, $K=\min_{t}\{f_1 - \sum_{i=1}^{t}(b_i + f_{i,i-1}) < F_l\}$.

It should be understood that the foregoing formulas (50) to (55) are merely examples, and the $K^{th}$ time unit may alternatively be determined based on a frequency domain resource corresponding to another time unit. A specific manner is similar to those corresponding to the foregoing formulas (50) to (55). Details are not described herein again.

It may be understood that the foregoing formulas (17) to (22) are also applicable to the case 2c corresponding to the eighth frequency domain position relationship.

The following describes a specific implementation of determining the correspondence between the M frequency domain resources and the N time units based on the $K^{th}$ time unit and the frequency domain resource corresponding to the $K^{th}$ time unit.

It may be understood that the case 2 is similar to the case 1, and a difference lies in: The seventh frequency domain position relationship and the eighth frequency domain position relationship correspond to different frequency hopping patterns. The following separately provides descriptions by using an example in which the frequency domain start position of the frequency domain resource corresponding to each time unit in the N time units is determined.

For the seventh frequency domain position relationship:

1. For the position relationship 7a:

In the position relationship 7a, because a frequency domain end position of the frequency domain resource whose frequency domain position is the lowest in the M frequency domain resources may be less than the fourth frequency (as shown in (a) in FIG. 17), the frequency domain start position of the frequency domain resource corresponding to each time unit in the N time units may be less than the second frequency.

In the case 2a, the frequency domain resource corresponding to the $K^{th}$ time unit is the frequency domain resource whose frequency domain position is the highest in the M frequency domain resources, and the frequency domain resource corresponding to the $(K-1)^{th}$ time unit is the frequency domain resource whose frequency domain position is the lowest in the M frequency domain resources. In other words, a frequency domain end position (namely, a lowest frequency domain position) $F_{K-1}$ of the frequency domain resource corresponding to the $(K-1)^{th}$ time unit may be less than the fourth frequency $F_{c-l}$, and a frequency domain start position of the frequency domain resource corresponding to the $K^{th}$ time unit is less than the second frequency $F_h$, that is, the frequency domain start position is a sum of $F_{K-1}$ and the combined bandwidth. For details about the combined bandwidth, refer to $B$ in the formula (1), where $B = \sum_{i=1}^{n}(b_i + f_{i,i-1})$. For $\sum_{i=1}^{n}(b_i + f_{i,i-1})$, refer to the formula (2). Details are not described again.

For example, a frequency domain start position of a frequency domain resource corresponding to an $m^{th}$ time unit may be determined according to a formula (56) or a formula (57).

$$f_m = \begin{cases} f_1 - \sum_{i=2}^{m\,mod\,N}(b_{i-1} + f_{i,i-1}), & if\ (m\,mod\,N) < K \\ F_{k-1} + \sum_{i=1}^{n}(b_i + f_{i,i-1}) - \sum_{i=K+1}^{m\,mod\,N}(b_{i-1} + f_{i,i-1}), & if\ (m\,mod\,N) \geq K \end{cases} \qquad \text{formula (56)}$$

$$f_m = \begin{cases} f_1 - \sum_{i=2}^{m\,mod\,N}(b_{i-1} + f_{i,i-1}), & if\ (m\,mod\,N) < K \\ F_{K-1} + \sum_{i=1}^{n}(b_i + f_{i,i-1}), & if\ (m\,mod\,N) = K \\ F_{K-1} + \sum_{i=1}^{n}(b_i + f_{i,i-1}) - \sum_{i=K+1}^{m\,mod\,N}(b_{i-1} + f_{i,i-1}), & if\ (m\,mod\,N) > K \end{cases} \qquad \text{formula (57)}$$

In the formula (56) and the formula (57), $F_{K-1}$ is the frequency domain end position (namely, the lowest frequency domain position) of the frequency domain resource corresponding to the $(K-1)^{th}$ time unit. For specific meanings of other parameters, refer to the formula (9). Details are not described again.

In the case 2b, the frequency domain resource corresponding to the $K^{th}$ time unit is the frequency domain resource whose frequency domain position is the lowest in the M frequency domain resources, and the frequency domain resource corresponding to the $(K+1)^{th}$ time unit is the frequency domain resource whose frequency domain position is the highest in the M frequency domain resources. In this case, the formula (56) may be rewritten as a formula (58).

$$f_m = \begin{cases} f_1 - \sum_{i=2}^{m\,mod\,N}(b_{i-1} + f_{i,i-1}), & if\ (m\,mod\,N) < K + 1 \\ F_K + \sum_{i=1}^{n}(b_i + f_{i,i-1}) - \sum_{i=K+2}^{m\,mod\,N}(b_{i-1} + f_{i,i-1}), & if\ (m\,mod\,N) \geq K + 1 \end{cases} \qquad \text{formula (58)}$$

$F_K$ is a frequency domain end position of the frequency domain resource corresponding to the $K^{th}$ time unit, and $f_{K+1,K}=0$. For specific meanings of the parameters in the formula (58), refer to the formula (56). Details are not described again.

It may be understood that the formula (57) may be rewritten as a formula (59).

$$f_m = \begin{cases} f_1 - \sum_{i=2}^{m\ mod\ N}(b_{i-1} + f_{i,i-1}), & if\ (m\ mod\ N) < K+1 \\ F_K + \sum_{i=1}^{n}(b_i + f_{i,i-1}), & if\ (m\ mod\ N) = K+1 \\ F_K + \sum_{i=1}^{n}(b_i + f_{i,i-1}) - \sum_{i=K+2}^{m\ mod\ N}(b_{i-1} + f_{i,i-1}), & if\ (m\ mod\ N) > K+1 \end{cases} \qquad \text{formula (59)}$$

For specific meanings of the parameters in the formula (59), refer to the formula (57). Details are not described again.

2. For the position relationship 7b:

According to the foregoing descriptions of the position relationship 7b, a difference from the position relationship 7a lies in: The lowest frequency domain position of the frequency domain resource whose frequency domain position is the lowest in the M frequency domain resources is actually the fourth frequency $F_{c-l}$, and the frequency domain start position of the frequency domain resource whose frequency domain position is the highest in the M frequency domain resources is the second frequency $F_h$.

In the case 2a, the frequency domain resource corresponding to the $K^{th}$ time unit is the frequency domain resource whose frequency domain position is the highest in the M frequency domain resources. To be specific, the frequency domain start position of the frequency domain resource corresponding to the $K^{th}$ time unit is equal to the second frequency $F_h$, and a frequency domain end position of the frequency domain resource corresponding to the $(K-1)^{th}$ time unit is actually equal to the fourth frequency $F_{c-l}$.

For example, a frequency domain start position of a frequency domain resource corresponding to an $m^{th}$ time unit may be determined according to a formula (60) or a formula (61).

$$f_m = \begin{cases} f_1 - \sum_{i=2}^{m\ mod\ N}(b_{i-1} + f_{i,i-1}), & if\ (m\ mod\ N) < K \\ F_h - \sum_{i=K+1}^{m\ mod\ N}(b_{i-1} + f_{i,i-1}), & if\ (m\ mod\ N) \geq K \end{cases} \qquad \text{formula (60)}$$

$$f_m = \begin{cases} f_1 - \sum_{i=2}^{m\ mod\ N}(b_{i-1} + f_{i,i-1}), & if\ (m\ mod\ N) < K \\ F_h, & if\ (m\ mod\ N) = K \\ F_h - \sum_{i=K+1}^{m\ mod\ N}(b_{i-1} + f_{i,i-1}), & if\ (m\ mod\ N) > K \end{cases} \qquad \text{formula (61)}$$

In the formula (60) and the formula (61), $F_h$ is the second frequency. For specific meanings of other parameters, refer to the formula (56). Details are not described again.

In the case 2b, the frequency domain resource corresponding to the $K^{th}$ time unit is the frequency domain resource whose frequency domain position is the lowest in the M frequency domain resources, and the frequency domain resource corresponding to the $(K+1)^{th}$ time unit is the frequency domain resource whose frequency domain position is the highest in the M frequency domain resources. In this way, the formula (60) may be rewritten as a formula (62), and the formula (61) may be rewritten as a formula (63).

$$f_m = \begin{cases} f_1 - \sum_{i=2}^{m\ mod\ N}(b_{i-1} + f_{i,i-1}), & if\ (m\ mod\ N) < K+1 \\ F_h - \sum_{i=K+2}^{m\ mod\ N}(b_{i-1} + f_{i,i-1}), & if\ (m\ mod\ N) \geq K+1 \end{cases} \qquad \text{formula (62)}$$

$$f_m = \begin{cases} f_1 - \sum_{i=2}^{m\ mod\ N}(b_{i-1} + f_{i,i-1}), & if\ (m\ mod\ N) < K+1 \\ F_h, & if\ (m\ mod\ N) = K+1 \\ F_h - \sum_{i=K+2}^{m\ mod\ N}(b_{i-1} + f_{i,i-1}), & if\ (m\ mod\ N) > K+1 \end{cases} \qquad \text{formula (63)}$$

In the formula (62) and the formula (63), $F_l$ is the first frequency. For specific meanings of other parameters, refer to the formula (9). Details are not described again.

3. For the eighth frequency domain position relationship:

According to the foregoing descriptions of the eighth frequency domain position relationship, a difference from the position relationship 7b lies in: A highest frequency domain position (namely, a frequency domain start position) of the frequency domain resource whose frequency domain position is the highest in the M frequency domain resources is the second frequency $F_h$, and a frequency domain end position of a frequency domain resource corresponding to a previous time unit of the frequency domain resource whose frequency domain position is the highest is greater than the fourth frequency $F_{c-l}$. According to the foregoing descriptions of the case 2c, the eighth frequency domain position relationship is applicable to the case 2c. The following provides descriptions by using an example in which the frequency domain resource corresponding to the $K^{th}$ time unit is the frequency domain resource whose frequency domain position is the highest in the M frequency domain resources, and the frequency domain resource corresponding to the $(K-1)^{th}$ time unit is not the frequency domain resource whose frequency domain position is the lowest in the M frequency domain resources (for example, in (c) in FIG. 17).

It may be understood that, because the frequency domain start position of the frequency domain resource whose frequency domain position is the highest in the M frequency domain resources is also the first frequency, in the eighth frequency domain position relationship, the frequency domain start position of the frequency domain resource corresponding to the $m^{th}$ time unit may be determined by reusing the foregoing formulas (60) to (63). Details are not described again.

In this embodiment of this application, the first apparatus may determine the first frequency and/or the second frequency, and determine the correspondence between the M frequency domain resources for frequency hopping and the N time units, to avoid sending or receiving a reference signal on a same frequency hopping resource as another apparatus, and therefore avoid the interference. This helps improve the positioning accuracy.

The processor 1201 in the communication apparatus 120 shown in FIG. 12 may instruct the communication apparatus 120 to perform the actions of the first apparatus in steps S1301 and S1302, or the processor 1201 in the communication apparatus 120 shown in FIG. 12 may invoke the application program code stored in the memory 1203 to instruct the communication apparatus 120 to perform the actions of the first apparatus in steps S1301 and S1302. This is not specifically limited in this embodiment of this application.

It should be understood that, as described in step S1301, the network may indicate the first frequency and/or the second frequency. The following uses interaction between the first apparatus and a second apparatus as an example for description.

FIG. 18 is another schematic flowchart of a resource determining method according to an embodiment of this application. As shown in FIG. 18, the resource determining method includes the following steps: S1801 to S1804.

S1801: A second apparatus generates frequency hopping configuration information. The frequency hopping configuration information is for determining an association relationship between a plurality of frequency domain resources and a plurality of time domain resources, the plurality of frequency domain resources are for frequency hopping, and the plurality of time domain resources are for sending or receiving reference signals. The frequency hopping configuration information includes information indicating at least one of the following: a first frequency, a second frequency, or a combined bandwidth, where the first frequency is a lowest frequency domain position of frequency domain resources occupied for sending or receiving the reference signals, the second frequency is a highest frequency domain position of the frequency domain resources occupied for sending or receiving the reference signals, and the combined bandwidth is a total bandwidth occupied by the plurality of frequency domain resources.

S1802: The second apparatus sends the frequency hopping configuration information to a first apparatus. Correspondingly, the first apparatus receives the frequency hopping configuration information from the second apparatus.

S1803: The first apparatus determines a first frequency and/or a second frequency based on the frequency hopping configuration information.

S1804: The first apparatus determines a correspondence between M frequency domain resources for frequency hopping and N time units based on the first frequency and/or the second frequency, where the N time units are for sending or receiving reference signals, the first frequency is a lowest frequency domain position of frequency domain resources occupied for sending or receiving the reference signals, and the second frequency is a highest frequency domain position of the frequency domain resources occupied for sending or receiving the reference signals, where M is an integer greater than 1, and N is an integer greater than 1.

The second apparatus may be a network device, or may be a module or unit, for example, a chip, a chip system, a chip circuit, or a circuit, of the network device. The first apparatus may be a terminal device, or may be a module or unit, for example, a chip, a chip system, a chip circuit, or a circuit, of the terminal device. For example, the second apparatus may be an access network device or a chip of the access network device, and the first apparatus may be the terminal device or the chip of the terminal device. For another example, the second apparatus may be a location management function (for example, an LMF), and the first apparatus may be the terminal device or the chip of the terminal device. In other words, the second apparatus may send the frequency hopping configuration information to the first apparatus via an access network device.

In a possible implementation, the second apparatus may be a location management function, and the first apparatus may be an access network device or a chip of the access network device. The first apparatus may send or receive the reference signals based on the frequency hopping configuration information.

The following specifically describes steps 1801 to S1804.

For step S1801:

It should be understood that, for details about the first frequency, the second frequency, and the combined bandwidth in step S1801, refer to the related descriptions in the embodiment shown in FIG. 13, and the details are not described again.

For step S1802:

In a possible implementation, the second apparatus may send the frequency hopping configuration information to a terminal device in a cell by using RRC signaling or system information. The RRC signaling may be included in an RRC setup (RRC setup) message, an RRC resume (RRC resume) message, or an RRC reconfiguration (RRC reconfiguration) message. The system information may be, for example, a positioning system information block (positioning system information block, posSIB). Certainly, the frequency hopping configuration information may alternatively be carried in an NRPPa message or an LPP message. This is not specifically limited in this embodiment of this application.

For step S1803:

It may be understood that a specific implementation of step S1803 is similar to that of step S1301, and a difference lies in that the first frequency and the second frequency may be indicated. In addition, when the frequency hopping configuration information includes the combined bandwidth but does not include the first frequency and the second frequency, the first apparatus may determine the first frequency and/or the second frequency. The combined bandwidth may be for determining a quantity of frequency hopping times or a quantity of frequency hops in one reference signal frequency hopping pattern periodicity.

In a possible implementation, the first apparatus may determine that the first frequency is a sum of a reference frequency and a first frequency domain offset, and/or the first apparatus may determine that the second frequency is a sum of a reference frequency and a second frequency domain offset. For details about the reference frequency, the first frequency domain offset, and the second frequency domain offset, refer to the related descriptions in step S1301 above, and the details are not described again.

It may be understood that, when the frequency hopping configuration information includes the combined bandwidth, and includes the first frequency or the second frequency, the first apparatus may determine the quantity of frequency hopping times/quantity of frequency hops and the second frequency based on the first frequency and the combined bandwidth. Alternatively, the first apparatus may determine the quantity of frequency hopping times/quantity of frequency hops and the first frequency based on the second frequency and the combined bandwidth.

For step S1804:

It may be understood that for a specific implementation of step S1804, refer to step S1302. Details are not described again.

In a possible implementation, the frequency hopping configuration information further indicates at least one of the following: position information of a frequency domain resource corresponding to a $1^{st}$ time unit in the N time units, time domain position information corresponding to the $1^{st}$ time unit in the N time units, a bandwidth of a frequency domain resource corresponding to an $i^{th}$ time unit, an overlapped size between the frequency domain resource corresponding to the $i^{th}$ time unit and a frequency domain resource corresponding to a $j^{th}$ time unit, the quantity of frequency hopping times, a corresponding frequency domain offset between two adjacent time units in the N time units, or a time interval between the $i^{th}$ time unit and the $j^{th}$ time unit, where the $i^{th}$ time unit and the $j^{th}$ time unit are time units in the N time units, and $1 \leq i \neq j \leq N$.

It should be understood that the time domain position information may be at least one of the following: a time domain start position, a time domain end position, or an $x^{th}$ sub-time unit in a time unit. The sub-time unit may be a time domain resource or a unit of time at a granularity less than that of the time unit. For example, the time unit is a radio frame, and the sub-time unit may be an $x^{th}$ subframe in the radio frame, where $1 \leq x \leq y$, y may be equal to 1, 2, 4, 8, or 16, and y indicates that the time unit includes y sub-time units. Certainly, x may alternatively be an intermediate value of y or a value near the intermediate value. For example, y is equal to 8, and x may be 4 or 5. Alternatively, the sub-time unit may be a unit of time at a smaller granularity, for example, a slot or an OFDM symbol. For example, the $x^{th}$ sub-time unit in the time unit may be a $1^{st}$ slot in a $1^{st}$ subframe in a radio frame. It may be understood that if the time unit is a subframe, the sub-time unit may be a slot, an OFDM symbol, or a unit of time at another granularity. This is not specifically limited in embodiments of this application.

It should be further understood that the $i^{th}$ time unit may be adjacent to the $j^{th}$ time unit. For example, j=i+1, or j=i-1 (i is greater than 1). Certainly, the $i^{th}$ time unit may not be adjacent to the $j^{th}$ time unit. For example, i=1, and j is equal to 2, 3, 4, 5, or the like. This is not specifically limited in embodiments of this application.

It may be understood that the time interval between the $i^{th}$ time unit and the $j^{th}$ time unit may be a time interval between a time domain start position of the $i^{th}$ time unit and a time domain start position of the $j^{th}$ time unit, a time interval between a time domain end position of the $i^{th}$ time unit and a time domain start position of the $j^{th}$ time unit, or a time interval between a time domain start position of the $i^{th}$ time unit and a time domain end position of the $j^{th}$ time unit.

In a possible implementation, there are a plurality of time intervals between the $i^{th}$ time unit and the $j^{th}$ time unit. Any two of the plurality of time intervals may be equal or not equal. For example, in a time division duplex (time division duplex, TDD) system, because uplink time domain resources (for example, slots) are limited, the time interval may be greater than or equal to one TDD periodicity. The TDD periodicity may be, for example, five slots, 10 slots, or more slots. In this way, impact on communication performance can be reduced.

Optionally, time lengths of a first time interval and a second time interval between the N time units are different. The first time interval is a time interval between the $i^{th}$ time unit and an $(i+1)^{th}$ time unit, and the second time interval is a time interval between the $j^{th}$ time unit and a $(j+1)^{th}$ time unit. For example, the first time interval may be less than the second time interval. For example, the first time interval is 70 $\mu$s, and the second time interval is five slots. Certainly, the first time interval may alternatively be greater than the second time interval. This is not specifically limited in this application.

It may be understood that, in the foregoing frequency hopping configuration information, for details about parameters other than the time interval between the $i^{th}$ time unit and the $j^{th}$ time unit, refer to the descriptions of the "parameters a to e" above and the parameters in the formulas (1) and (2) above, and the details are not described herein again.

In a possible implementation, the resource determining method shown in FIG. 18 further includes the following step:

Step S1805: The first apparatus sends expected configuration information to the second apparatus. Correspondingly, the second apparatus receives the expected configuration information from the first apparatus. The expected configuration information indicates at least one of the following: the lowest frequency domain position of the frequency domain resources occupied for sending or receiving the reference signals, the highest frequency domain position of the frequency domain resources occupied for sending or receiving the reference signals, the combined bandwidth, or a frequency domain position relationship between a reference frequency domain position and a frequency domain resource whose frequency domain position is the lowest or highest in the M frequency domain resources.

The reference frequency domain position includes at least one of the following: the first frequency, a third frequency, the second frequency, or a fourth frequency, where a frequency domain resource corresponding to the third frequency is the frequency domain resource whose frequency domain position is the highest in the M frequency domain resources, and a frequency domain resource corresponding to the fourth frequency is the frequency domain resource whose frequency domain position is the lowest in the M frequency domain resources.

It may be understood that the frequency domain resource whose frequency domain position is the lowest or the frequency domain resource whose frequency domain position is the highest in the M frequency domain resources may be a frequency domain position, for example, a frequency domain start position, a center frequency, or a highest frequency domain position, of the frequency domain resource. The relationship between the reference frequency domain position and the frequency domain resource whose frequency domain position is the lowest or the frequency domain resource whose frequency domain position is the highest in the M frequency domain resources may be for determining the first frequency domain position relationship to the eighth frequency domain position relationship described in step S1302 above. In this way, a frequency hopping pattern that is expected by the first apparatus and that corresponds to the foregoing frequency domain position relationship can be indicated.

For example, the reference position is the third frequency, and a frequency domain position relationship between the third frequency and the frequency domain resource whose frequency domain position is the highest in the M frequency domain resources may be the position relationship 1a in the first frequency domain position relationship, to be specific, a highest frequency domain position of the frequency domain resource whose frequency domain position is the highest in the M frequency domain resources is greater than the third frequency. In other words, the frequency domain position relationship may indicate: When frequency hopping is performed to a position near a highest frequency (namely, the third frequency), frequency hopping may continue to be performed in a third frequency direction (namely, a frequency increasing direction), so that a frequency domain start position of a frequency domain resource corresponding to a next hop (namely, a next time unit) may be greater than the first frequency.

For another example, the reference position is the first frequency, and a frequency domain position relationship between the first frequency and the frequency domain resource whose frequency domain position is the lowest in the M frequency domain resources may be the fourth frequency domain position relationship. To be specific, a lowest frequency domain position of the frequency domain resource whose frequency domain position is the lowest in the M frequency domain resources is less than the first frequency. In other words, the frequency domain position relationship may indicate: When frequency hopping is performed to a position near a lowest frequency, frequency hopping may continue to be performed in a first frequency direction. However, an actual frequency hopping bandwidth is less than a configured bandwidth, where the configured bandwidth may be, for example, $b_t$ or a bandwidth $b$ occupied by each time of frequency hopping.

For still another example, the reference position is the second frequency and the fourth frequency, and a frequency domain position relationship among the second frequency, the fourth frequency, and the frequency domain resource whose frequency domain position is the highest in the M frequency domain resources may be the position relationship 5a in the fifth frequency domain position relationship. To be specific, a frequency domain end position (namely, a highest frequency domain position) of the frequency domain resource whose frequency domain position is the highest in the M frequency domain resources is less than or equal to the second frequency, and a frequency domain start position (namely, a lowest frequency domain position) of the frequency domain resource whose frequency domain position is the lowest in the M frequency domain resources is determined based on a frequency domain start position of the frequency domain resource whose frequency domain position is the highest in the M frequency domain resources and the combined bandwidth B. In this way, a frequency domain end position of the frequency domain resource whose frequency domain position is the lowest in the M frequency domain resources may be less than the fourth frequency. In other words, the frequency domain position relationship may indicate: When frequency hopping is performed to a position near a lowest frequency (namely, the second frequency), a frequency domain start position of a next hop is less than the fourth frequency.

In other words, the first apparatus may send the expected configuration information to the second apparatus, so that the second apparatus can determine, based on the expected configuration information, a frequency hopping pattern for sending or receiving the reference signals by the first apparatus.

It should be understood that "expected" may alternatively be replaced with "recommended". This is not specifically limited in embodiments of this application.

It may be understood that for details about the relationship between the reference position and the frequency domain resource whose frequency domain position is the lowest or the frequency domain resource whose frequency domain position is the highest in the M frequency domain resources and the parameters in the frequency hopping configuration information, refer to the related descriptions in step S1302 above, and the details are not described herein again.

It should be understood that step S1805 may be performed before or after step S1802. This is not specifically limited in this embodiment of this application.

In a possible implementation, the resource determining method shown in FIG. 18 further includes the following step:

Step S1806: The second apparatus sends first request information to the first apparatus. Correspondingly, the first apparatus receives the first request information from the second apparatus. The first request information is for requesting the expected configuration information. The expected configuration information indicates at least one of the following: the lowest frequency domain position of the frequency domain resources occupied for sending or receiving the reference signals, the highest frequency domain position of the frequency domain resources occupied for sending or receiving the reference signals, the combined bandwidth, or the frequency domain position relationship between the reference frequency domain position and the frequency domain resource whose frequency domain position is the lowest or the frequency domain resource whose frequency domain position is the highest in the M frequency domain resources.

The reference frequency domain position includes the at least one of the following: the first frequency, the third frequency, the second frequency, or the fourth frequency, where the frequency domain resource corresponding to the third frequency is the frequency domain resource whose frequency domain position is the highest in the M frequency domain resources, and the frequency domain resource corresponding to the fourth frequency is the frequency domain resource whose frequency domain position is the lowest in the M frequency domain resources.

It may be understood that for details about the expected configuration information in step S1806, refer to the foregoing step S1805, and the details are not described again.

In other words, the second apparatus may send the first request information to the first apparatus, to request the expected configuration information of the first apparatus, so that the second apparatus can determine, based on the expected configuration information, the frequency hopping pattern for sending or receiving the reference signals by the first apparatus.

It should be understood that step S1806 may be performed before step S1805, to be specific, the first apparatus may send the expected configuration information to the second apparatus in response to the first request information.

Alternatively, step S1806 may be performed after step S1805, to be specific, the first apparatus may actively report the expected configuration information of the first apparatus to the second apparatus.

In a possible implementation, the resource determining method shown in FIG. 18 further includes the following step:

Step S1807: The first apparatus sends second request information to the second apparatus. Correspondingly, the second apparatus receives the second request information from the first apparatus. The second request information is for requesting configuration information, where the configuration information indicates at least one of the following: the lowest frequency domain position of the frequency domain resources occupied for sending or receiving the reference signals, the highest frequency domain position of the frequency domain resources occupied for sending or receiving the reference signals, the combined bandwidth, or the frequency domain position relationship between the reference frequency domain position and the frequency domain resource whose frequency domain position is the lowest or the frequency domain resource whose frequency domain position is the highest in the M frequency domain resources. The reference frequency domain position includes the at least one of the following: the first frequency, the third frequency, the second frequency, or the fourth frequency.

It may be understood that for details about the configuration information in step S1807, refer to the related descriptions of the first frequency, the second frequency, the combined bandwidth, and the first frequency domain position relationship to the eighth frequency domain position relationship in the embodiment shown in FIG. 13 and step S1805, and the details are not described again.

In other words, the first apparatus may send the second request information to the second apparatus, to request the configuration information that can be for uniquely determining the frequency hopping pattern, and further to avoid interference.

It should be understood that step S1807 may be performed before or after step S1802. This is not specifically limited in this embodiment of this application.

In a possible implementation, the second request information includes the expected configuration information.

For details about the expected configuration information, refer to the related descriptions in step S1805, and the details are not described herein again.

In other words, the first apparatus may indicate the expected configuration information of the first apparatus to the second apparatus by using the second request information, so that the second apparatus can determine, based on the expected configuration information, the frequency hopping pattern for sending or receiving the reference signals by the first apparatus.

It should be understood that the method provided in FIG. 13 may include at least one of steps S1805 to S1807. For a specific implementation, refer to steps S1805 to S1807, and details are not described again.

In this embodiment of this application, the second apparatus may send the frequency hopping configuration information to the first apparatus, so that the first apparatus can determine the first frequency and/or the second frequency. In this way, the first apparatus can determine the correspondence between the plurality of frequency domain resources for frequency hopping and the plurality of time units, to avoid sending or receiving a reference signal on a same frequency hopping resource as another apparatus, and therefore avoid the interference. This helps improve positioning accuracy.

The processor 1201 in the communication apparatus 120 shown in FIG. 12 may instruct the communication apparatus 120 to perform the actions of the first apparatus in steps S1801 to S1807, or the processor 1201 in the communication apparatus 120 shown in FIG. 12 may invoke the application program code stored in the memory 1203 to instruct the communication apparatus 120 to perform the actions of the first apparatus in steps S1801 to S1807. The processor 1201 in the communication apparatus 120 shown in FIG. 12 may instruct the communication apparatus 120 to perform the actions of the second apparatus in steps S1801 to S 1807, or the processor 1201 in the communication apparatus 120 shown in FIG. 12 may invoke the application program code stored in the memory 1203 to instruct the communication apparatus 120 to perform the actions of the second apparatus in steps S1801 to S1807. This is not specifically limited in this embodiment of this application.

It may be understood that, for a frequency hopping pattern in which two frequency domain resources adjacent in frequency domain are also adjacent in time domain, the interference can be avoided in the foregoing method embodiments, to meet a further requirement in a positioning scenario. The following describes a method for uniquely determining the frequency hopping pattern 3 above, to meet a further requirement in the positioning scenario.

FIG. 19 is a schematic flowchart of a resource determining method according to an embodiment of this application. As shown in FIG. 19, the resource determining method includes the following steps:

S1901: A second apparatus generates frequency hopping configuration information, where the frequency hopping configuration information indicates that an $i^{th}$ time unit in N time units is associated with a $j^{th}$ frequency domain resource in M frequency domain resources. The M frequency domain resources are for frequency hopping, and the N time units are for sending or receiving reference signals, where M is an integer greater than 1, N is an integer greater than 1, $1 \leq i \leq N$, and $1 \leq j \leq M$.

S1902: The second apparatus sends the frequency hopping configuration information to a first apparatus. Correspondingly, the first apparatus receives the frequency hopping configuration information from the second apparatus. S1903: The first apparatus determines a correspondence between the N time units and the M frequency domain resources based on the frequency hopping configuration information.

For details about the first apparatus and the second apparatus, refer to the descriptions in the embodiments shown in FIG. 19 and FIG. 13, and the details are not described herein again.

The following specifically describes steps S1901 to S1903.

For S1901:

It should be understood that, for details about the M frequency domain resources and the N time units, refer to the related descriptions of "the relationship between M and N" in the embodiment shown in FIG. 13, and the details are not described herein again.

It may be understood that the $i^{th}$ time unit in the N time units may be an $i^{th}$ time unit sorted in a time order, that is, the $i^{th}$ time unit is before an $(i+1)^{th}$ time unit. Certainly, the foregoing order is an ascending order, and may alternatively be a descending order. For example, the $i^{th}$ time unit may be after an $(i+1)^{th}$ time unit. This is not specifically limited in embodiments of this application. Similarly, the $j^{th}$ frequency domain resource in the M frequency domain resources may be a $j^{th}$ frequency domain resource sorted in an order of frequency domain positions. To be specific, a frequency domain position of the $j^{th}$ frequency domain resource is less than a frequency domain position of a $(j+1)^{th}$ frequency domain resource, or a frequency domain position of the $j^{th}$ frequency domain resource is greater than a frequency domain position of a $(j+1)^{th}$ frequency domain resource.

It may be further understood that, that the frequency hopping configuration information indicates that the $i^{th}$ time unit in the N time units is associated with the $j^{th}$ frequency domain resource in the M frequency domain resources may indicate: A frequency domain resource corresponding to the $i^{th}$ time unit is the $j^{th}$ frequency domain resource in the M frequency domain resources. In other words, the frequency domain resource corresponding to the $i^{th}$ time unit may be determined in the M frequency domain resources by using the frequency hopping configuration information.

In a possible implementation, the frequency hopping configuration information includes time domain sequence information, and the time domain sequence information indicates that the $i^{th}$ time unit is associated with the $j^{th}$ frequency domain resource. In other words, the first apparatus may determine a frequency hopping ranking of a reference signal, namely, a specific frequency domain resource that is in the M frequency domain resources and on which the reference signal is to be first sent or received, by using the time sequence information in the frequency hopping configuration information. In this way, for several frequency hopping patterns, for example, the frequency hopping patterns 1 to 3, in which two frequency domain resources adjacent in frequency domain are adjacent and not adjacent in time domain, the first apparatus may uniquely determine frequency hopping resources for sending or receiving the reference signals, to avoid sending or receiving a reference signal on a same frequency hopping resource as another apparatus, and therefore avoid interference.

In a possible implementation, the $j^{th}$ frequency domain resource in the M frequency domain resources is determined by using frequency domain index information. The frequency domain index information may indicate a sequence of the frequency domain positions of the M frequency domain resources. For example, the time sequence information may include frequency domain index information #1 of a frequency domain resource associated with a $1^{st}$ time unit, frequency domain index information #2 of a frequency domain resource associated with a $2^{nd}$ time unit, and frequency domain index information #3 associated with a $3^{rd}$ time unit. In this way, the first apparatus may determine, based on the frequency domain index information and the time sequence information, frequency domain resources corresponding to different sending or receiving occasions, to uniquely determine the frequency hopping resources in the frequency hopping pattern.

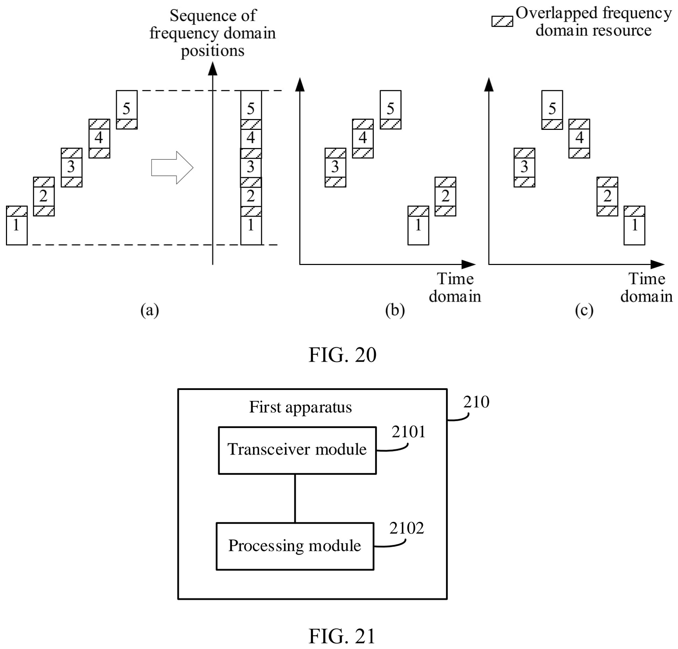

In a possible implementation, the time domain sequence information may be indicated by the frequency domain index information. For example, using an example in which the frequency domain index information is the sequence of the frequency domain positions of the M frequency domain resources, as shown in (a) in FIG. 20, five frequency domain resources are sorted as [1, 2, 3, 4, 5] in ascending order of frequency domain positions. For example, if the time sequence information is {3, 4, 5, 1, 2}, a frequency hopping pattern is shown in (b) in FIG. 20. A $3^{rd}$ frequency domain resource in the five frequency domain resources corresponds to a $1^{st}$ time unit, and a $4^{th}$ frequency domain resource in the five frequency domain resources corresponds to a $2^{nd}$ time unit. Similarly, a $5^{th}$ frequency domain resource in the five frequency domain resources corresponds to a $3^{rd}$ time unit. In other words, the first apparatus may uniquely determine frequency hopping resources in the frequency hopping pattern 2 based on the time domain sequence information.

It may be understood that elements in the time sequence information {3, 4, 5, 1, 2} may alternatively be represented by bits. For example, {3, 5, 4, 2, 1} is represented as {011, 100, 101, 001, 010}.

For another example, assuming that the time domain sequence information is {3, 5, 4, 2, 1} or {011, 101, 100, 010, 001}, as shown in (c) in FIG. 20, a type of this frequency hopping pattern is the frequency hopping pattern 3. In other words, the first apparatus may uniquely determine frequency hopping resources in the frequency hopping pattern 3 based on the time domain sequence information.

It should be understood that the time sequence information is optional. For example, the time sequence information may not be indicated. In this case, the time sequence information is {1, 2, 3, 4, 5} or {001, 010, 011, 100, 101} by default, and frequency hopping may be performed based on the frequency hopping pattern 1.

It may be further understood that the frequency domain index information may alternatively be in another form, for example, an ID, and the ID indicates a frequency domain position of a frequency domain resource. Alternatively, the frequency domain index information may be directly represented as a frequency domain position. The frequency domain position includes, for example, one or more of the following: a frequency domain start position, a center frequency, a highest frequency domain position, or a frequency domain range. This is not specifically limited in embodiments of this application.

It should be understood that a frequency domain position relationship between the M frequency domain resources may be determined based on a first frequency hopping parameter set for the reference signals.

In a possible implementation, the M frequency domain resources are determined based on the first frequency hopping parameter set. The first frequency hopping parameter set includes at least one of the following: position information of a frequency domain resource corresponding to a $1^{st}$ time unit in the N time units, time domain position information corresponding to the $1^{st}$ time unit in the N time units, a bandwidth of a frequency domain resource corresponding to the $i^{th}$ time unit, an overlapped size between the frequency domain resource corresponding to the $i^{th}$ time unit and a frequency domain resource corresponding to an $L^{th}$ time unit in the N time units, a quantity of frequency hopping times, or a corresponding frequency domain offset between two adjacent time units in the N time units, where $1 \leq i \neq L \leq N$.

For the first frequency hopping parameter set, refer to the related descriptions in the embodiments shown in FIG. 13 and FIG. 19. Details are not described herein again.

In a possible implementation, the frequency hopping configuration information further indicates the first frequency hopping parameter set.

To be specific, the first apparatus may determine a frequency domain position sequence relationship between the M frequency domain resources based on the frequency hopping configuration information, to uniquely determine the frequency hopping pattern based on the time domain sequence information.

In a possible implementation, the frequency hopping configuration information further includes the frequency domain index information, and the frequency domain index information includes index information of the $j^{th}$ frequency domain resource. The frequency domain index information may include index information of a part of the M frequency domain resources, or the frequency domain index information may include index information of all of the M frequency domain resources. It may be understood that, for the frequency hopping patterns 1 and 2, frequency domain position information between the M frequency domain resources may be determined by indicating a frequency domain start position of the frequency domain resource corresponding to the $1^{st}$ time unit and a frequency domain resource corresponding to a $K^{th}$ time unit (a frequency domain resource whose frequency domain position is the lowest or the highest in the M frequency domain resources). For the frequency hopping pattern 3, index information corresponding to more frequency domain resources may need to be indicated, to determine frequency domain position information between the M frequency domain resources.

It may be understood that, for a part of frequency hopping patterns (for example, the frequency hopping pattern 3), when the frequency domain position relationship between the M frequency domain resources cannot be determined by using a resource or a resource set for the reference signal, the frequency domain index information may be further used by the first apparatus to determine the frequency domain position relationship between the M frequency domain resources.

To be specific, the frequency domain index information in the frequency hopping configuration information may assist the first apparatus in determining the frequency domain position relationship between the M frequency domain resources, to uniquely determine the frequency hopping pattern with reference to the time domain sequence information.

For step S1902:

In a possible implementation, the frequency hopping configuration information may be included in system information. For example, the frequency hopping configuration information may be included in a posSIB. In other words, the frequency hopping configuration information is broadcast by using the system information, so that signaling overheads can be reduced.

It may be understood that the second apparatus may alternatively send the frequency hopping configuration information by using a unicast message. For example, the frequency hopping configuration information may be included in an RRC message, an LPP message, or an NRPPA message.

For step S1903:

It should be understood that for a specific implementation of step S1903, refer to the related descriptions in step S1901. Details are not described again.

It may be understood that the embodiment shown in FIG. 20 may be combined with the embodiment shown in FIG. 19 or FIG. 13. For example, the first apparatus may determine the frequency domain resource corresponding to the $K^{th}$ time unit (the frequency domain resource whose frequency domain position is the lowest or the highest in the M frequency domain resources) based on the first frequency and/or the second frequency. In this way, the frequency domain position information between the M frequency domain resources can be determined.

In this embodiment of this application, the first apparatus may determine a correspondence between each time unit in the N time units and each frequency domain resource in the M frequency domain resources based on the frequency hopping configuration information. In this way, the frequency hopping resources for sending or receiving the reference signals can be uniquely determined, to avoid sending or receiving a reference signal on a same frequency hopping resource as another apparatus, and therefore avoid the interference. This helps improve positioning accuracy.

The processor 1201 in the communication apparatus 120 shown in FIG. 12 may instruct the communication apparatus 120 to perform the actions of the first apparatus in steps S1901 to S1903, or the processor 1201 in the communication apparatus 120 shown in FIG. 12 may invoke the application program code stored in the memory 1203 to instruct the communication apparatus 120 to perform the actions of the first apparatus in steps S1901 to S1903. The processor 1201 in the communication apparatus 120 shown in FIG. 12 may instruct the communication apparatus 120 to perform the actions of the second apparatus in steps S1901 to S 1903, or the processor 1201 in the communication apparatus 120 shown in FIG. 12 may invoke the application program code stored in the memory 1203 to instruct the communication apparatus 120 to perform the actions of the second apparatus in steps S1901 to S1903. This is not specifically limited in this embodiment of this application.

The foregoing mainly describes, from a perspective of interaction between network elements, the solutions provided in embodiments of this application. Correspondingly, an embodiment of this application further provides a communication apparatus, and the communication apparatus is configured to implement the foregoing methods. The communication apparatus may be the first apparatus in the foregoing method embodiments, an apparatus including the foregoing first apparatus, or a component that may be used in the first apparatus. Alternatively, the communication apparatus may be the second apparatus in the foregoing method embodiments, an apparatus including the foregoing second apparatus, or a component that may be used in the second apparatus. It may be understood that, to implement the foregoing functions, the communication apparatus includes a corresponding hardware structure and/or software module for performing each function. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be understood that the division into modules in embodiments of this application is an example, and is merely logical function division. During actual implementation, there may be another division manner.

For example, using an example in which the communication apparatus is the first apparatus in the foregoing method embodiments, FIG. 21 is a diagram of a structure of a first apparatus 210. The first apparatus 210 includes a transceiver module 2101 and a processing module 2102. The transceiver module 2101 may also be referred to as a transceiver unit, is configured to implement receiving and sending functions, and for example, may be a transceiver circuit, a transceiver machine, a transceiver, or a communication interface.

The processing module 2102 is configured to implement a processing function corresponding to the first apparatus in the foregoing method embodiments, and the transceiver module 2101 is configured to implement receiving and sending functions corresponding to the first apparatus in the foregoing method embodiments. Therefore, all related content of the steps in the foregoing method embodiments may be referenced to function descriptions of corresponding functional modules. Details are not described herein again.

In this embodiment of this application, the first apparatus 210 is presented in a form of functional modules obtained through division in an integrated manner. The "module" herein may be a specific ASIC, a circuit, a processor that executes one or more software or firmware programs and a memory, an integrated logic circuit, and/or another component capable of providing the foregoing functions. In a simple embodiment, a person skilled in the art may figure out that the first apparatus 210 may be in a form of the communication apparatus 120 shown in FIG. 12.

For example, the processor 1201 in the communication apparatus 120 shown in FIG. 12 may invoke computer-executable instructions, to cause the communication apparatus 120 to perform the communication methods in the foregoing method embodiments. Alternatively, the processor 1201 in the communication apparatus 120 shown in FIG. 12 may invoke the computer-executable instructions stored in the memory 1203, to cause the communication apparatus 120 to perform the communication methods in the foregoing method embodiments.

Specifically, functions/implementation processes of the transceiver module 2101 and the processing module 2102 in FIG. 21 may be implemented by the processor 1201 in the communication apparatus 120 shown in FIG. 12 by invoking the computer-executable instructions stored in the memory 1203. Alternatively, a function/an implementation process of the processing module 2102 in FIG. 21 may be implemented by the processor 1201 in the communication apparatus 120 shown in FIG. 12 by invoking the computer-executable instructions stored in the memory 1203, and a function/an implementation process of the transceiver module 2101 in FIG. 21 may be implemented by the communication interface 1204 in the communication apparatus 120 shown in FIG. 12.

Because the first apparatus 210 provided in this embodiment of this application may perform the foregoing methods, for technical effects that can be achieved by the first apparatus 210, refer to the foregoing method embodiments. Details are not described herein again.

It may be understood that the second apparatus is similar to the first apparatus. The second apparatus may include a transceiver module and a processing module. The processing module is configured to implement a processing function corresponding to the second apparatus in the foregoing method embodiments, and the transceiver module is configured to implement receiving and sending functions corresponding to the second apparatus in the foregoing method embodiments. Therefore, all related content of the steps in the foregoing method embodiments may be referenced to function descriptions of corresponding functional modules. Details are not described herein again. It should be understood that one or more of the modules or units may be implemented by software, hardware, or a combination thereof. When any one of the modules or units is implemented by software, the software exists in a form of computer program instructions, and is stored in a memory, and a processor may be configured to execute the program instructions and implement the foregoing method procedures. The processor may be built into a SoC (system on a chip) or an ASIC, or may be an independent semiconductor chip. In addition to a core configured to perform calculation or processing by executing software instructions, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete component, and the hardware may run necessary software or does not depend on software to perform the foregoing method procedures.

An embodiment of this application further provides a communication apparatus (for example, the communication apparatus may be a chip or a chip system). The communication apparatus includes a processor, configured to implement the method in any one of the foregoing method embodiments. In a possible design, the communication apparatus further includes a memory. The memory is configured to store necessary program instructions and necessary data. The processor may invoke program code stored in the memory, to instruct the communication apparatus to perform the method in any one of the foregoing method embodiments. Certainly, the communication apparatus may not include a memory. When the communication apparatus is a chip system, the communication apparatus may include a chip, or may include a chip and another discrete component. This is not specifically limited in this embodiment of this application.

In a possible implementation, an embodiment of this application further provides a computer-readable storage medium. The computer-readable storage medium stores a computer program or instructions. When the computer program or instructions are run on a communication apparatus, the communication apparatus is caused to perform the method in any one of the foregoing method embodiments or the implementations of the foregoing method embodiments.

In a possible implementation, an embodiment of this application further provides a computer program product including instructions. When the computer program product runs on a communication apparatus, the communication apparatus is caused to perform the method in any one of the foregoing aspects or the implementations of the foregoing aspects.

In a possible implementation, an embodiment of this application further provides a communication system. The communication system includes the first apparatus in the foregoing method embodiments and the second apparatus in the foregoing method embodiments.

In a possible implementation, an embodiment of this application further provides a communication method. The communication method includes the method in any one of the foregoing method embodiments or the implementations of the foregoing method embodiments.

All or some of the foregoing embodiments may be implemented by software, hardware, firmware, or any combination thereof. When a software program is for implementing embodiments, embodiments may be implemented completely or partially in a form of a computer program product. The computer program product includes one or more computer instructions. When the computer program instructions are loaded and executed on a computer, all or some of the procedures or functions according to embodiments of this application are generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Although this application is described with reference to embodiments, in a process of implementing this application that claims protection, a person skilled in the art may understand and implement another variation of disclosed embodiments by viewing the accompanying drawings, the disclosed content, and the accompanying claims. In the claims, "comprising" (comprising) does not exclude another component or another step, and "a" or "one" does not exclude a case of multiple. A single processor or another unit may implement several functions enumerated in the claims. Some measures are set forth in dependent claims that are different from each other, but this does not mean that these measures cannot be combined to produce a better effect.

Although this application is described with reference to specific features and embodiments thereof, it is clear that various modifications and combinations may be made to them without departing from the protection scope of this application. Correspondingly, the specification and accompanying drawings are merely example descriptions of this application defined by the appended claims, and are considered as covering any or all of modifications, variations, combinations or equivalents within the scope of this application. It is clear that a person skilled in the art can make various modifications and variations to this application without departing from the scope of this application. This application is intended to cover these modifications and variations of this application provided that they fall within the scope of the claims of this application and their equivalent technologies.

**Claims**

1.　A resource determining method, wherein the method comprises:

determining a first frequency and/or a second frequency; and
determining a correspondence between M frequency domain resources for frequency hopping and N time units based on the first frequency and/or the second frequency, wherein the N time units are for sending or receiving reference signals, the first frequency is a lowest frequency domain position of frequency domain resources occupied for sending or receiving the reference signals, and the second frequency is a highest frequency domain position of the frequency domain resources occupied for sending or receiving the reference signals, wherein M is an integer greater than 1, and N is an integer greater than 1.

2.　The method according to claim 1, wherein the first frequency is a sum of a reference frequency and a first frequency domain offset, and/or the second frequency is a sum of a reference frequency and a second frequency domain offset, wherein the reference frequency is one of the following: a start frequency of a BWP, a highest frequency of the BWP, a center frequency of the BWP, or a reference frequency corresponding to the BWP.

3.　The method according to claim 1 or 2, wherein a frequency domain resource corresponding to a $K^{th}$ time unit in the N time units is determined based on the first frequency, and the frequency domain resource corresponding to the $K^{th}$ time unit is a frequency domain resource whose frequency domain position is the lowest or highest in the M frequency domain resources.

4.　The method according to claim 3, wherein that the frequency domain resource corresponding to the $K^{th}$ time unit is determined based on the first frequency comprises: the frequency domain resource corresponding to the $K^{th}$ time unit is determined based on the third frequency, and a frequency domain resource corresponding to the third frequency is the frequency domain resource whose frequency domain position is the highest in the M frequency domain resources, wherein

the third frequency is determined based on the first frequency and a total bandwidth occupied by the M frequency domain resources.

5. The method according to claim 1 or 2, wherein a frequency domain resource corresponding to a $K^{th}$ time unit in the N time units is determined based on the second frequency, and the frequency domain resource corresponding to the $K^{th}$ time unit is a frequency domain resource whose frequency domain position is the lowest or highest in the M frequency domain resources.

6. The method according to claim 5, wherein that the frequency domain resource corresponding to the $K^{th}$ time unit is determined based on the second frequency comprises: the frequency domain resource corresponding to the $K^{th}$ time unit is determined based on the fourth frequency, and a frequency domain resource corresponding to the fourth frequency is the frequency domain resource whose frequency domain position is the lowest in the M frequency domain resources, wherein
the fourth frequency is determined based on the second frequency and a total bandwidth occupied by the M frequency domain resources.

7. The method according to any one of claims 1 to 6, wherein the method further comprises:
receiving frequency hopping configuration information, wherein the frequency hopping configuration information indicates at least one of the following: the first frequency, the second frequency, or a combined bandwidth.

8. The method according to claim 7, wherein the frequency hopping configuration information further indicates at least one of the following: position information of a frequency domain resource corresponding to a $1^{st}$ time unit in the N time units, time domain position information corresponding to the $1^{st}$ time unit in the N time units, a bandwidth of a frequency domain resource corresponding to an $i^{th}$ time unit, an overlapped size between the frequency domain resource corresponding to the $i^{th}$ time unit and a frequency domain resource corresponding to a $j^{th}$ time unit, a quantity of frequency hopping times, a corresponding frequency domain offset between two adjacent time units in the N time units, or a time interval between the $i^{th}$ time unit and the $j^{th}$ time unit, wherein the $i^{th}$ time unit and the $j^{th}$ time unit are time units in the N time units, and $1 \leq i \neq j \leq N$.

9. The method according to any one of claims 1 to 8, wherein the method further comprises:

sending expected configuration information, wherein the expected configuration information indicates at least one of the following: the lowest frequency domain position of the frequency domain resources occupied for sending or receiving the reference signals, the highest frequency domain position of the frequency domain resources occupied for sending or receiving the reference signals, the combined bandwidth, or a frequency domain position relationship between a reference frequency domain position and the frequency domain resource whose frequency domain position is the lowest or the frequency domain resource whose frequency domain position is the highest in the M frequency domain resources, wherein
the reference frequency domain position comprises at least one of the following: the first frequency, the third frequency, the second frequency, or the fourth frequency, wherein the frequency domain resource corresponding to the third frequency is the frequency domain resource whose frequency domain position is the highest in the M frequency domain resources, and the frequency domain resource corresponding to the fourth frequency is the frequency domain resource whose frequency domain position is the lowest in the M frequency domain resources.

10. The method according to any one of claims 1 to 9, wherein the method further comprises:

receiving first request information, wherein the first request information is for requesting the expected configuration information, and the expected configuration information indicates the at least one of the following: the lowest frequency domain position of the frequency domain resources occupied for sending or receiving the reference signals, the highest frequency domain position of the frequency domain resources occupied for sending or receiving the reference signals, the combined bandwidth, or the frequency domain position relationship between the reference frequency domain position and the frequency domain resource whose frequency domain position is the lowest or the frequency domain resource whose frequency domain position is the highest in the M frequency domain resources, wherein
the reference frequency domain position comprises the at least one of the following: the first frequency, the third frequency, the second frequency, or the fourth frequency, wherein the frequency domain resource corresponding to the third frequency is the frequency domain resource whose frequency domain position is the highest in the M frequency domain resources, and the frequency domain resource corresponding to the fourth frequency is the

EP 4 746 552 A1

frequency domain resource whose frequency domain position is the lowest in the M frequency domain resources.

11. The method according to any one of claims 1 to 10, wherein the method further comprises:

sending second request information, wherein the second request information is for requesting configuration information, and the configuration information indicates at least one of the following: the lowest frequency domain position of the frequency domain resources occupied for sending or receiving the reference signals, the highest frequency domain position of the frequency domain resources occupied for sending or receiving the reference signals, the combined bandwidth, or the frequency domain position relationship between the reference frequency domain position and the frequency domain resource whose frequency domain position is the lowest or the frequency domain resource whose frequency domain position is the highest in the M frequency domain resources, wherein

the reference frequency domain position comprises the at least one of the following: the first frequency, the third frequency, the second frequency, or the fourth frequency, wherein the frequency domain resource corresponding to the third frequency is the frequency domain resource whose frequency domain position is the highest in the M frequency domain resources, and the frequency domain resource corresponding to the fourth frequency is the frequency domain resource whose frequency domain position is the lowest in the M frequency domain resources.

12. The method according to claim 11, wherein the second request information comprises the expected configuration information.

13. The method according to any one of claims 1 to 12, wherein the reference signal is for positioning.

14. A resource determining method, wherein the method comprises:

generating frequency hopping configuration information, wherein the frequency hopping configuration information is for determining an association relationship between a plurality of frequency domain resources and a plurality of time domain resources, the plurality of frequency domain resources are for frequency hopping, and the plurality of time domain resources are for sending or receiving reference signals, wherein the frequency hopping configuration information comprises information indicating at least one of the following: a first frequency, a second frequency, or a combined bandwidth, the first frequency is a lowest frequency domain position of frequency domain resources occupied for sending or receiving the reference signals, the second frequency is a highest frequency domain position of the frequency domain resources occupied for sending or receiving the reference signals, and the combined bandwidth is a total bandwidth occupied by the plurality of frequency domain resources; and
sending the frequency hopping configuration information.

15. The method according to claim 14, wherein the first frequency is a sum of a reference frequency and a first frequency domain offset, and/or the second frequency is a sum of a reference frequency and a second frequency domain offset, wherein the reference frequency is at least one of the following: a start frequency of a BWP, a highest frequency of the BWP, or a reference frequency corresponding to the BWP.

16. The method according to claim 14 or 15, wherein the reference signal is for positioning.

17. The method according to any one of claims 14 to 16, wherein the plurality of time domain resources comprise N time units, and the frequency hopping configuration information further indicates at least one of the following: position information of a frequency domain resource corresponding to a $1^{st}$ time unit in the N time units, time domain position information corresponding to the $1^{st}$ time unit in the N time units, a bandwidth of a frequency domain resource corresponding to an $i^{th}$ time unit, an overlapped size between the frequency domain resource corresponding to the $i^{th}$ time unit and a frequency domain resource corresponding to a $j^{th}$ time unit, a quantity of frequency hopping times, a corresponding frequency domain offset between two adjacent time units in the N time units, or a time interval between the $i^{th}$ time unit and the $j^{th}$ time unit, wherein the $i^{th}$ time unit and the $j^{th}$ time unit are time units in the N time units, and $1 \leq i \neq j \leq N$.

18. The method according to any one of claims 14 to 17, wherein the method further comprises:

receiving expected configuration information, wherein the expected configuration information indicates at least one of the following: the lowest frequency domain position of the frequency domain resources occupied for

73

sending or receiving the reference signals, the highest frequency domain position of the frequency domain resources occupied for sending or receiving the reference signals, the combined bandwidth, or a frequency domain position relationship between a reference frequency domain position and a frequency domain resource whose frequency domain position is the lowest or highest in the plurality of frequency domain resources, wherein the reference frequency domain position comprises at least one of the following: the first frequency, a third frequency, the second frequency, or a fourth frequency, wherein a frequency domain resource corresponding to the third frequency is the frequency domain resource whose frequency domain position is the highest in the plurality of frequency domain resources, and a frequency domain resource corresponding to the fourth frequency is the frequency domain resource whose frequency domain position is the lowest in the plurality of frequency domain resources.

19. The method according to any one of claims 14 to 18, wherein the method further comprises:

sending first request information, wherein the first request information is for requesting the expected configuration information, and the expected configuration information indicates the at least one of the following: the lowest frequency domain position of the frequency domain resources occupied for sending or receiving the reference signals, the highest frequency domain position of the frequency domain resources occupied for sending or receiving the reference signals, the combined bandwidth, or the frequency domain position relationship between the reference frequency domain position and the frequency domain resource whose frequency domain position is the lowest or the frequency domain resource whose frequency domain position is the highest in the plurality of frequency domain resources, wherein
the reference frequency domain position comprises the at least one of the following: the first frequency, the third frequency, the second frequency, or the fourth frequency, wherein the frequency domain resource corresponding to the third frequency is the frequency domain resource whose frequency domain position is the highest in the plurality of frequency domain resources, and the frequency domain resource corresponding to the fourth frequency is the frequency domain resource whose frequency domain position is the lowest in the plurality of frequency domain resources.

20. The method according to any one of claims 14 to 19, wherein the method further comprises:

receiving second request information, wherein the second request information is for requesting configuration information, and the configuration information indicates at least one of the following: the lowest frequency domain position of the frequency domain resources occupied for sending or receiving the reference signals, the highest frequency domain position of the frequency domain resources occupied for sending or receiving the reference signals, the combined bandwidth, or the frequency domain position relationship between the reference frequency domain position and the frequency domain resource whose frequency domain position is the lowest or the frequency domain resource whose frequency domain position is the highest in the plurality of frequency domain resources, wherein
the reference frequency domain position comprises the at least one of the following: the first frequency, the third frequency, the second frequency, or the fourth frequency, wherein the frequency domain resource corresponding to the third frequency is the frequency domain resource whose frequency domain position is the highest in the plurality of frequency domain resources, and the frequency domain resource corresponding to the fourth frequency is the frequency domain resource whose frequency domain position is the lowest in the plurality of frequency domain resources.

21. The method according to claim 20, wherein the second request information comprises the expected configuration information.

22. A resource determining method, wherein the method comprises:

receiving frequency hopping configuration information, wherein the frequency hopping configuration information indicates that an $i^{th}$ time unit in N time units is associated with a $j^{th}$ frequency domain resource in M frequency domain resources, the M frequency domain resources are for frequency hopping, and the N time units are for sending or receiving reference signals, wherein M is an integer greater than 1, N is an integer greater than 1, $1 \leq i \leq N$, and $1 \leq j \leq M$; and
determining a correspondence between the N time units and the M frequency domain resources based on the frequency hopping configuration information.

23. A resource determining method, wherein the method comprises:

    generating frequency hopping configuration information, wherein the frequency hopping configuration information indicates that an $i^{th}$ time unit in N time units is associated with a $j^{th}$ frequency domain resource in M frequency domain resources, the M frequency domain resources are for frequency hopping, and the N time units are for sending or receiving reference signals, wherein M is an integer greater than 1, N is an integer greater than 1, $1 \le i \le N$, and $1 \le j \le M$; and
    sending the frequency hopping configuration information.

24. The method according to claim 22 or 23, wherein the frequency hopping configuration information comprises time domain sequence information, and the time domain sequence information indicates that the $i^{th}$ time unit is associated with the $j^{th}$ frequency domain resource.

25. The method according to claim 24, wherein the frequency hopping configuration information further comprises frequency domain index information, and the frequency domain index information comprises index information of the $j^{th}$ frequency domain resource.

26. The method according to any one of claims 22 to 25, wherein the M frequency domain resources are determined based on a first frequency hopping parameter set; and
    the first frequency hopping parameter set comprises at least one of the following: position information of a frequency domain resource corresponding to a $1^{st}$ time unit in the N time units, time domain position information corresponding to the $1^{st}$ time unit in the N time units, a bandwidth of a frequency domain resource corresponding to the $i^{th}$ time unit, an overlapped size between the frequency domain resource corresponding to the $i^{th}$ time unit and a frequency domain resource corresponding to an $L^{th}$ time unit in the N time units, a quantity of frequency hopping times, a corresponding frequency domain offset between two adjacent time units in the N time units, or a time interval between the $i^{th}$ time unit and the $L^{th}$ time unit, wherein $1 \le i \ne L \le N$.

27. The method according to any one of claims 22 to 26, wherein the frequency hopping configuration information further indicates the first frequency hopping parameter set.

28. A communication apparatus, wherein the communication apparatus comprises a module or unit configured to perform the resource determining method according to any one of claims 1 to 13, a module or unit configured to perform the resource determining method according to any one of claims 14 to 21, a module or unit configured to perform the resource determining method according to any one of claims 22 and 24 to 27, or a module or unit configured to perform the resource determining method according to any one of claims 23 to 27.

29. A communication apparatus, wherein the communication apparatus comprises a processor, and the processor is configured to cause, by using a logic circuit and/or executing instructions, the communication apparatus to perform the resource determining method according to any one of claims 1 to 13, the resource determining method according to any one of claims 14 to 21, the resource determining method according to any one of claims 22 and 24 to 27, or the resource determining method according to any one of claims 23 to 27.

30. A computer-readable storage medium, wherein the computer-readable storage medium comprises instructions; and when the instructions are run by a processor, the resource determining method according to any one of claims 1 to 13, the resource determining method according to any one of claims 14 to 21, the resource determining method according to any one of claims 22 and 24 to 27, or the resource determining method according to any one of claims 23 to 27 is implemented.

31. A computer program product, wherein the computer program product comprises instructions; and when the instructions are run on a computer, the computer is caused to perform the resource determining method according to any one of claims 1 to 13, the resource determining method according to any one of claims 14 to 21, the resource determining method according to any one of claims 22 and 24 to 27, or the resource determining method according to any one of claims 23 to 27.

32. A communication system, comprising a first apparatus and a second apparatus, wherein the first apparatus is configured to perform the resource determining method according to any one of claims 1 to 13, and the second apparatus is configured to perform the resource determining method according to any one of claims 14 to 21; or the first apparatus is configured to perform the resource determining method according to any one of claims 22 and 24 to 27, and the second apparatus is configured to perform the resource determining method according to any one of claims 23 to 27.

EP 4 746 552 A1

FIG. 1

FIG. 2

77

FIG. 3

FIG. 4

FIG. 5

FIG. 6

FIG. 7

FIG. 8

FIG. 9

FIG. 10

FIG. 11

1201    1207    120    1203

Processor
CPU 0    CPU 0
CPU 1    CPU 1

1202

Memory

1204    1205    1206

Communication interface    Output device    Input device

FIG. 12

S1301: A first apparatus determines a first frequency and/or a second frequency

S1302: The first apparatus determines a correspondence between M frequency domain resources for frequency hopping and N time units based on the first frequency and/or the second frequency, where the N time units are for sending or receiving reference signals, the first frequency is a lowest frequency domain position of frequency domain resources occupied by the first apparatus to send or receive the reference signals, and the second frequency is a highest frequency domain position of the frequency domain resources occupied by the first apparatus to send or receive the reference signals

FIG. 13

FIG. 14

FIG. 15

FIG. 16

FIG. 17

| Second apparatus | | First apparatus |

S1801: Generate frequency hopping configuration information

S1802: Frequency hopping configuration information

S1803: Determine a first frequency and/or a second frequency based on the frequency hopping configuration information

S1804: Determine a correspondence between M frequency domain resources for frequency hopping and N time units based on the first frequency and/or the second frequency

S1805: Expected configuration information

S1806: First request information

S1807: Second request information

**FIG. 18**

| Second apparatus | | First apparatus |

S1901: Generate frequency hopping configuration information

S1902: Frequency hopping configuration information

S1903: Determine a correspondence between N time units and M frequency domain resources based on the frequency hopping configuration information

**FIG. 19**

Sequence of
frequency domain
positions

Overlapped frequency
domain resource

(a)

(b)

Time
domain

(c)

Time
domain

FIG. 20

First apparatus

210

Transceiver module

2101

Processing module

2102

FIG. 21

## INTERNATIONAL SEARCH REPORT

| | International application No. |
|---|---|
| | **PCT/CN2024/108299** |

**A. CLASSIFICATION OF SUBJECT MATTER**

H04W 72/0446(2023.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, ENTXTC, VEN, CNKI, 3GPP: 参考信号, 频带, 频点, 频率, 频域, 起始, 时间, 时隙, 时域, 索引, 跳频, 位置, 最大, 最低, 最高, 最小, reference signal, frequency, hop, time, slot, symbol, BWP, RB, RS, index, location, first, last, lowest, highest

**C. DOCUMENTS CONSIDERED TO BE RELEVANT**

| Category* | Citation of document, with indication, where appropriate, of the relevant passages | Relevant to claim No. |
|---|---|---|
| X | CN 115189851 A (SPREADTRUM COMMUNICATIONS (SHANGHAI) CO., LTD.) 14 October 2022 (2022-10-14) <br> description, paragraphs [0002]-[0253] | 1-32 |
| X | CN 113067689 A (GUANGDONG OPPO MOBILE TELECOMMUNICATIONS CORP., LTD.) 02 July 2021 (2021-07-02) <br> description, paragraphs [0006]-[0256] | 1-32 |
| X | CN 108632008 A (HUAWEI TECHNOLOGIES CO., LTD.) 09 October 2018 (2018-10-09) <br> description, paragraphs [0002]-[0178] | 1-32 |
| X | CN 116436493 A (VIVO COMMUNICATION TECHNOLOGY CO., LTD.) 14 July 2023 (2023-07-14) <br> description, paragraphs [0002]-[0249] | 1-32 |
| A | US 2020305146 A1 (NTT DOCOMO, INC.) 24 September 2020 (2020-09-24) <br> entire document | 1-32 |

☐ Further documents are listed in the continuation of Box C.    ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **10 October 2024** | **19 October 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/108299**

| Patent document cited in search report | | | Publication date (day/month/year) | Patent family member(s) | | | Publication date (day/month/year) |
|---|---|---|---|---|---|---|---|
| CN | 115189851 | A | 14 October 2022 | None | | | |
| CN | 113067689 | A | 02 July 2021 | None | | | |
| CN | 108632008 | A | 09 October 2018 | EP | 3565349 | A1 | 06 November 2019 |
| | | | | EP | 3565349 | A4 | 15 January 2020 |
| | | | | EP | 3565349 | B1 | 26 May 2021 |
| | | | | US | 2020014515 | A1 | 09 January 2020 |
| | | | | US | 11239969 | B2 | 01 February 2022 |
| CN | 116436493 | A | 14 July 2023 | None | | | |
| US | 2020305146 | A1 | 24 September 2020 | EP | 3713171 | A1 | 23 September 2020 |
| | | | | EP | 3713171 | A4 | 23 June 2021 |
| | | | | JP | 7121038 | B2 | 17 August 2022 |
| | | | | US | 11991700 | B2 | 21 May 2024 |
| | | | | WO | 2019097654 | A1 | 23 May 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310984678